(19) **Europäisches Patentamt / European Patent Office / Office européen des brevets**

(11) **EP 4 604 061 A1**

(12) **EUROPEAN PATENT APPLICATION**
published in accordance with Art. 153(4) EPC

(43) Date of publication:
**20.08.2025 Bulletin 2025/34**

(21) Application number: **23877127.3**

(22) Date of filing: **25.09.2023**

(51) International Patent Classification (IPC):
**G06T 7/55** (2017.01)     **G06T 17/10** (2006.01)

(52) Cooperative Patent Classification (CPC):
**G06T 7/55; G06T 17/10**

(86) International application number:
**PCT/JP2023/034723**

(87) International publication number:
**WO 2024/080121 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2022 JP 2022165128**

(71) Applicant: **Sony Group Corporation**
**Tokyo 108-0075 (JP)**

(72) Inventor: **UYAMA Keisuke**
**Tokyo 108-0075 (JP)**

(74) Representative: **D Young & Co LLP**
**3 Noble Street**
**London EC2V 7BQ (GB)**

(54) **INFORMATION PROCESSING DEVICE AND METHOD**

(57) The present disclosure relates to an information processing device and a method capable of performing 3D modeling more easily.

On the basis of a first captured image generated by first imaging of a 3D object, first three-dimensional shape information is generated. Using the first three-dimensional shape information, an accuracy of second three-dimensional shape information that can be generated using second captured images generated from second imaging performed thus far is evaluated, and a scoring result is generated. On the basis of the scoring result, the second imaging is controlled, or guidance information for the second imaging is generated and controlled to be output. The present disclosure can be applied in, for example, an information processing device, an imaging device, an imaging communication device, an electronic device, an information processing method, a program, an information processing system, or the like.

Fig. 4

EP 4 604 061 A1

## Description

[Technical Field]

The present disclosure relates to an information processing device and a method, and particularly relates to an information processing device and a method that enable 3D modeling to be performed more easily.

[Background Art]

Conventionally, as a method of 3D modeling a 3D object having a three-dimensional shape, there is a method called photogrammetry, in which images of a 3D object are captured from a plurality of directions and 3D data is generated on the basis of the obtained plurality of captured images (see PTL 1, for example). There is also a method called real-time 3D modeling, in which 3D data is generated instantaneously (in real time) on the basis of information such as captured images, attitude information, depth, and the like. Furthermore, in recent years, a method generally referred to as neural rendering has been proposed in which neural fields are configured on the basis of a shot image and the attitude of the shot image, and an image seen from a desired viewpoint, a three-dimensional model, or the like is generated (e.g., Neural Radiance Fields (NeRF)).

[Citation List]

[Patent Literature]

[PTL 1]
JP 2018-63693A

[Summary]

[Technical Problem]

When, as in the stated methods, 3D modeling is performed on the basis of captured images of a 3D object, it is desirable to generate the 3D data as accurately as possible with the lowest number of captured images as possible, to reduce the workload, the amount of processing, and the like. To that end, it is desirable to image the 3D object at a more appropriate position and attitude. However, it has been difficult for photographers to ascertain the position and attitude at which it is appropriate to perform imaging.

Having been conceived in light of such circumstances, the present disclosure enables 3D modeling to be performed more easily.

[Solution to Problem]

An information processing device according to one aspect of the present technique is an information processing device including: a first 3D modeling processing unit that, on the basis of a first captured image generated by first imaging of a 3D object, generates first three-dimensional shape information expressing a three-dimensional shape of the 3D object; a scoring processing unit that, using the first three-dimensional shape information, evaluates an accuracy of second three-dimensional shape information that can be generated using second captured images generated from second imaging performed thus far, and generates a scoring result; and a guidance information output control unit that, on the basis of the scoring result, generates guidance information for the second imaging of the 3D object, and controls output of the guidance information.

An information processing method according to one aspect of the present technique is an information processing method including: generating, on the basis of a first captured image generated by first imaging of a 3D object, first three-dimensional shape information expressing a three-dimensional shape of the 3D object; evaluating, using the first three-dimensional shape information, an accuracy of second three-dimensional shape information that can be generated using second captured images generated from second imaging performed thus far, and generating a scoring result; and generating, on the basis of the scoring result, guidance information for the second imaging of the 3D object, and controlling output of the guidance information.

In the information processing device and method according to one aspect of the present technique, on the basis of the first captured image generated by the first imaging of the 3D object, the first three-dimensional shape information expressing the three-dimensional shape of the 3D object is generated; using the first three-dimensional shape information, the accuracy of the second three-dimensional shape information that can be generated using the second captured images generated from the second imaging performed thus far is evaluated, and the scoring result is generated; and on the basis of the scoring result, the guidance information for the second imaging of the 3D object is generated, and the output of the guidance information is controlled.

[Brief Description of Drawings]

[Fig. 1]

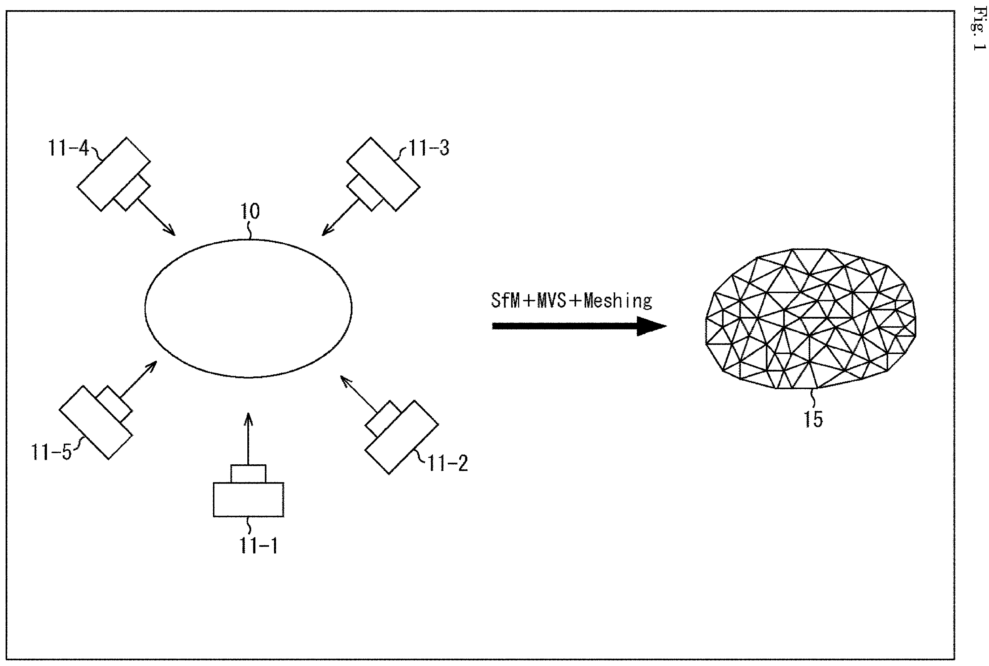

Fig. 1 is a diagram illustrating an overview of photogrammetry.
[Fig. 2]

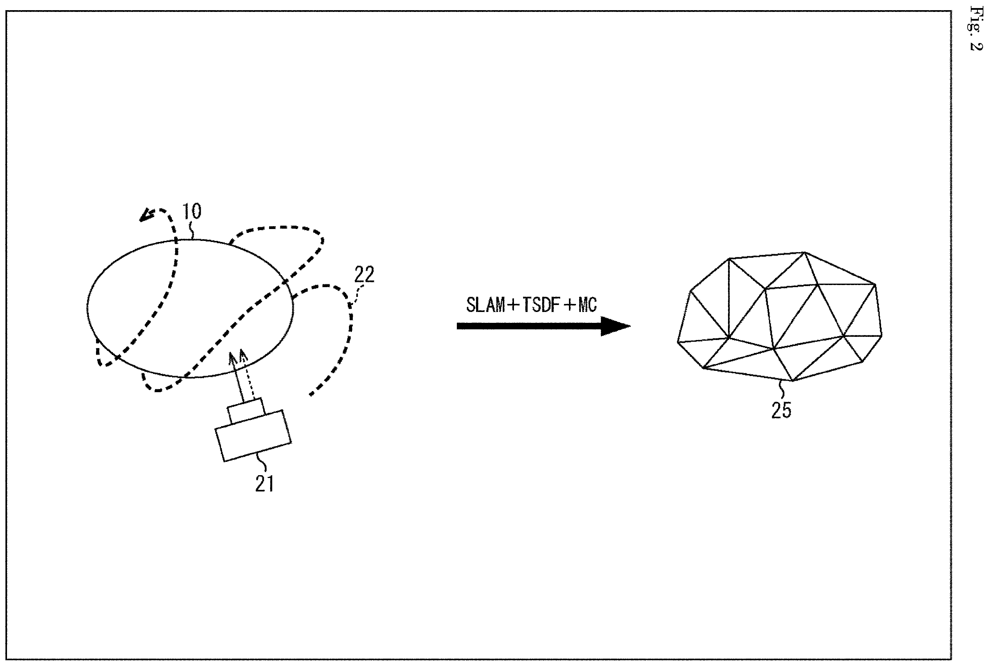

Fig. 2 is a diagram illustrating an overview of real-time 3D modeling.
[Fig. 3]

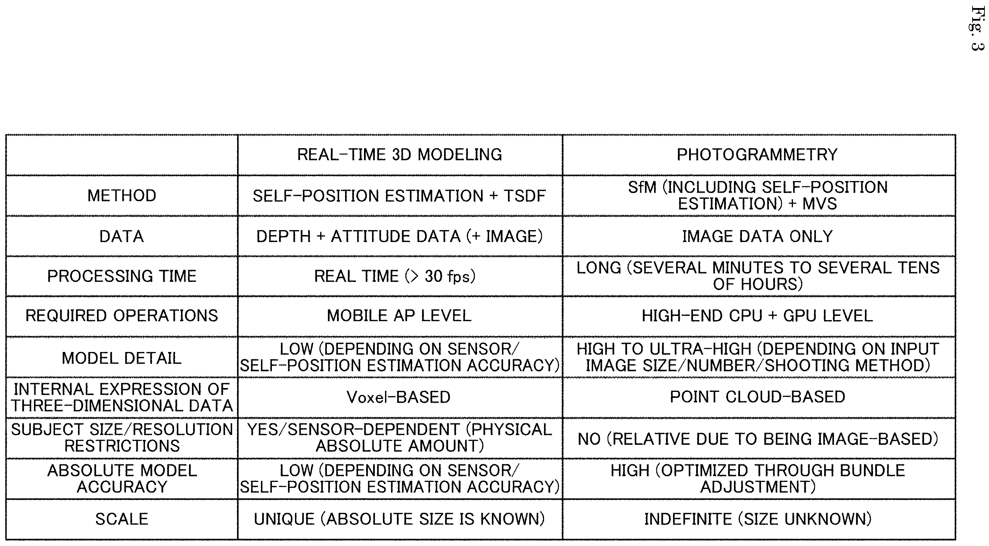

Fig. 3 is a diagram illustrating a comparison of photogrammetry and real-time 3D modeling.
[Fig. 4]

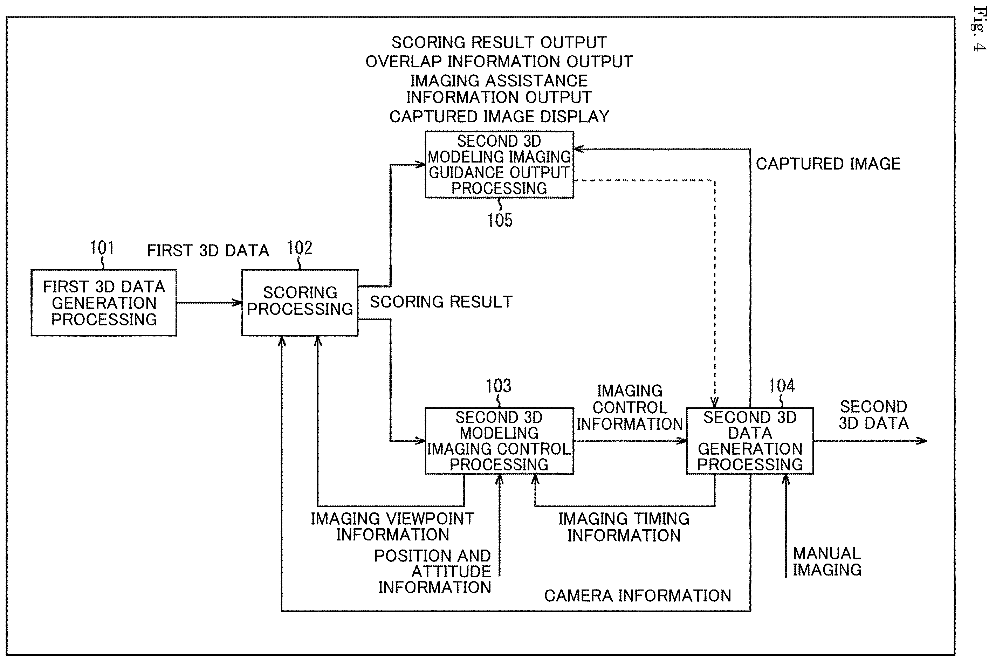

Fig. 4 is a diagram illustrating an example of a method of assisting in imaging for 3D modeling.

[Fig. 5]

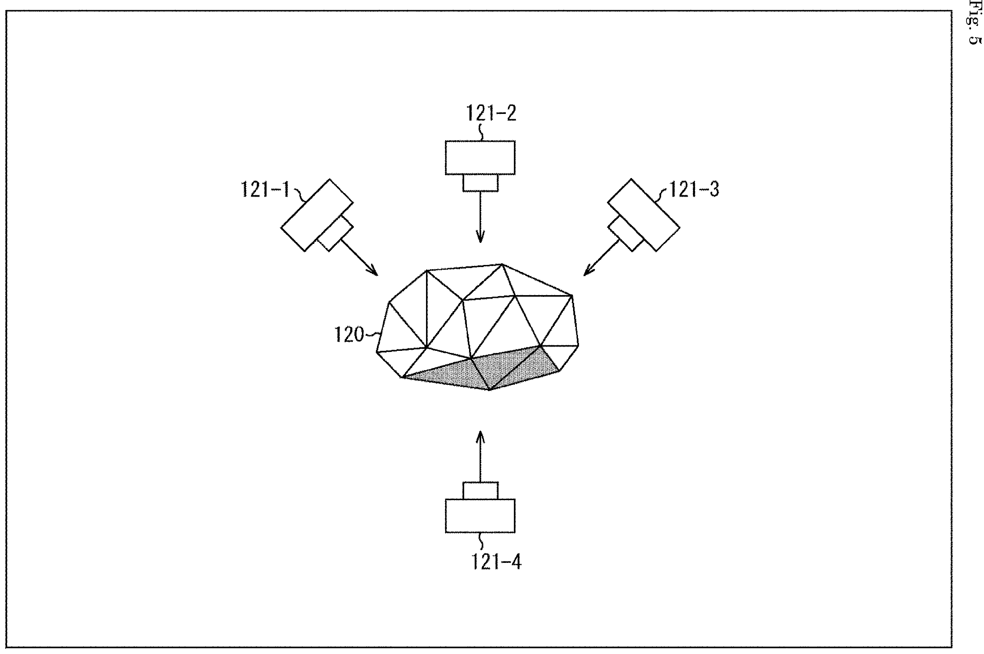

Fig. 5 is a diagram illustrating an example of imaging control and imaging guidance.
[Fig. 6]

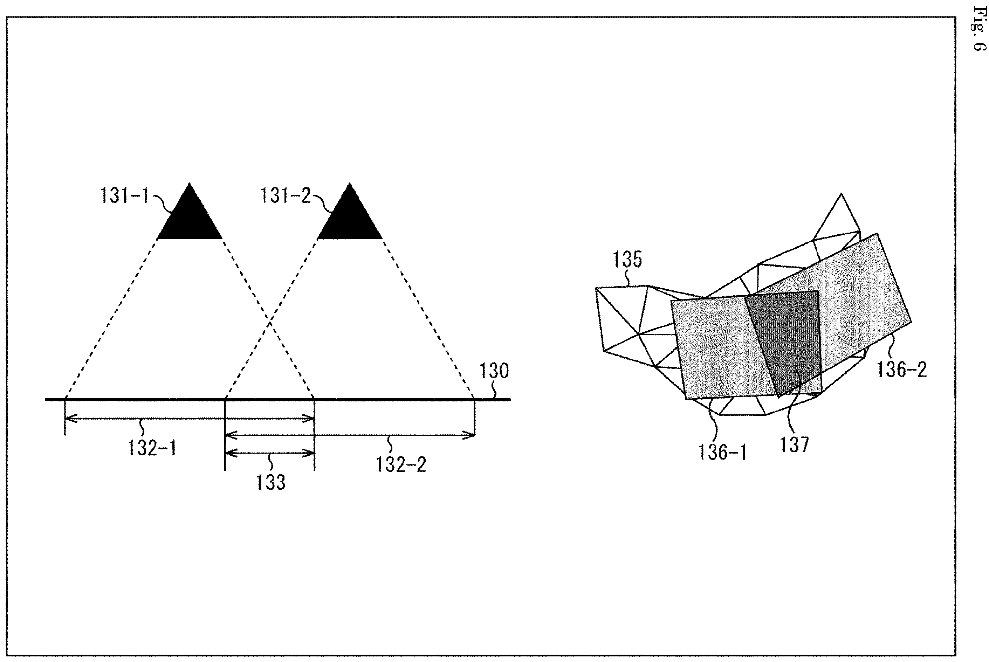

Fig. 6 is a diagram illustrating an example of overlap.
[Fig. 7]

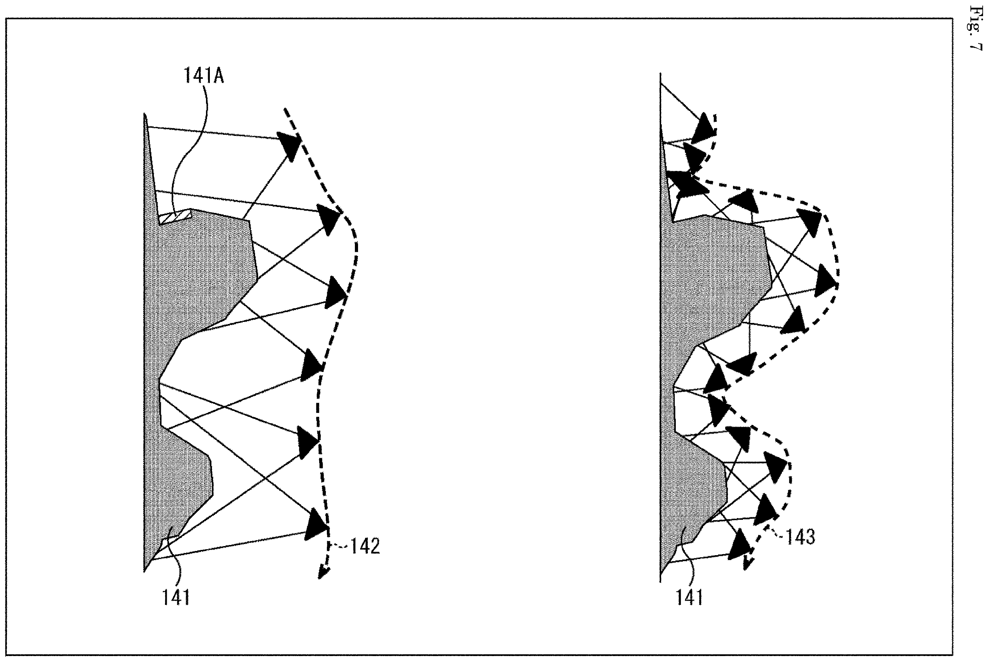

Fig. 7 is a diagram illustrating an example of imaging according to a distance from a subject.
[Fig. 8]

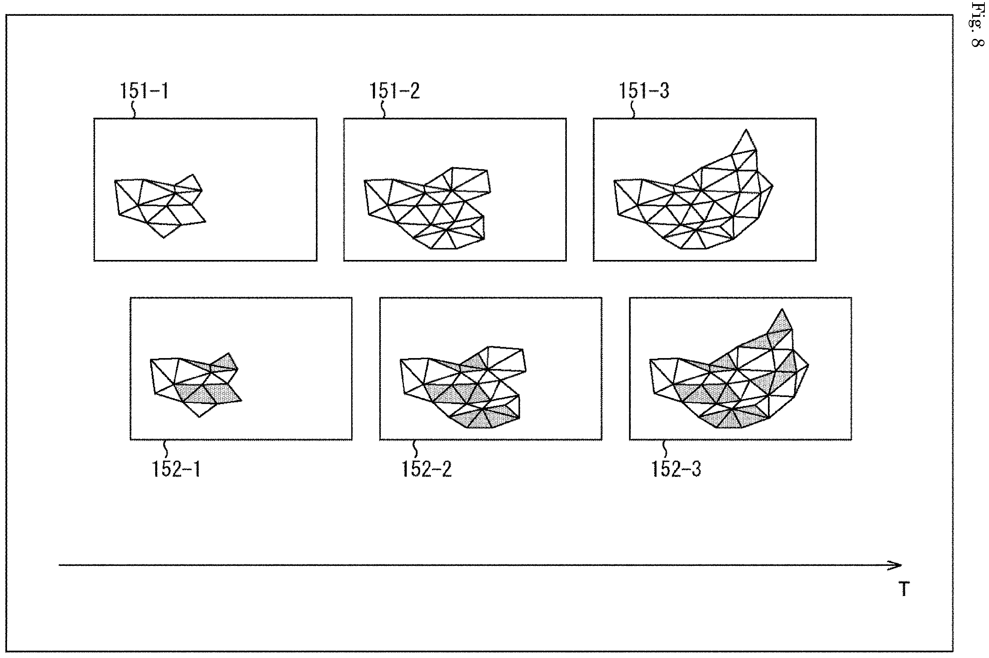

Fig. 8 is a diagram illustrating an example of parallel processing.
[Fig. 9]

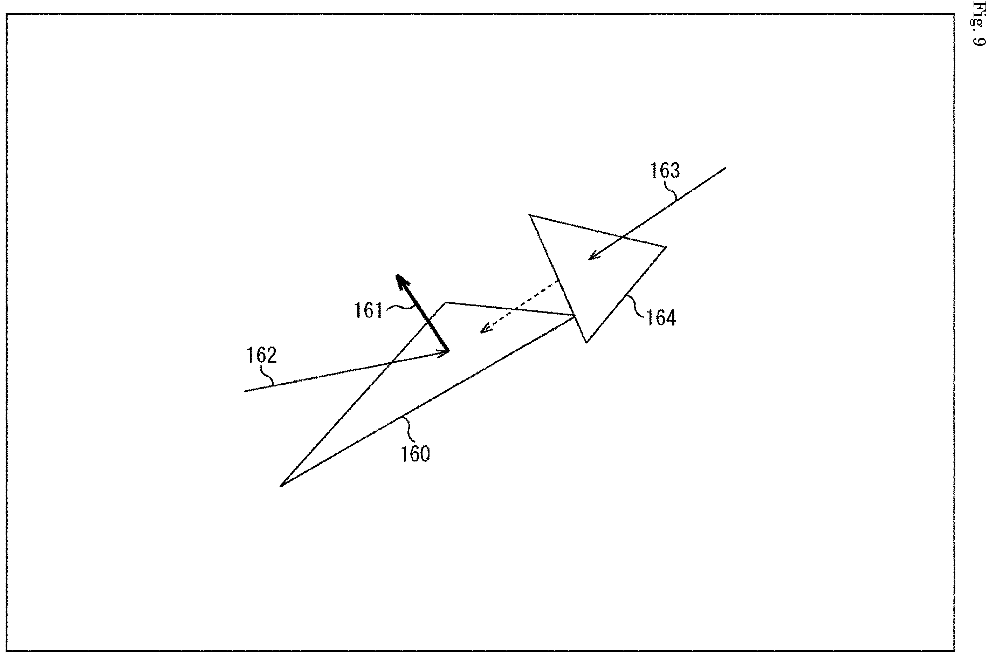

Fig. 9 is a diagram illustrating an example of scoring processing.
[Fig. 10]

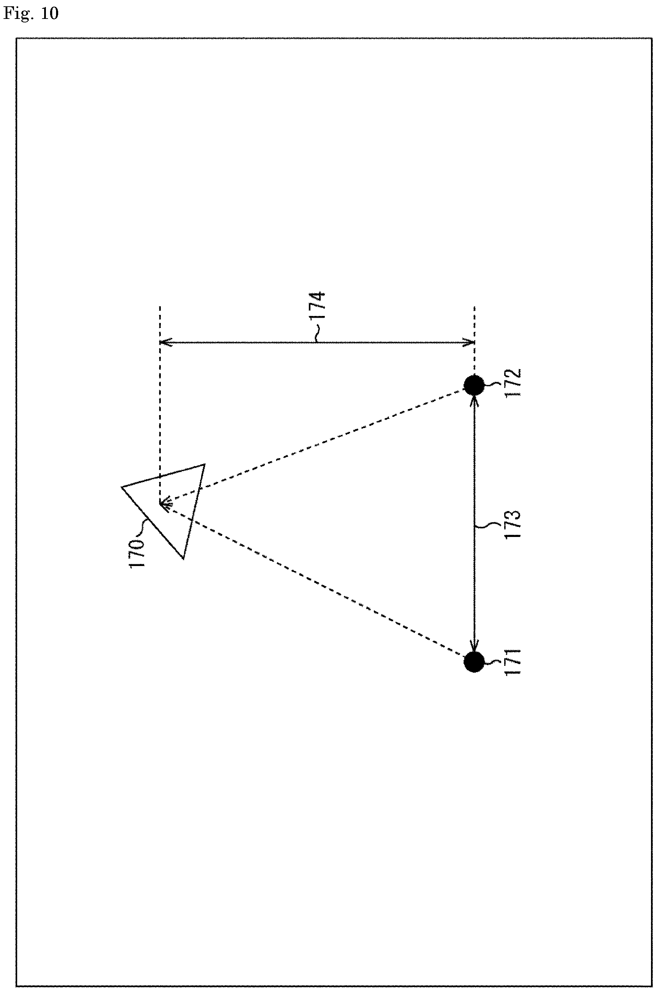

Fig. 10 is a diagram illustrating an example of scoring processing.
[Fig. 11]

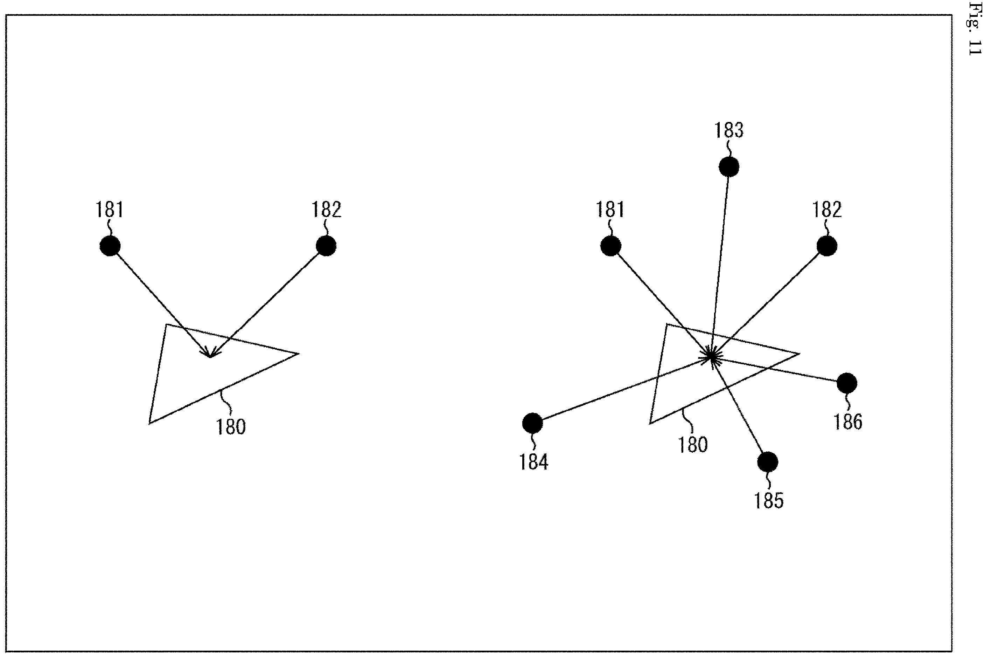

Fig. 11 is a diagram illustrating an example of scoring processing.
[Fig. 12]

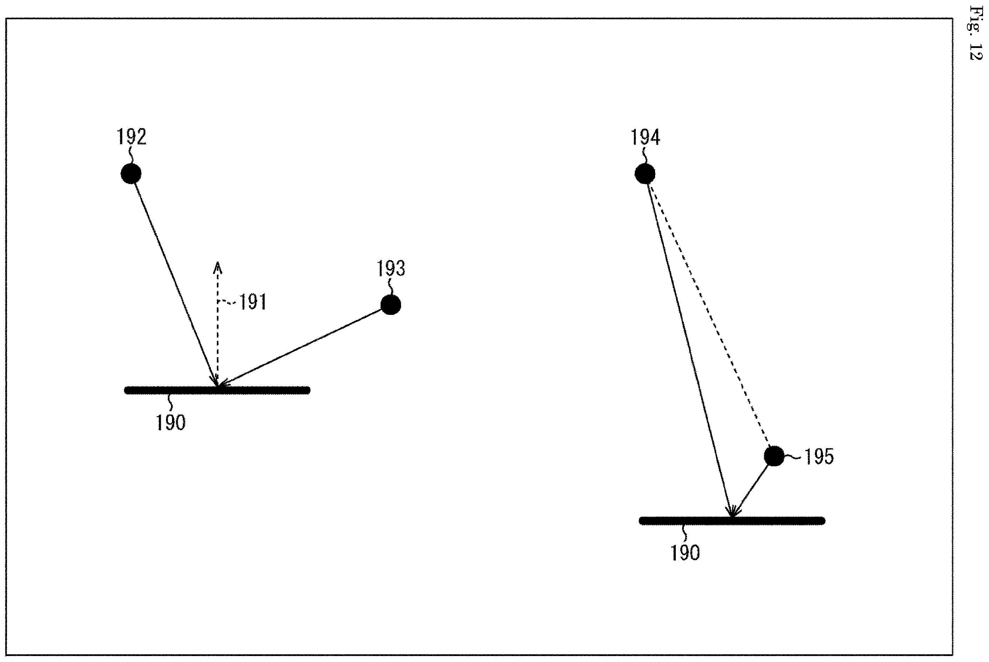

Fig. 12 is a diagram illustrating an example of scoring processing.
[Fig. 13]

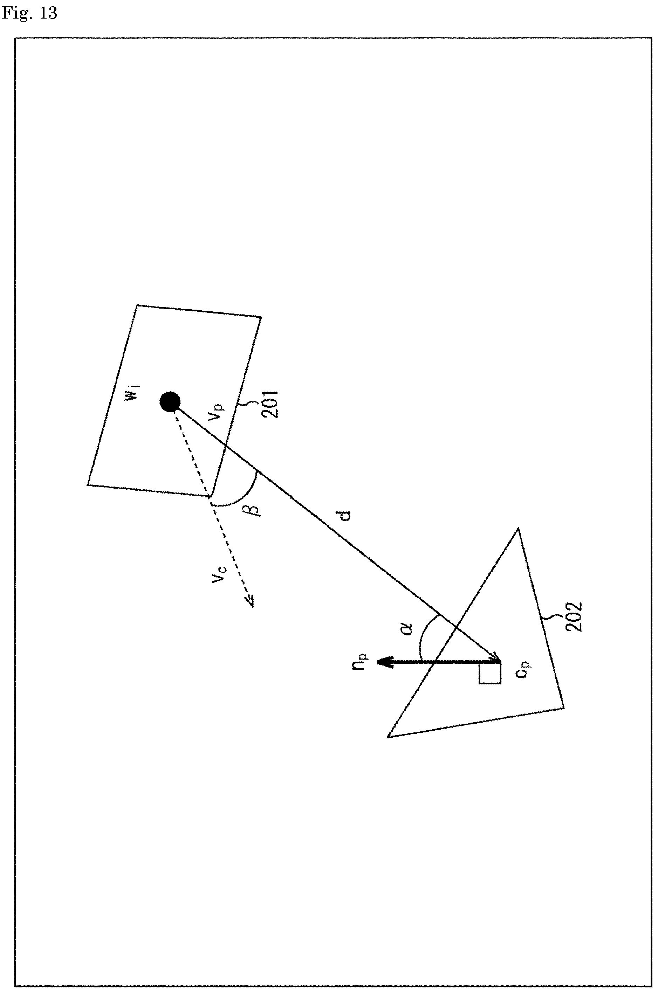

Fig. 13 is a diagram illustrating an example of scoring processing.
[Fig. 14]

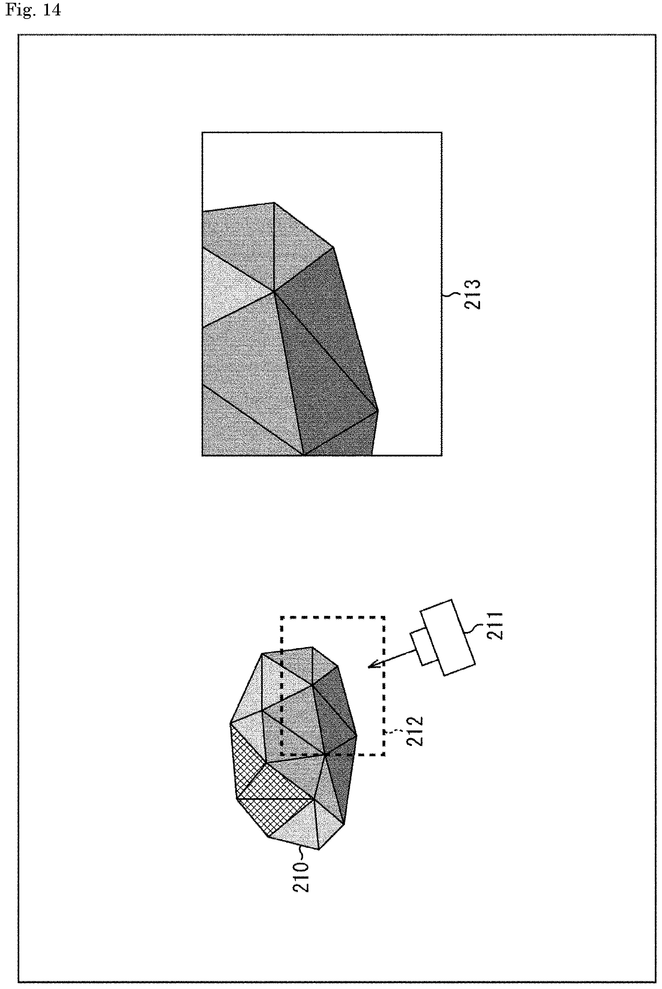

Fig. 14 is a diagram illustrating an example of the output of a scoring result.
[Fig. 15]

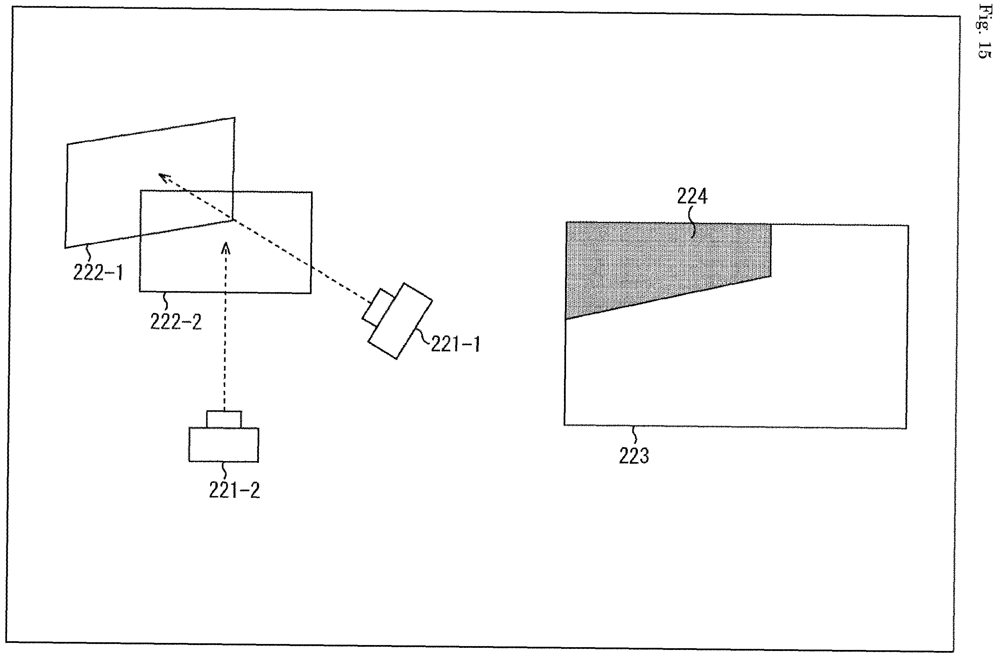

Fig. 15 is a diagram illustrating an example of the output of overlap information.
[Fig. 16]

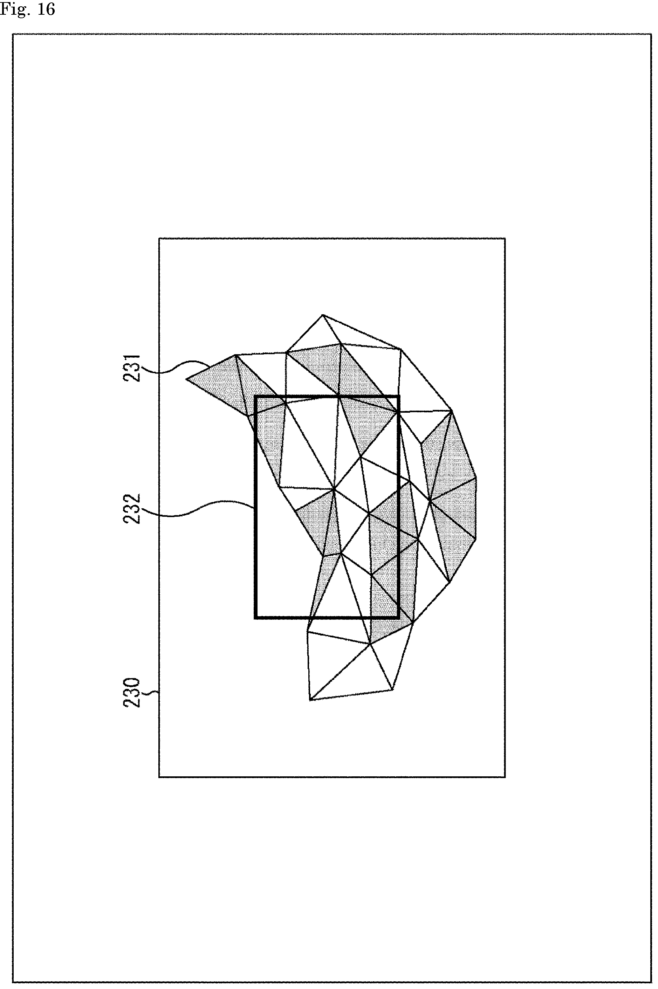

Fig. 16 is a diagram illustrating an example of the display of guidance information.
[Fig. 17]

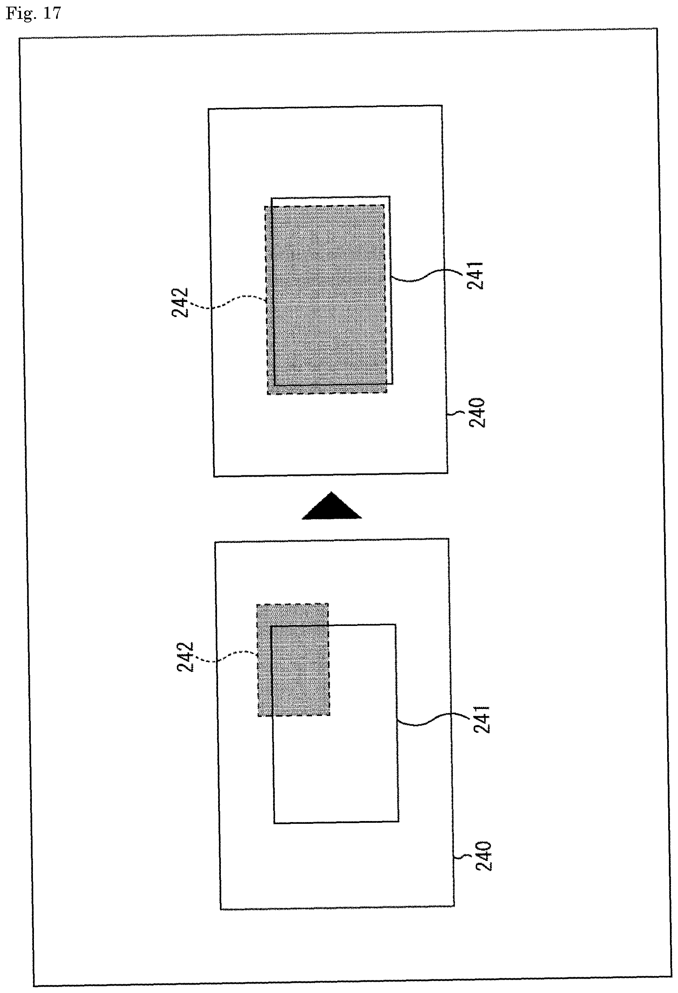

Fig. 17 is a diagram illustrating an example of the display of guidance information.
[Fig. 18]

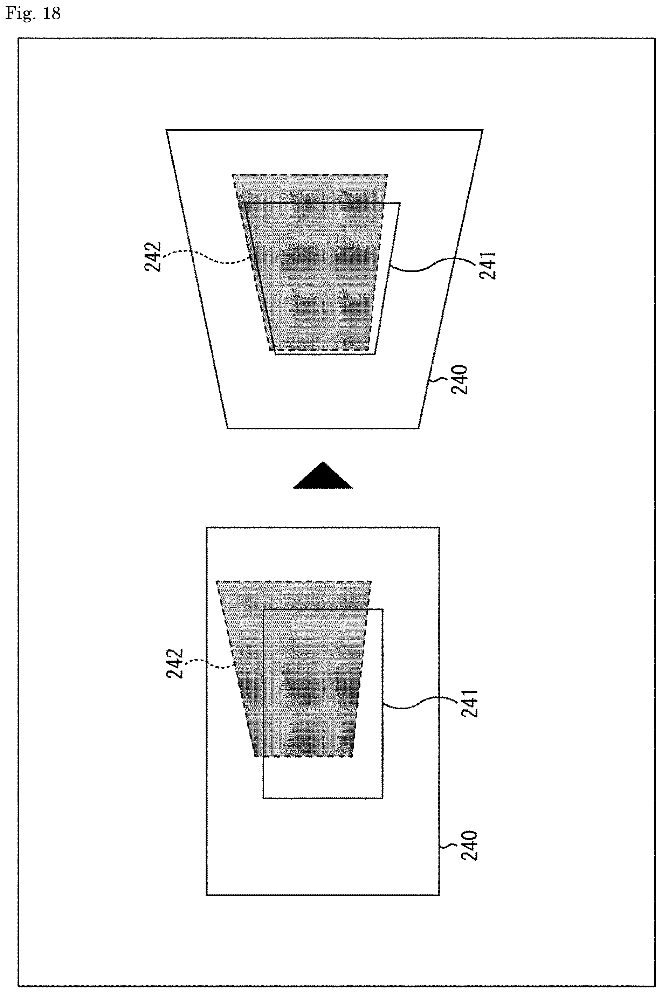

Fig. 18 is a diagram illustrating an example of the display of guidance information.
[Fig. 19]

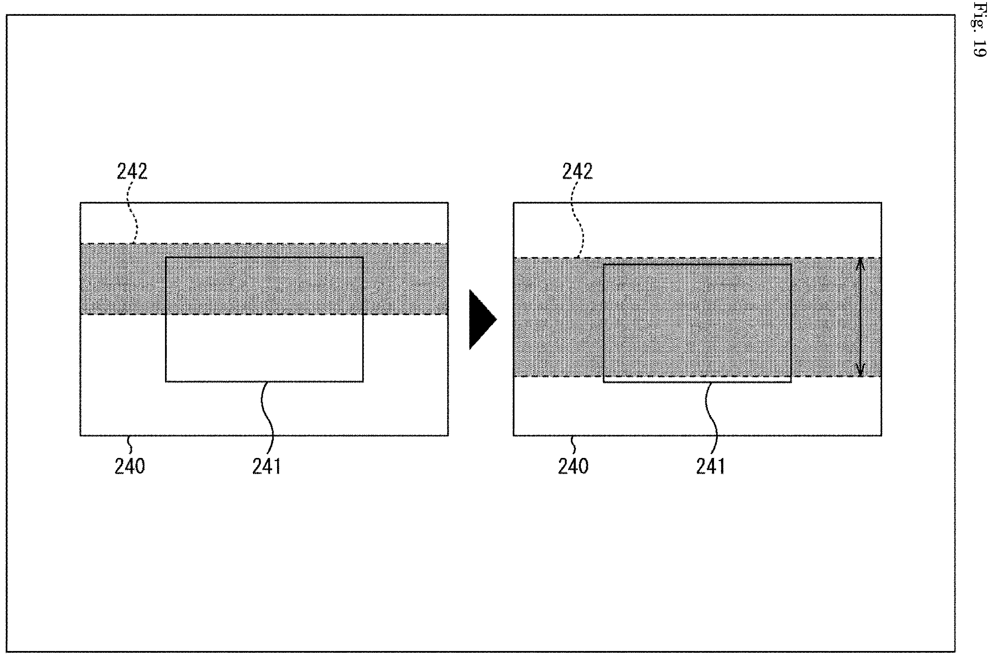

Fig. 19 is a diagram illustrating an example of the display of guidance information.
[Fig. 20]

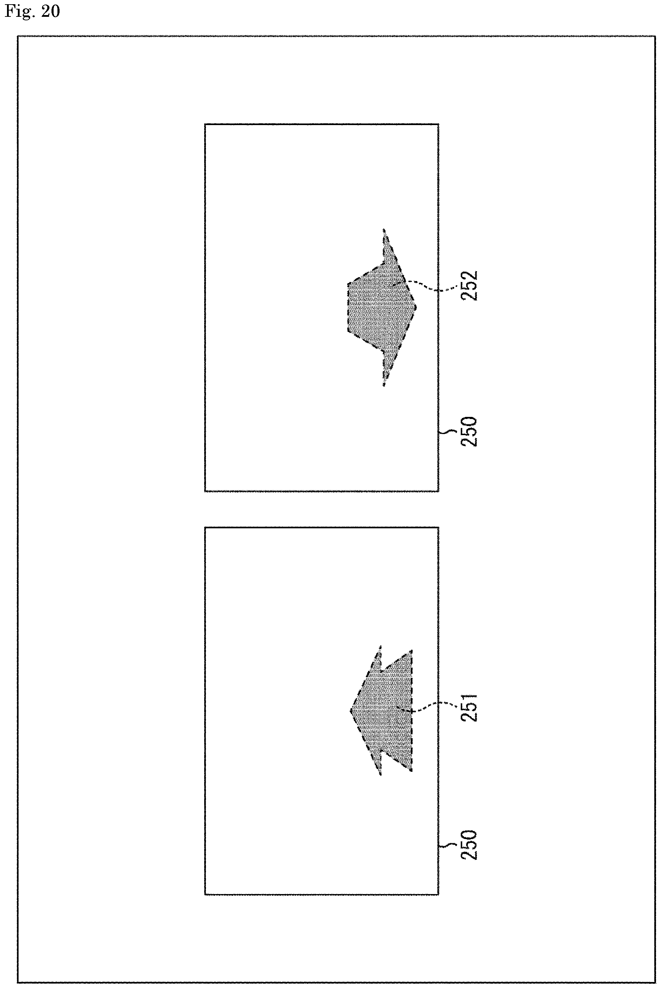

Fig. 20 is a diagram illustrating an example of the display of guidance information.
[Fig. 21]

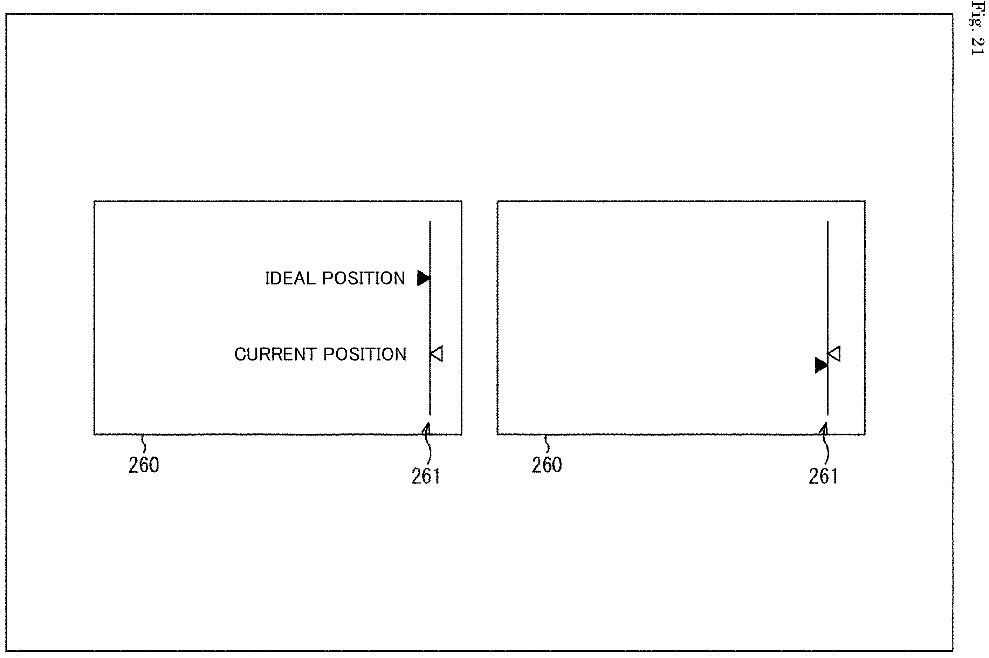

Fig. 21 is a diagram illustrating an example of the display of guidance information.
[Fig. 22]

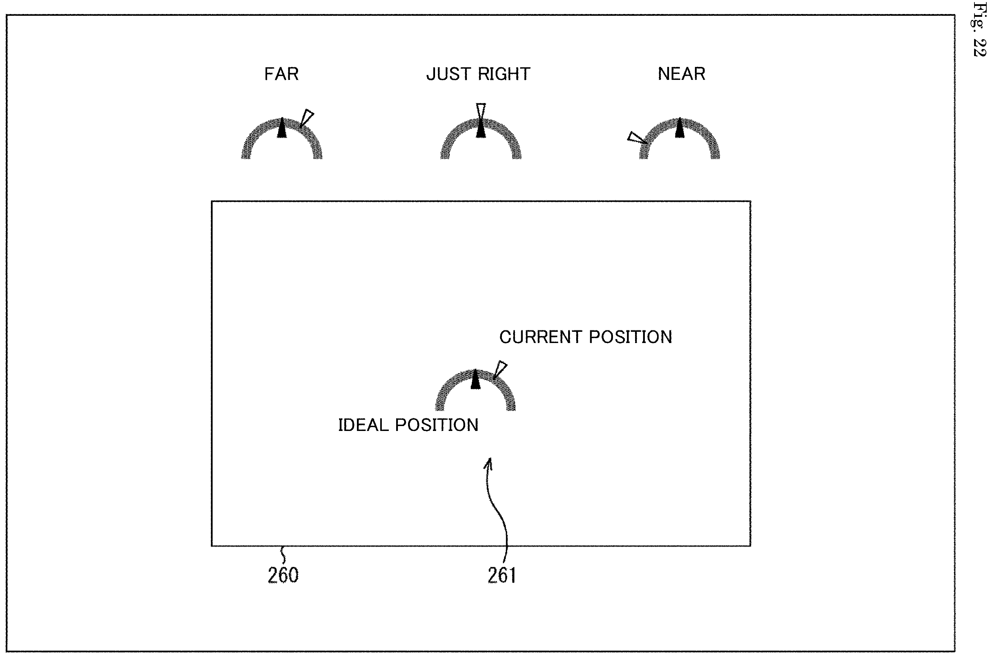

Fig. 22 is a diagram illustrating an example of the display of guidance information.
[Fig. 23]

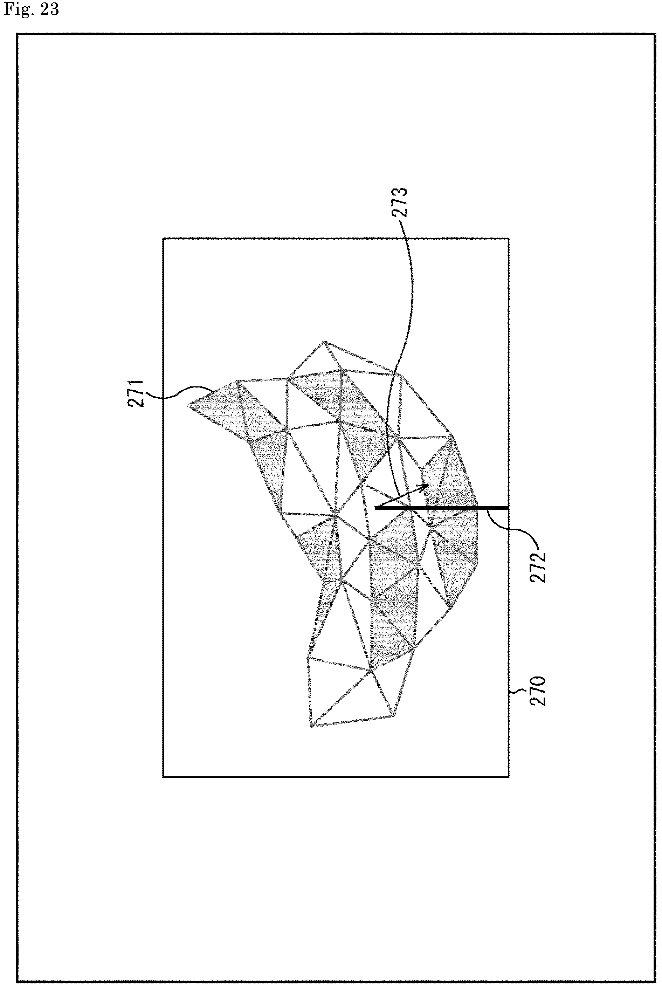

Fig. 23 is a diagram illustrating an example of the display of guidance information.
[Fig. 24]

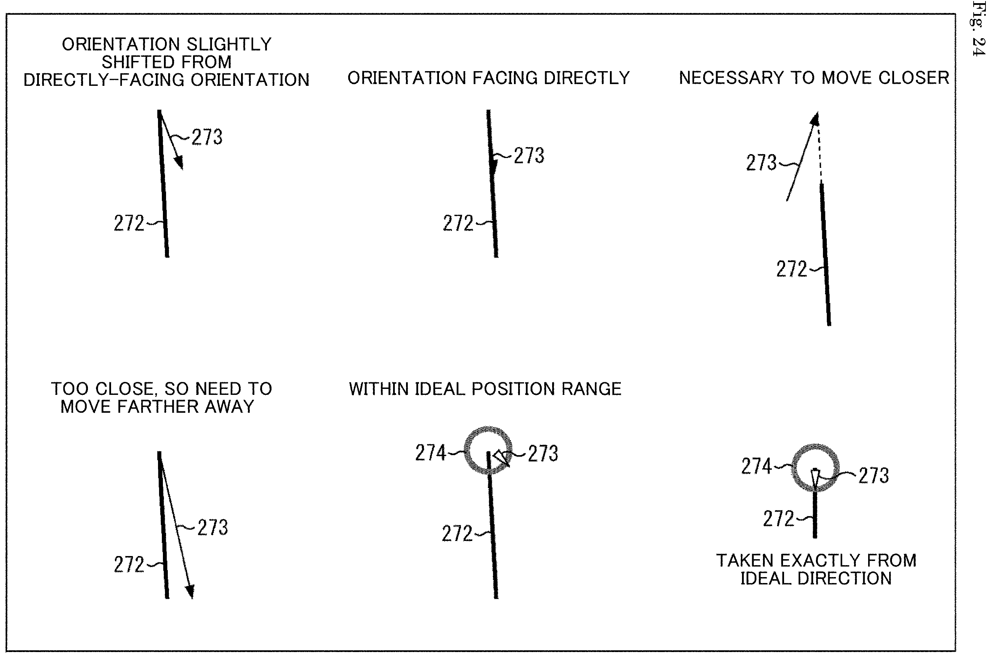

Fig. 24 is a diagram illustrating an example of the display of guidance information.
[Fig. 25]

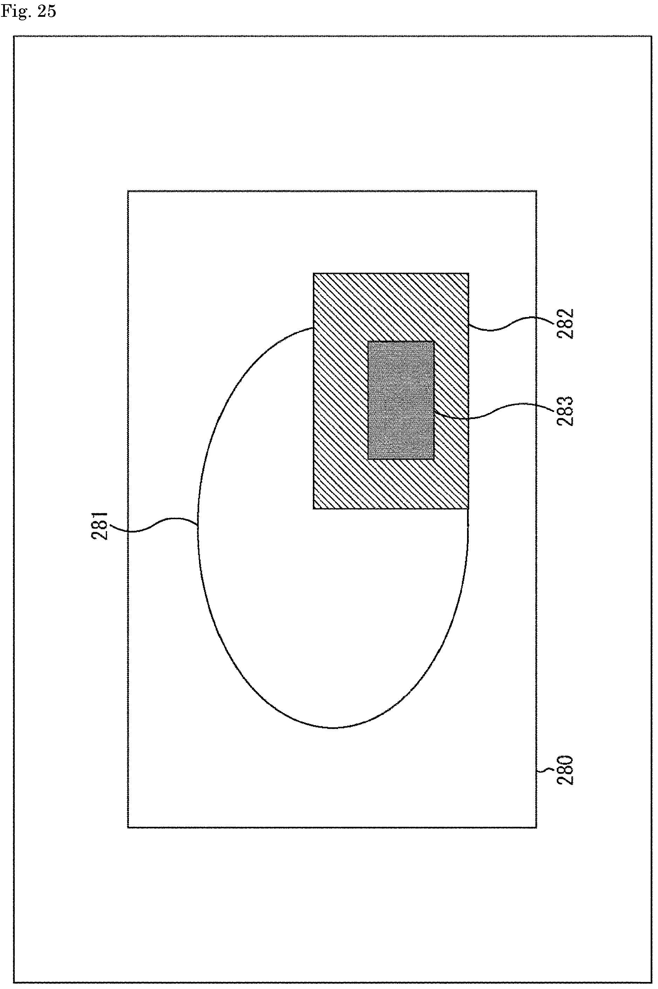

Fig. 25 is a diagram illustrating an example of the display of guidance information.
[Fig. 26]

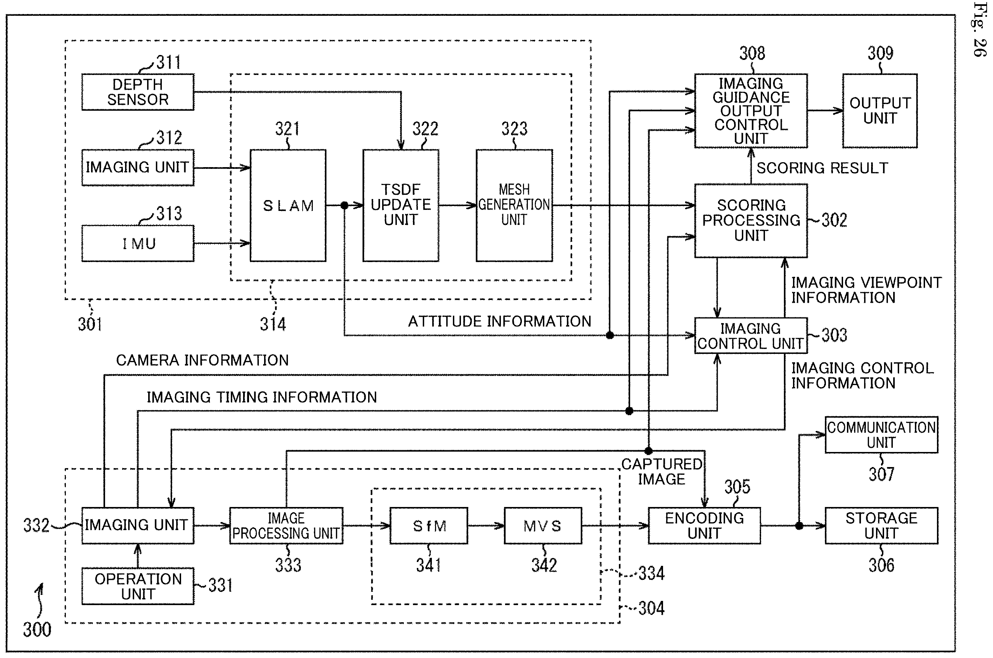

Fig. 26 is a block diagram illustrating an example of the main configuration of an imaging device.
[Fig. 27]

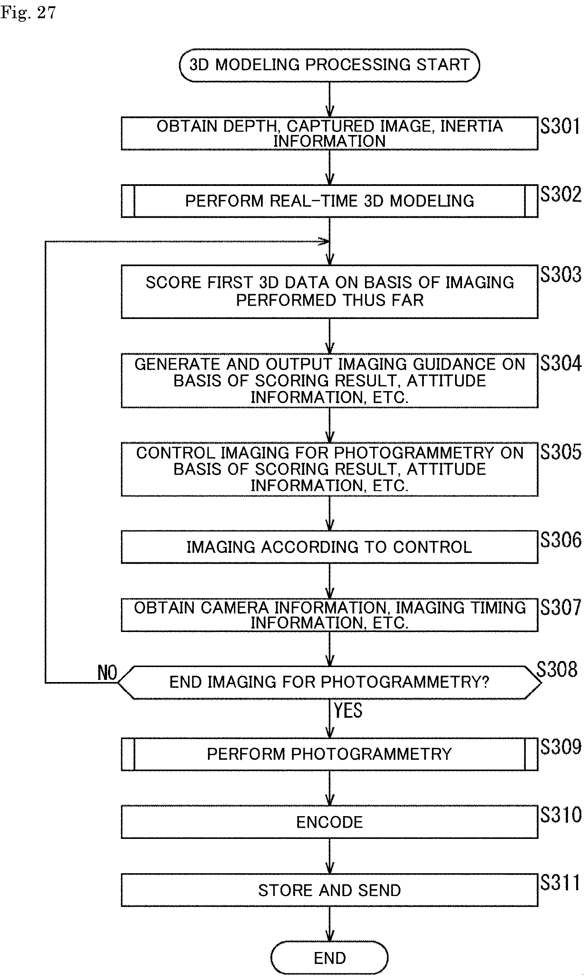

Fig. 27 is a flowchart illustrating an example of the flow of 3D modeling processing.
[Fig. 28]

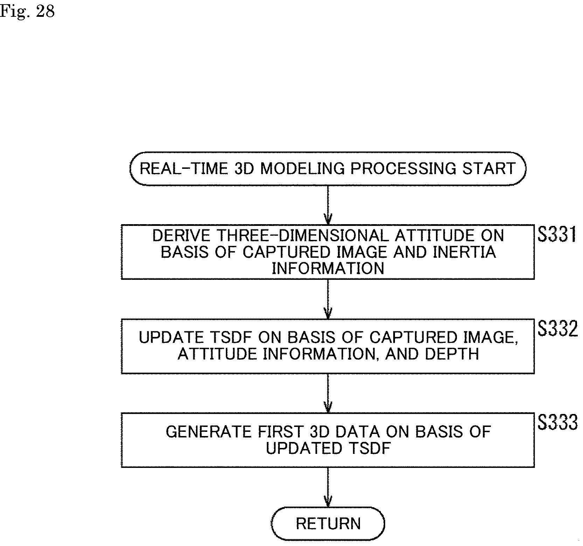

Fig. 28 is a flowchart illustrating an example of the flow of real-time 3D modeling processing.
[Fig. 29]

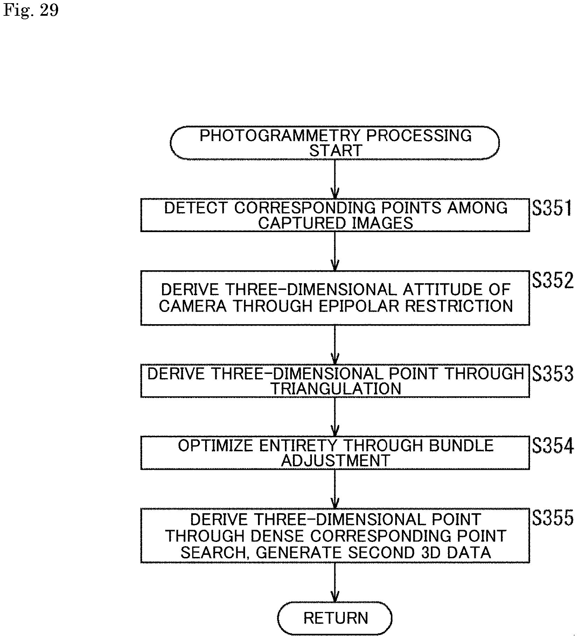

Fig. 29 is a flowchart illustrating an example of the flow of photogrammetry processing.
[Fig. 30]

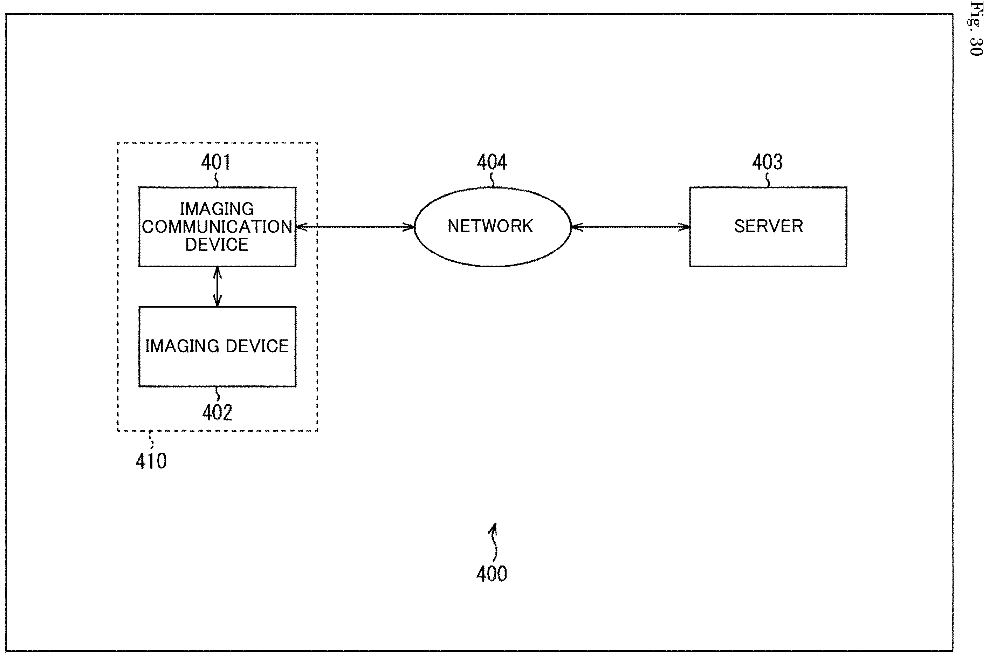

Fig. 30 is a diagram illustrating an example of the main configuration of an information processing system.
[Fig. 31]

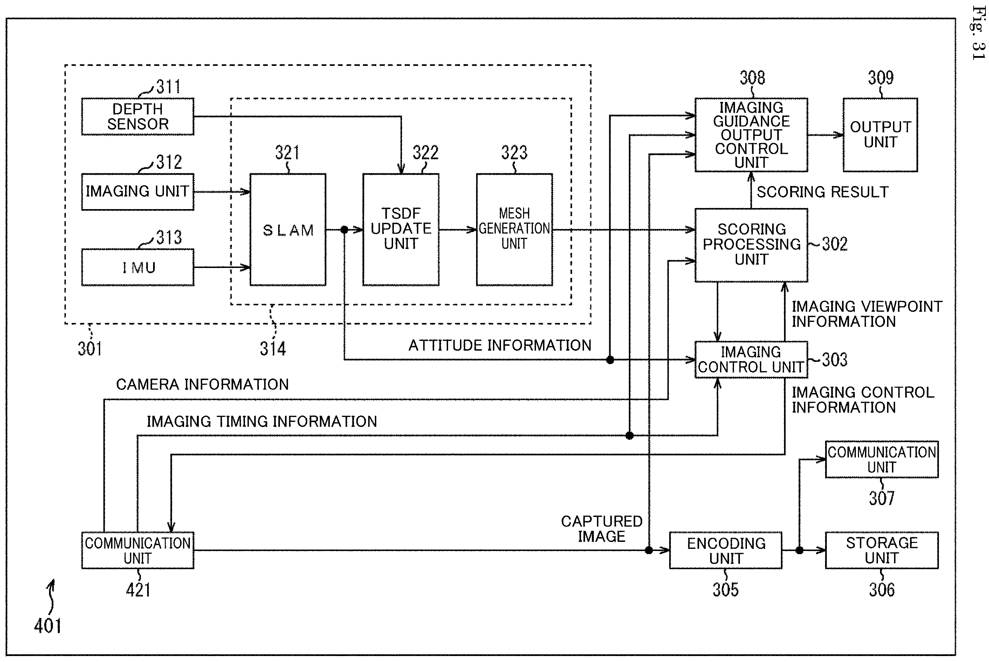

Fig. 31 is a block diagram illustrating an example of the main configuration of an imaging communication device.
[Fig. 32]

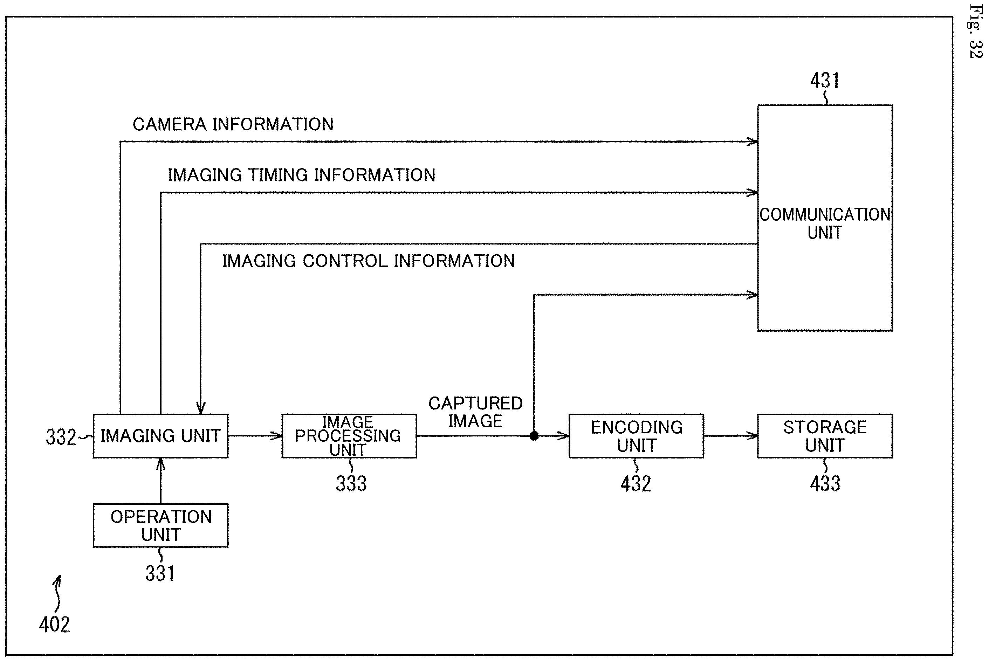

Fig. 32 is a block diagram illustrating an example of the main configuration of an imaging device.
[Fig. 33]

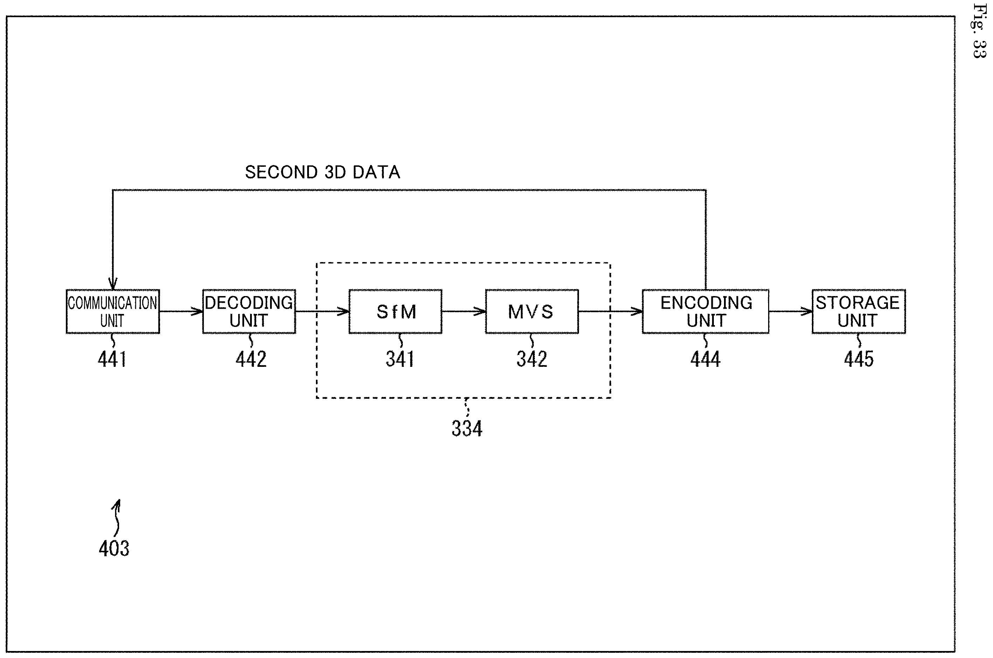

Fig. 33 is a block diagram illustrating an example of the main configuration of a server.
[Fig. 34]

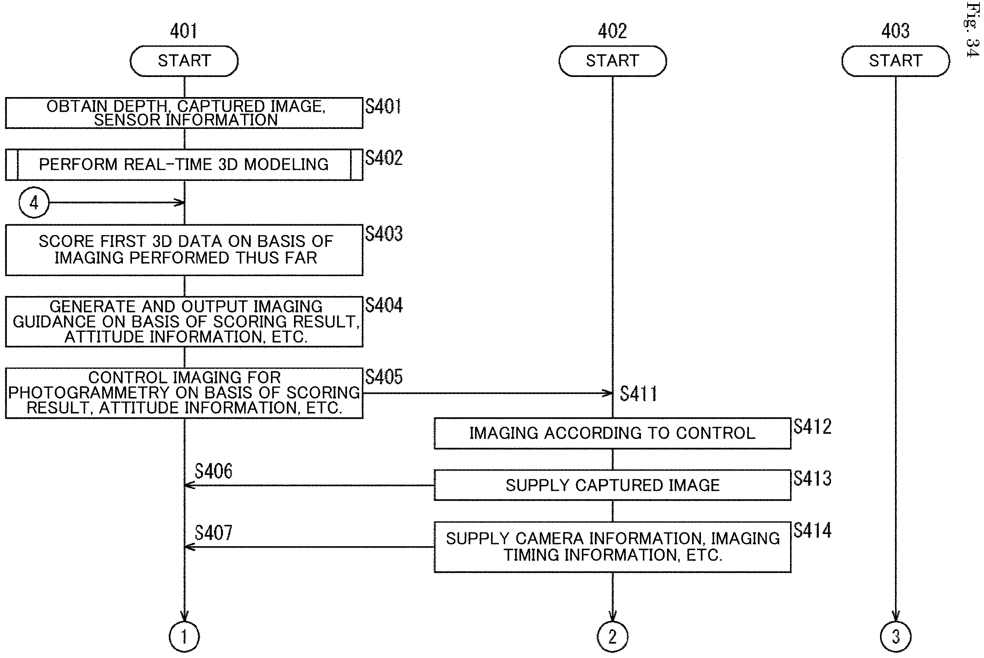

Fig. 34 is a flowchart illustrating an example of the flow of 3D modeling processing.
[Fig. 35]

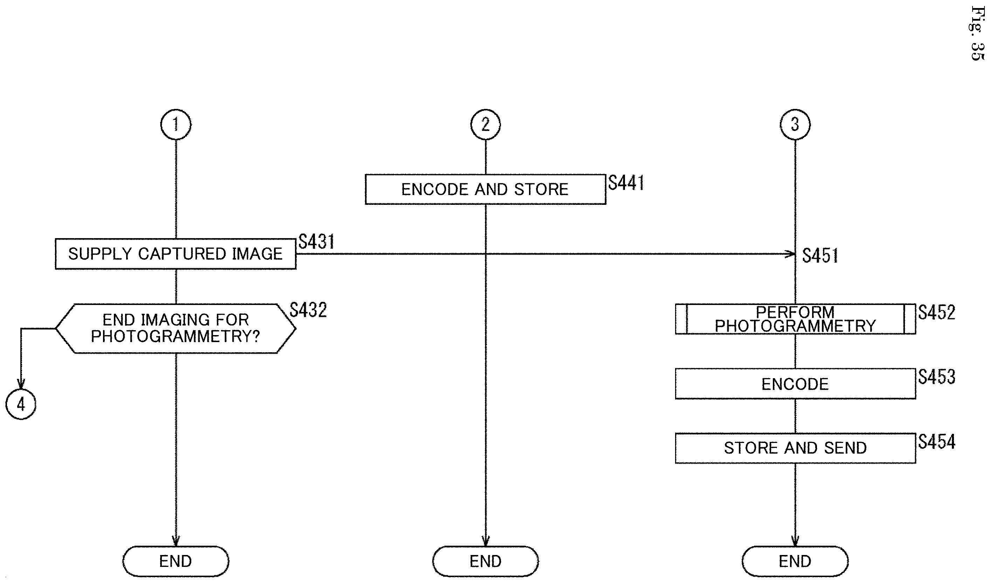

Fig. 35 is a flowchart illustrating an example of the flow of 3D modeling processing, continued from Fig. 34.
[Fig. 36]

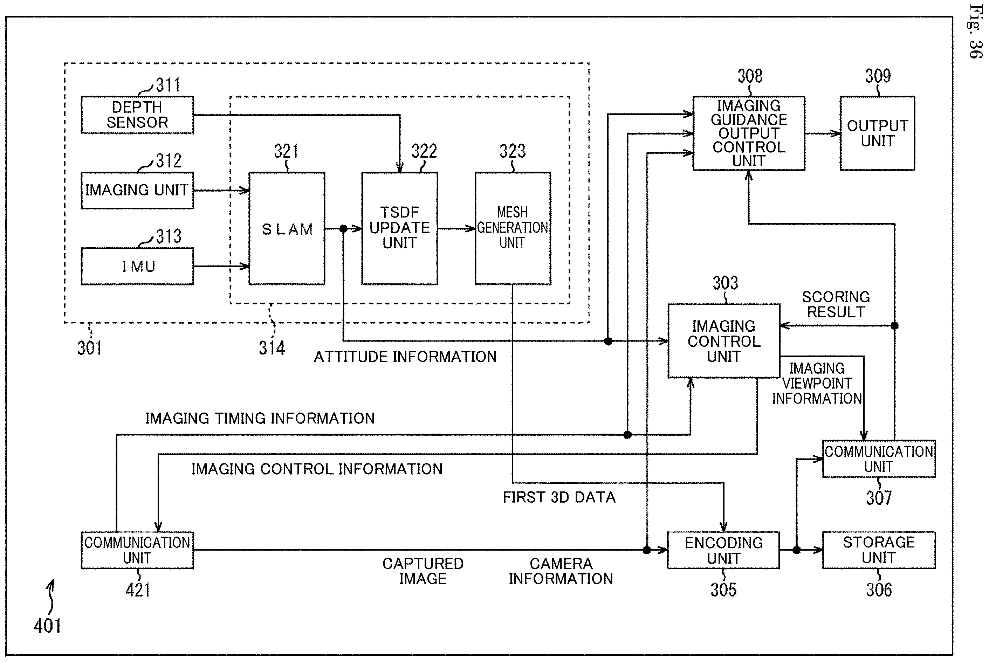

Fig. 36 is a block diagram illustrating an example of the main configuration of an imaging communication device.
[Fig. 37]

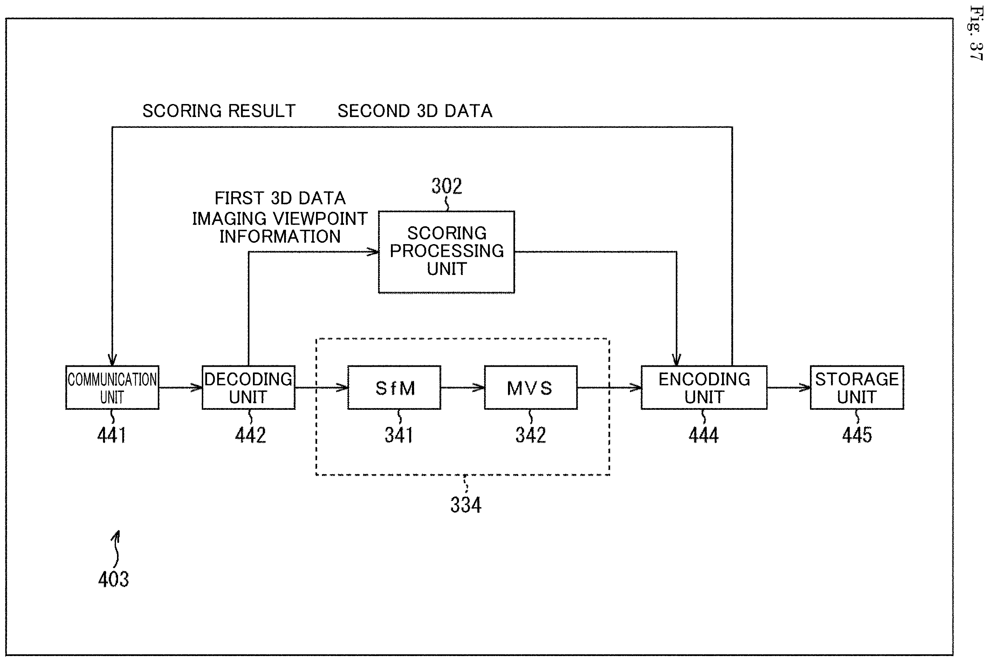

Fig. 37 is a block diagram illustrating an example of the main configuration of a server.
[Fig. 38]

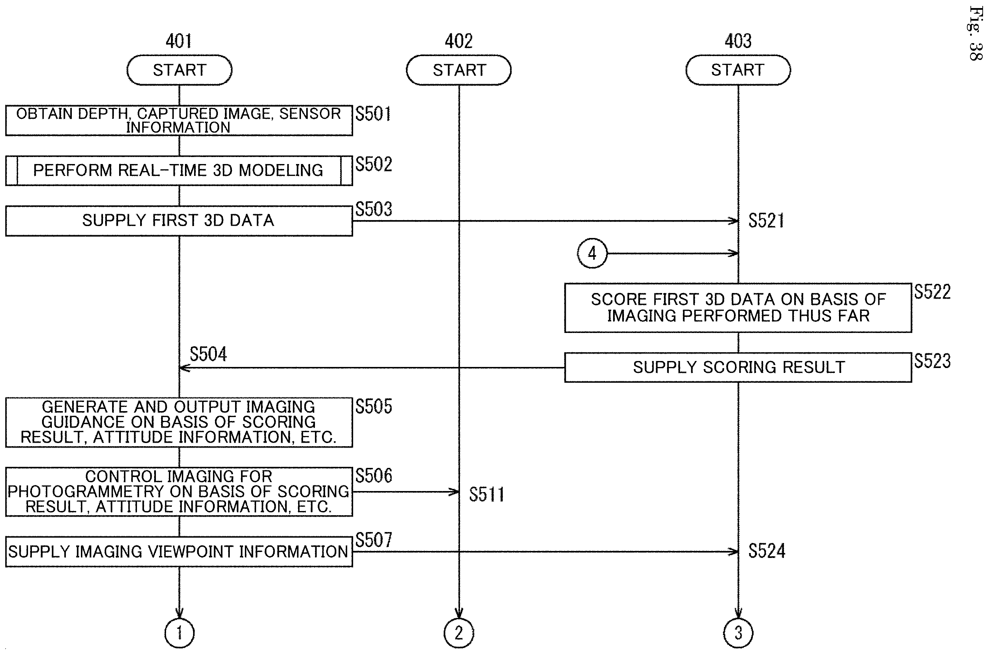

Fig. 38 is a flowchart illustrating an example of the flow of 3D modeling processing.
[Fig. 39]

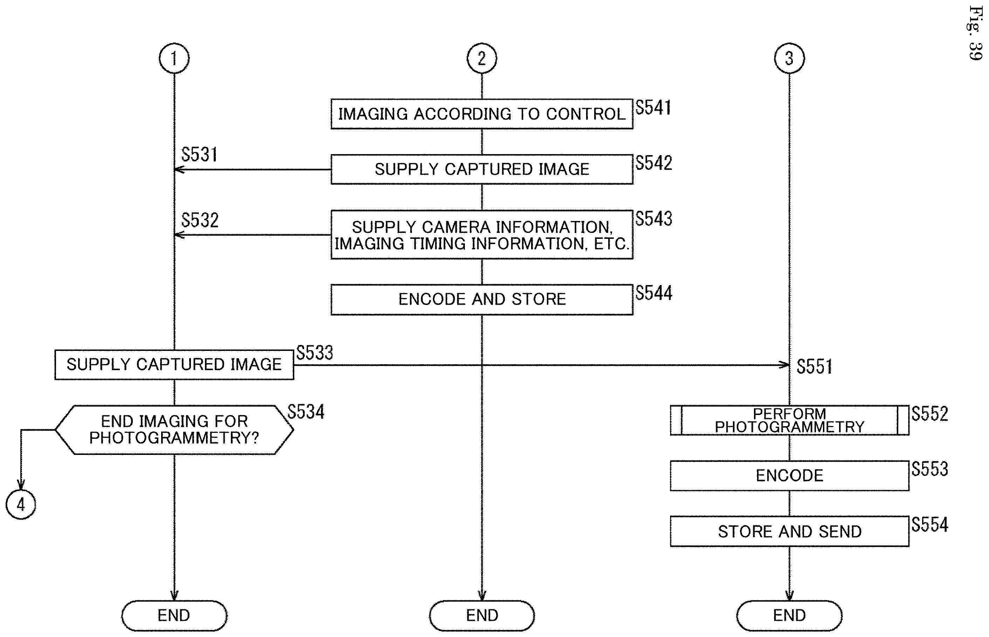

Fig. 39 is a flowchart illustrating an example of the flow of 3D modeling processing, continued from Fig. 38.
[Fig. 40]

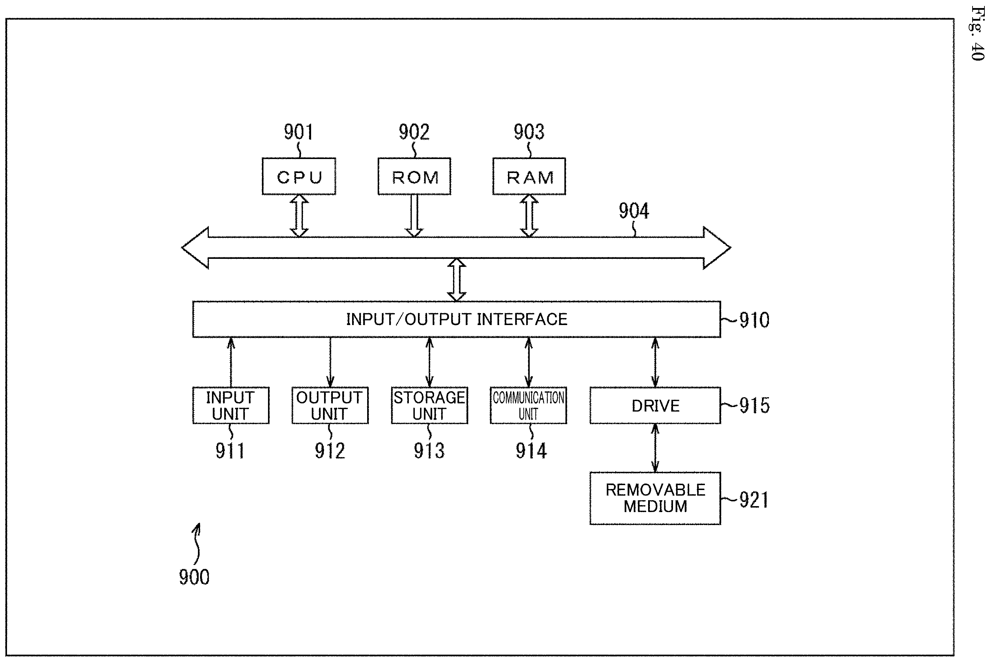

Fig. 40 is a block diagram illustrating an example of the main configuration of a computer.

[Description of Embodiments]

Modes for carrying out the present disclosure (hereinafter referred to as "embodiments") will be described below. The descriptions will be given in the following order.

    1. 3D Modeling
    2. Imaging Control
    3. Imaging Guidance Output
    4. Combinations
    5. First Embodiment (Imaging Device)
    6. Second Embodiment (Information Processing System)
    7. Supplementary Notes

<1. 3D Modeling>

<Photogrammetry>

Conventionally, for an object having a three-dimensional shape (also called a "3D object" herein), as a method of generating (reconstructing) a model of that three-dimensional shape, there is a method called photogrammetry, in which images of the 3D object are captured from a plurality of directions and 3D data is generated on the basis of the obtained plurality of captured images. Generating a model of the three-dimensional shape of a 3D object is also referred to as "3D modeling" herein.

Photogrammetry is a method that reconstructs an extremely accurate three-dimensional model from a plurality of images shot from a variety of viewpoints using the principle of triangulation. Note that the "accuracy" of 3D data (the 3D model) herein includes not only the reproducibility (the precision, level of detail, and the like) of the three-dimensional shape of the 3D object in question, but also the reproducibility (the precision, level of detail, and the like) of textures applied to the surfaces of the 3D model. For example, as with cameras 11-1 to 11-5 illustrated in Fig. 1, a 3D object 10 is captured from a plurality of viewpoints, and a plurality of captured images are obtained. Then, processing called Structure from Motion (SfM) and processing called Multi view Stereo (MVS) are performed using the captured images, and furthermore, meshing and texturing are performed as post-processing to generate 3D data 15.

In SfM, for example, corresponding points between captured images are searched out, the position and attitude of the camera is derived through epipolar restriction, and the position, in a three-dimensional space, of each corresponding point is specified through triangulation based on the position and attitude of the camera. A point in this three-dimensional space will also be referred to as a "three-dimensional point" herein. In other words, a three-dimensional point corresponding to each corresponding point is specified. Then, an overall three-dimensional point cloud specified as described above is optimized through bundle adjustment.

In MVS, for example, a three-dimensional point cloud derived as described above is used to further perform a dense corresponding point search and add three-dimensional points.

As described above, in photogrammetry, an overall optimization calculation is performed to minimize error of the bundle adjustment. As such, an extremely accurate result can be obtained, but the calculation load is high. Additionally, because the processing is based on geometric calculations rather than physical measurements, in principle, higher image resolutions make it possible to restore more accurate models.

<Real-Time 3D Modeling>

As a different 3D modeling method from photogrammetry, there is a method called real-time 3D modeling, in which 3D data is generated instantaneously (in real time) on the basis of information such as captured images, attitude information, depth, and the like. With this method, as illustrated in Fig. 2, for example, the 3D object 10 is imaged while moving a camera 21 around the 3D object 10 in the manner indicated by a dotted line 22. The camera 21 includes not only an image sensor but also a Light Detection And Ranging (Lidar) scanner (Direct Time of Flight (dToF) module), which obtains captured images and detects a depth (a distance to the subject).

With recent developments in science and technology, dToF modules have become smaller and more advanced in functions, and depths of a relatively long distance (e.g., about 5 m) can be precisely measured both indoors and outdoors. This makes it easy to perform real-time modeling and capturing experiences at the consumer level.

Furthermore, the camera 21 includes an inertial sensor, which detects an acceleration or an angular velocity of the camera 21 (also referred to as "inertia information" herein).

In real-time 3D modeling, processing called Simultaneous Localization and Mapping (SLAM) is performed to generate attitude information indicating the position and attitude of the camera 21. Additionally, a Truncated Signed Distance Function (TSDF) is updated using the attitude information and the depth, and 3D data 25 (meshes and textures) is generated through processing called Marching Cubes (MC).

In SLAM, the position and attitude of the camera are estimated (self-position estimation) on the basis of the captured images and the inertia information, for example. In the update of the TSDF, depths are associated with voxels, and volumes are detected. In MC, an isosurface is calculated using adjacent voxels. If real-time attitude information from SLAM is present, the volume of a voxel can be detected (without using a point cloud) by superimposing a plurality of frames for the depths (how far the rays have reached). Expressing this using voxels makes it possible to estimate viewpoints that are in shadow and therefore must be shot (missing viewpoints). This makes it possible to detect structures with holes, protruding structures, and the like in 3D objects.

<Neural Rendering>

Furthermore, in recent years, a method generally referred to as neural rendering has been proposed in which neural fields are configured on the basis of a shot image and the attitude of the shot image, and an image seen from a desired viewpoint, a three-dimensional model, or the like is generated (e.g., Neural Radiance Fields (NeRF)).

<Comparison>

Each of these 3D modeling methods has different characteristics, and no one method is superior in all respects. Fig. 3 compares the characteristics of photogrammetry and real-time 3D modeling. As indicated in Fig. 3, when these methods are compared, SfM (including self-position estimation) and MVS are used in photogrammetry, whereas self-position estimation (SLAM) and TSDF are used in real-time 3D modeling. Comparing the data used, only image data is used in photogrammetry, whereas in real-time 3D modeling, depth and attitude data are used in addition to image data. Comparing the processing time, photogrammetry requires a long time, e.g., several minutes to several tens of hours, whereas real-time 3D modeling enables substantially instantaneous (real-time) processing such as 30 fps (frame/sec).

Furthermore, comparing the required computing power, photogrammetry requires high-end Central Processing Unit (CPU)- and Graphics Processing Unit (GPU)-level computing performance, and real-time 3D modeling requires mobile Application Processor (AP)-level computing performance. Comparing the accuracy of the generated model, photogrammetry provides a relatively high accuracy, although this does depend on the resolution, number, shooting method, and the like of the captured images. Real-time 3D modeling, on the other hand, provides a relatively low accuracy, although this does depend on the depth, self-position estimation accuracy, and the like.

Additionally, the internal representation of the generated three-dimensional data is point cloud-based in photogrammetry, but is voxel-based in real-time 3D modeling. Although the subject size and resolution are not restricted in photogrammetry, in real-time 3D modeling, such restrictions depend on the sensor. Comparing the absolute accuracy of the model, the accuracy of photogrammetry is relatively high due to the optimization through bundle adjustment, whereas the accuracy of real-time 3D modeling is relatively low, although this does depend on the sensor, the self-position estimation accuracy, and the like. Comparing the scale, in photogrammetry, the scale is indeterminate (the size is unknown), whereas in real-time 3D modeling, the scale is unique (the absolute size is known).

Photogrammetry and real-time 3D modeling are therefore different in terms of such characteristics, for example. In other words, using real-time 3D modeling can reduce the workload and processing amount of the 3D modeling more than using photogrammetry or neural rendering. However, using photogrammetry or neural rendering can generate more accurate 3D data than using real-time 3D modeling.

<Simplifying 3D Modeling >

To obtain more accurate 3D data, photogrammetry or neural rendering may be used as described above, for example. However, lower workloads and processing amounts for the 3D modeling are more desirable in such cases as well. In order to reduce the workload, the processing amount, and the like of the 3D modeling, it is necessary to generate the 3D data as accurately as possible using the lowest number of captured images.

For example, if the required number of captured images for the 3D modeling cannot be obtained, there is a risk that the accuracy of the 3D data will drop. On the other hand, if an attempt is made to obtain an excessive number of captured images to ensure a sufficient number, there is a risk that the number of images captured will increase needlessly and increase the user's workload. In such a case, the 3D modeling processing will be performed using unnecessary captured images, and there is thus a risk that the processing amount will increase needlessly.

In other words, to obtain more accurate 3D data with a lower workload and processing amount, it has been necessary to image the 3D object at a more appropriate position and attitude. However, with the conventional 3D modeling methods, it has been difficult for photographers to ascertain the position and attitude at which it is appropriate to perform imaging.

For example, in photogrammetry, the 3D modeling processing takes time, which makes it difficult for the photographer to immediately confirm the 3D modeling results at the time of shooting. It has therefore been difficult for photographers to ascertain the position and attitude at which it is appropriate to perform imaging during shooting. As a result, there is a risk that, for example, there will be an insufficient number of shot images at appropriate positions and attitudes, leading to a drop in the accuracy of the 3D data obtained by the photogrammetry. Additionally, if the user captures images excessively and indiscriminately at all positions and attitudes to ensure there will be enough captured images at appropriate positions and attitudes, there is a risk not only that the user's workload will increase, but also that the number of captured images will increase needlessly, and the load of the 3D modeling processing (the processing amount, processing time, and the like) will increase needlessly as well.

<2. Imaging Control>

<Imaging Control Based on Scoring Result>

Accordingly, the 3D modeling is performed twice, and the result of the first instance of 3D modeling is used to control the imaging for the second instance of 3D modeling.

For example, assume that second imaging of a 3D object having a three-dimensional shape, and second 3D modeling processing that generates second 3D data (second three-dimensional shape information) representing the three-dimensional shape of that 3D object using second captured images obtained from the second imaging, are performed (second 3D data generation processing 104 in Fig. 4). At this time, the second imaging is controlled such that the second imaging for the second 3D modeling processing can be performed at a more appropriate position and attitude (second 3D modeling imaging control processing 103 in Fig. 4). To implement such control, first 3D data generation processing 101 and scoring processing 102 in Fig. 4 are executed.

The first 3D data generation processing 101 is processing that generates first 3D data (first three-dimensional shape information) representing the three-dimensional shape of the 3D object. In other words, first imaging of the 3D object, and first 3D modeling processing that generates the first 3D data using a first captured image obtained from the first imaging, are performed in the first 3D data generation processing 101.

The scoring processing 102 is processing that evaluates (scores) the accuracy of the second 3D data that can be generated using the second captured images generated from the second imaging performed thus far. This scoring is performed on the basis of the first 3D data generated by the first 3D modeling processing. In the second 3D modeling imaging control processing 103, the second imaging is controlled on the basis of the scoring result.

In other words, the accuracy of the second 3D data that can be generated on the basis of the second captured images obtained from the second imaging up to the present time is evaluated (scored) on the basis of the first 3D data generated on the basis of the first captured image obtained from the first imaging. Doing so makes it easier to generate the scoring result. The second imaging is also controlled on the basis of this scoring result. Doing so makes it possible to control the second imaging to be performed at a more appropriate position and attitude. In other words, the second 3D modeling processing can be executed using second captured images captured at a more appropriate position and attitude. Accordingly, more accurate 3D data can be generated while suppressing an increase in the load of the 3D modeling (the workload, processing amount, and the like). In other words, the 3D modeling can be performed more easily.

Note that unless specifically mentioned, "captured image" herein refers to any image obtained by an image sensor or the like. For example, with an imaging device or the like, images such as the following are generally obtained. For example, a still image is obtained by an image sensor or the like at the timing when a shutter button or the like is operated, and is saved to a storage medium or the like as a result of the imaging. Additionally, the obtainment of a moving image is started by the image sensor or the like from the timing when the shutter button or the like is operated, and the moving image is saved to the storage medium or the like as a result of the imaging. Additionally, an image is obtained by the image sensor or the like before the shutter button or the like is operated (this may be called an "imported image"), and is used for display on a monitor or the like without being stored in the storage medium as a result of the imaging. "Captured image" refers to such images herein. In other words, the captured image may be a still image or a moving image. Additionally, the captured image may or may not be saved to the storage medium or the like as a result of the image capture. Additionally, the captured image may or may not be displayed on the monitor or the like. Additionally, the captured image may be obtained before the shutter button or the like is operated, at the timing the shutter button or the like is operated, or after the shutter button or the like is operated. The captured image may be the data itself obtained by the image sensor or the like (what is known as "RAW data"). The captured image may be an image on which color separation processing, color conversion processing, or the like has been performed. The captured image may be an image that has been subjected to signal processing such as defect correction, noise reduction, Automatic White Balance (AWB), gamma correction, or the like. Other image processing may additionally be performed.

<First Imaging>

Herein, an imaging unit (image sensor) that performs the first imaging will also be called a "first imaging unit". An imaging unit (image sensor) that performs the second imaging will also be called a "second imaging unit".

As described above, the first imaging is performed in the first 3D data generation processing 101. In other words, the first captured image is generated by the first imaging unit. At this time, a distance from the first imaging unit to a subject (3D object) present in the first captured image (a depth) may be detected by a depth sensor. The depth sensor may detect the depth using any method. The depth sensor may be integrated with the first imaging unit, or may be a different sensor from the first imaging unit, provided at a different position from the first imaging unit. In the following, unless specifically mentioned otherwise, this depth is assumed to be appropriately calibrated for the first captured image. Inertia information (angular velocity and acceleration) of the first imaging unit may also be detected by an inertia information sensor when the first imaging is performed. The inertia information sensor may detect the inertia information using any method. The inertia information sensor may be integrated with the first imaging unit, or may be a different sensor from the first imaging unit, provided at a different position from the first imaging unit.

The generated first captured image is used in the first 3D data generation processing. Additionally, if generated, the depth and inertia information are also used in the first 3D data generation processing.

Note that the number of first imaging units (image sensors), depth sensors, and inertia information sensors may be any number, and there may be one each or a plurality thereof. In other words, the number of first imaging units, depth sensors, and inertia information sensors may all be the same, the same for two thereof, or different from each other.

<First 3D Modeling Processing>

As described above, the first 3D modeling processing is performed in the first 3D data generation processing 101. In the first 3D modeling processing, the first 3D data representing the three-dimensional shape of the 3D object (the first three-dimensional shape information) is generated on the basis of the first captured image generated by the first imaging of the 3D object.

The first 3D data may have a lower information amount and a lower accuracy than the second 3D data (the second three-dimensional shape information) generated by the second 3D data generation processing 104.

This makes it possible to suppress an increase in the load of the scoring processing 102 and the second 3D modeling imaging control processing 103. In other words, simplifying the first 3D data (reducing the information amount and accuracy) makes it possible to suppress an increase in the load of the scoring, the imaging control, and the like performed using the first 3D data. In general, an increase in the load of the generation of the first 3D data (the first 3D modeling processing) can also be suppressed. In other words, the second imaging can be controlled with a lighter load.

Additionally, the first 3D modeling processing may use any method. For example, in the first 3D modeling processing, attitude information corresponding to the angle of view of the first captured image may be derived, and the first 3D data may be generated on the basis of the attitude information, the first captured image, and the depth of the subject (the 3D object) in the first captured image. For example, the first 3D data may be generated by updating the TSDF and performing MC on the basis of this information.

Note that this attitude information is information indicating the position and attitude of the first imaging unit in the three-dimensional space. The attitude information may be derived using any method. For example, the attitude information may be derived on the basis of the inertia information (acceleration and angular velocity) of the first imaging unit. SLAM may be used, for example.

In other words, the real-time 3D modeling described above may be used as the first 3D modeling processing. Doing so makes it possible to perform the first 3D modeling processing instantaneously (in real time), and the first 3D data can therefore be obtained instantaneously (in real time). Accordingly, imaging control processing for the second 3D modeling can be performed instantaneously (in real time). In other words, the 3D modeling can be performed more easily. Note that the attitude information of the first imaging unit, the first 3D data, and the like may be generated using a neural network that takes the first captured image, the inertia information of the first imaging unit, and the depth as inputs.

The first 3D data may be any data that represents the three-dimensional shape of the 3D object, and may be, for example, a point cloud, or may include a mesh expressing the three-dimensional shape of the 3D object through vertices and connections therebetween and textures applied to the surfaces of the mesh. This first 3D data is supplied to the scoring processing 102.

<Scoring Processing>

In the scoring processing 102, the accuracy of the second 3D data that can be generated using the second captured images generated from the second imaging performed thus far is evaluated, as described above. This scoring is performed on the basis of the first 3D data generated through the first 3D modeling processing, and the positions and attitudes in the second imaging performed thus far. In other words, the first 3D data is treated as a 3D object modeled in the second 3D modeling processing, and a score is calculated for each local area of the first 3D data. For example, if the first 3D data includes a mesh expressing the three-dimensional shape of the 3D object through vertices and connections therebetween and textures applied to the surfaces of the mesh, the scoring result is generated for each polygon of the mesh. In other words, the part of the first 3D data in which the more accurate second 3D data is obtained is evaluated more highly (set to a higher score).

Assume that, for example, the first 3D data generation processing 101 in Fig. 4 generates first 3D data 120 illustrated in Fig. 5. Assume also that second imaging has been performed at the positions and attitudes of cameras 121-1 to 121-3 for the 3D object corresponding to the first 3D data 120. In this case, the scoring processing 102 evaluates the upper side of the first 3D data 120 in the figure as having a relatively high score, and the lower side of the first 3D data 120 in the figure (the gray part) as having a relatively low score. An example of the scoring method will be given later.

Note that in Fig. 5, only two types, namely a high score and a low score, are shown as scoring results for illustrative purposes. However, the number of types of scores (the number of classifications for clustering) may be any number. For example, the results may be classified as one of three levels (e.g., low score, medium score, and high score), as one of ten levels (e.g., 0 to 9 points), as one of 100 levels (e.g., 0 to 99 points), or as one of another number of levels.

The scoring result generated by the scoring processing 102 is supplied to the second 3D modeling imaging control processing 103.

<Imaging Control Processing for Second 3D Modeling>

In the second 3D modeling imaging control processing 103, the second imaging is controlled on the basis of the position and attitude of the second imaging unit, and the scoring result obtained by the scoring processing 102. For example, the second imaging is controlled to be performed at a position and attitude that improves the scoring result.

Assume, for example, that the scoring processing 102 obtains a scoring result such as that illustrated in Fig. 5. From this scoring result, it is clear that the imaging of the lower side of the 3D object corresponding to the first 3D data 120 in the figure (e.g., the gray part) is insufficient.

Accordingly, in the second 3D modeling imaging control processing 103, the second imaging is controlled to perform imaging from the lower side of the 3D object in the figure such that a captured image of the gray part, which is insufficient for that imaging, can be obtained. For example, the position and attitude of a camera 121-4 are determined to be more appropriate as the position and attitude at which to perform the second imaging, and the second imaging is controlled such that the imaging is performed at the position and attitude of the camera 121-4.

Doing so makes it possible to generate a second captured image that has been captured at a more appropriate position and attitude. In other words, the second 3D modeling processing can be caused to be executed using second captured images captured at a more appropriate position and attitude. Accordingly, more accurate 3D data can be generated while suppressing an increase in the load of the 3D modeling (the workload, processing amount, and the like). In other words, the 3D modeling can be performed more easily.

Any method may be used to determine the position and attitude at which the second imaging should be performed. For example, in the second 3D modeling imaging control processing 103, (a range of) the position and attitude that can improve the score of the insufficient part of the second imaging (the gray part) may be specified on the basis of the scoring result. Additionally, the current attitude information (position and attitude) of the second imaging unit may be provided to the scoring processing 102 as imaging viewpoint information, and a scoring result obtained if the second captured image obtained at the current position and attitude is added may then be obtained. If that score is higher than the score from before adding the second captured image by a predetermined threshold, the current position and attitude may be determined to be the position and attitude at which the second imaging should be performed.

Note that if the relationship between the positions and attitudes of the first imaging unit and the second imaging unit is known, the attitude information of the first imaging unit may be provided to the scoring processing 102 as the imaging viewpoint information instead of the attitude information of the second imaging unit. In this case, in the scoring processing 102, the attitude information of the second imaging unit may be derived using the attitude information of the first imaging unit, and the scoring result may be generated using the attitude information of the second imaging unit. The scoring result may also be generated using a neural network that includes the attitude information of the first imaging unit as an input parameter.

Additionally, in the second 3D modeling imaging control processing 103, whether the position and attitude are the position and attitude at which the second imaging should be performed may be determined on the basis of a rate of overlap with the imaging ranges of the second imaging performed thus far. "Rate of overlap" refers to the degree (percentage) of a region where imaging ranges overlap (an overlapping region). In other words, whether the position and attitude of the second imaging are a more appropriate position and attitude may be determined according to the extent to which the imaging range of the second imaging to be performed overlaps with the regions appearing in the second captured images obtained thus far.

For example, if a method in which 3D modeling is performed on the basis of corresponding points among a plurality of the second captured images, such as photogrammetry, is used as the second 3D modeling processing, it is necessary that the imaging ranges of the plurality of second captured images overlap at least partially (i.e., an overlapping region is present) in order to obtain those corresponding points. Accordingly, of the second captured images obtained up to that point, the position and attitude at which second captured images have been obtained, which provide a rate of overlap that makes the second 3D modeling processing easier (i.e., that enables more precise 3D modeling processing), may be determined to be a more appropriate position and attitude (the position and attitude at which the second imaging should be performed).

The value of the rate of overlap at which the second 3D modeling processing can be performed more easily (at which more precise 3D modeling processing can be performed) also depends on the three-dimensional shape of the 3D object. For example, when shooting from what is known as a "drone", the subject can be regarded as a plane 130, as illustrated on the left side of Fig. 6. For example, the imaging range when imaging the plane 130 from a camera 131-1 is a range indicated by a double-headed arrow 132-1. Likewise, the imaging range when imaging the plane 130 from a camera 131-2 is a range indicated by a double-headed arrow 132-2. Accordingly, the overlapping region of these captured images is a range indicated by a double-headed arrow 133. In such a case, the captured images overlap in a simple manner, and thus more precise 3D modeling processing can be performed when a rate of overlap that is at least a predetermined percentage is obtained.

However, in the second imaging, the subject is a 3D object (first 3D data 135), and because the overall subject is imaged, the overlap is three-dimensional, as indicated by a second captured image 136-1 and a second captured image 136-2 in the example on the right side of Fig. 6. The rate of overlap at which sufficiently precise 3D modeling processing can be performed therefore depends on the three-dimensional shape of the 3D object. Accordingly, when determining the position and attitude at which the second imaging should be performed, if the rate of overlap with the second captured images obtained thus far is taken into account, it is desirable to also take into account the three-dimensional shape (the first 3D data) and the like of the 3D object (the position and attitude at which the second imaging should be performed can be determined more precisely).

Additionally, when determining the position and attitude at which the second imaging should be performed, the distance from the subject (3D object) at that imaging position may also be controlled. In other words, in addition to which part of the 3D object is imaged from which angle, what distance that part is imaged from may also be controlled.

As illustrated in the example on the left side of Fig. 7, when imaging from positions far away from a 3D object 141 (the positions indicated by black triangles in the figure), as indicated by a dotted line 142, the entirety of the 3D object 141 can be imaged with few instances of imaging. However, complex parts of the three-dimensional shape of the 3D object 141 (e.g., an oblique part 141A and the like) cannot be imaged. As such, the precision of the second 3D modeling processing (the accuracy of the second 3D data) may drop.

In contrast, as illustrated in the example on the right side of Fig. 7, when imaging from positions close to a 3D object 141 (the positions indicated by black triangles in the figure), as indicated by a dotted line 143, the number of instances of imaging required to image the entirety of the 3D object 141 is higher than in the example on the left side of Fig. 7. However, complex parts of the three-dimensional shape of the 3D object 141 (e.g., the oblique part 141A and the like) can be imaged, as compared to the example on the left of Fig. 7. In other words, the entirety of the 3D object 141 can be imaged more reliably than in the example on the left side of Fig. 7. As such, a drop in the precision of the second 3D modeling processing (the accuracy of the second 3D data) can be suppressed.

In other words, as the position of the second imaging, the appropriate distance from the 3D object depends on the three-dimensional shape of the 3D object. Accordingly, in the second 3D modeling imaging control processing 103, the distance of the position of the second imaging from the 3D object (the subject) may be controlled in accordance with (the complexity of) the three-dimensional shape of the 3D object. Doing so makes it possible to suppress an unnecessary increase in the number of instances of the second imaging while also suppressing a drop in the precision of the second 3D modeling processing (the accuracy of the second 3D data) as described above. In other words, the second imaging can be controlled to be performed at a more appropriate position and attitude.

Any method may be used to derive the complexity of the three-dimensional shape of the 3D object. For example, this complexity may be derived on the basis of the first 3D data. However, in this case, for example, the first 3D data may be processed as a 2-dimensional image, and the complexity of the three-dimensional shape of the 3D object may then be derived from a pattern or the like of the 2-dimensional image. Doing so makes it possible to suppress an increase in the processing load of deriving the complexity of the three-dimensional shape of the 3D object.

Additionally, a detection frame may be provided, and the complexity of the three-dimensional shape of the 3D object may be derived for the detection frame. The detection frame may be of any shape or size. For example, in the detection frame, how many polygons in the first 3D data are facing the imaging plane of the second imaging may be determined in the detection frame, the degree of variation in the normal directions thereof within the detection frame may be quantified, and the complexity of the three-dimensional shape of the 3D object within the detection frame may then be derived on the basis of the degree of variation. In general, the larger the variation is, the more complex the shape is, and when the polygons are facing the same direction, the shape can be regarded as being close to a flat shape. Additionally, the average of the normal directions of the polygons in the detection frame may be taken as a representative value of the degree to which the polygons face the imaging plane, and the complexity of the three-dimensional shape of the 3D object may be derived on the basis of that representative value.

Meanwhile, in the Marching Cubes method, if many cases where the arrangement of vertices makes it easy to form a plane are present in the detection frame, the complexity of the three-dimensional shape of the 3D object may be determined to be low.

In other words, the complexity of the three-dimensional shape of the 3D object may be (a value based on) any parameter, as long as the parameter is a quantitative value serving as a basis for estimating the direction, frequency, and distance for the imaging required on the basis of the approximate shape of the subject in a given region. Any method may be used to control the distance, from the 3D object, of the second imaging based on the complexity of the three-dimensional shape of the 3D object. For example, control may be performed such that as the complexity of the three-dimensional shape of the 3D object increases, the second imaging is performed from a position closer to the 3D object. Likewise, control may be performed such that as the complexity of the three-dimensional shape of the 3D object decreases, the second imaging is performed from a position further from the 3D object.

In the second 3D modeling imaging control processing 103, the position and attitude at which the second imaging should be performed (a more appropriate position and attitude) are obtained as described above, and control information (imaging control information) for controlling the second imaging to be performed at that position and attitude is generated. The imaging control information is then supplied to the second 3D data generation processing 104. For example, if a user or the like moves the second imaging unit and the position and attitude of the second imaging unit match the "position and attitude at which the second imaging should be performed" that have been obtained, imaging control information instructing the second imaging may be generated and supplied to the second 3D data generation processing 104 (i.e., the second imaging may be performed at the "position and attitude at which the second imaging should be performed").

<Second Imaging>

In the second 3D data generation processing 104, the second imaging unit performs the second imaging in accordance with the control of the second 3D modeling imaging control processing 103, and generates the second captured image. For example, the second imaging unit may perform the second imaging on the basis of the imaging control information generated in the second 3D modeling imaging control processing 103. The second imaging unit may perform the second imaging, for example, when imaging is instructed by the imaging control information (at the timing at which the imaging is instructed). Additionally, a control unit that controls the position and attitude of the second imaging unit may move the second imaging unit to a position specified by the imaging control information, and to an attitude specified by the imaging control information, and the second imaging unit may then perform the second imaging at that position and attitude.

The number of second imaging units may be any number, and there may be one or a plurality thereof. The first imaging unit and the second imaging unit may be a common imaging unit (the same imaging unit), or may be different imaging units provided at different positions from each other.

The specifications (e.g., the number of pixels and the like) of the second imaging unit may be the same as, or different from, the specifications of the first imaging unit. For example, the second captured image may have a higher image quality than the first captured image. The second captured image may have a higher resolution than the first captured image. The second captured image may have a higher dynamic range than the first captured image.

<Second 3D Modeling Processing>

The second 3D modeling processing method executed in the second 3D data generation processing 104 may use any method. For example, the method of the second 3D modeling processing may be the same as, or different from, that of the first 3D modeling processing.

For example, the photogrammetry described above may be used as the second 3D modeling processing. In other words, in the second 3D modeling processing, SfM and MVS may be applied, and a point cloud may be generated from a plurality of second captured images. Furthermore, the second 3D data may be generated by performing meshing and texturing on the point cloud as post-processing. In other words, the second 3D data may be any data that represents the three-dimensional shape of the 3D object, and may be, for example, a point cloud, or may include a mesh expressing the three-dimensional shape of the 3D object through vertices and connections therebetween and textures applied to the surfaces of the mesh. Additionally, the neural rendering described above may be used as the second modeling processing.

For example, in addition to the second captured images, the second 3D data may be generated using attitude information of the second imaging unit that performs the second imaging (attitude information corresponding to the angles of view of the second captured image obtained thus far). This attitude information is information indicating the position and attitude of the second imaging unit in the three-dimensional space.

Additionally, if the relationship between the positions and attitudes of the first imaging unit that performs the first imaging and the second imaging unit is known, the second 3D data may be generated using the attitude information of the first imaging unit (the position and attitude in the three-dimensional space). In other words, the second 3D data may be generated using the attitude information derived in the first 3D modeling processing. For example, the attitude information of the second imaging unit may be derived using the attitude information of the first imaging unit, and the second 3D data may be generated using the attitude information of the second imaging unit. Note that the second 3D data may be generated using a neural network that takes the attitude information of the first imaging unit, the second captured images, and the like as inputs.

The second 3D data may also be encoded. Any method may be used for the encoding.

<Manual Imaging>

As illustrated in Fig. 4, in the second 3D data generation processing 104, the second imaging may be performed not based on the imaging control information (e.g., manually). Such an imaging method will also be referred to as "manual imaging" herein. When manual imaging is performed, imaging timing information indicating the timing of that imaging is generated in (the second imaging performed in) the second 3D data generation processing 104, and is supplied to the second 3D modeling imaging control processing 103. In the second 3D modeling imaging control processing 103, the attitude information of the second imaging unit at the imaging timing is obtained on the basis of the imaging timing information, and the attitude information of the second imaging unit at that imaging timing is supplied to the scoring processing 102 as the imaging viewpoint information. Then, in the scoring processing 102, the score is calculated on the basis of the imaging viewpoint information. In this manner, (the attitude information of the second imaging unit corresponding to the angle of view of) the second captured image obtained from the manual imaging may be applied in (the scoring result derived through) the scoring processing 102.

<Camera Information>

Additionally, as illustrated in Fig. 4, in (the second imaging performed in) the second 3D data generation processing 104, camera information pertaining to the second imaging unit may be generated and supplied to the scoring processing 102. Then, in the scoring processing 102, the scoring may be performed on the basis of the camera information, and the scoring result may be generated. Any information may be included in the camera information. For example, the camera information may include internal parameters of the imaging units. The camera information may also include external parameters of the imaging units. The camera information may also include captured images. The camera information may also include angle of view information (focal length information) of the second captured images. The camera information may also include distortion correction information. The camera information may also include shading correction information. The camera information may also include breathing correction information. The camera information may also include focus position information. The camera information may also include image plane phase difference information. In other words, these items of information may be used for scoring (evaluating the accuracy of the second three-dimensional shape information that can be generated).

<Real-Time Processing>

The first 3D data generation processing 101 (first imaging and first 3D modeling processing), the scoring processing 102, and the second 3D modeling imaging control processing 103 in Fig. 4 may be executed in parallel with each other.

For example, in the first 3D data generation processing 101, the first 3D data of the part where the first imaging of the 3D object serving as the subject was performed may be generated sequentially. For example, using real-time 3D modeling as the first 3D modeling processing makes it possible to generate 3D data instantaneously (in real time) on the basis of captured images, depth information, and the like. In other words, in this case, the first 3D modeling can be performed and the first 3D data can be generated while performing the first imaging (while obtaining the first captured image). For example, as described with reference to Fig. 2, imaging of each part of the 3D object is performed while moving the camera in the vicinity of the 3D object serving as the subject, but the 3D modeling can be performed on the basis of the captured images, the depth, and the like before obtaining captured images of the entire 3D object. In other words, the 3D data of the parts where imaging has been performed can be generated sequentially.

Additionally, in the scoring processing 102, the scoring (evaluating the accuracy of the second three-dimensional shape information that can be generated using the second captured images generated from the second imaging performed thus far) may be performed for the first 3D data corresponding to those parts of the 3D object. In other words, each time the first 3D data corresponding to a part of the 3D object is generated through the first 3D modeling processing (before the first 3D data of the entire 3D object is generated), the scoring for the part of the 3D object where the first 3D data has been generated (the evaluation of the accuracy of the second 3D data that can be generated) may be performed sequentially. Doing so makes it possible to start the scoring processing 102 before the first 3D data generation processing 101 ends (before the first 3D data of the entire 3D object is generated). In other words, the first 3D data generation processing 101 and the scoring processing 102 can be executed in parallel.

Additionally, in the second 3D modeling imaging control processing 103, each time a scoring result is obtained by the scoring processing 102 (before the scoring result of the entire 3D object is obtained), the second imaging may be controlled on the basis of the obtained scoring result (the scoring result for the first 3D data corresponding to a part of the 3D object). Doing so makes it possible to start the second 3D modeling imaging control processing 103 before the scoring processing 102 ends (before the scoring result of the entire 3D object is obtained). In other words, the scoring processing 102 and the second 3D modeling imaging control processing 103 can be executed in parallel.

By combining the methods as described above, the first 3D data generation processing 101, the scoring processing 102, and the second 3D modeling imaging control processing 103 can be executed in parallel with each other.

For example, in Fig. 8, it is assumed that the time axis progresses from left to right in the figure, as indicated by the arrow. By executing the first imaging and the first 3D modeling processing in parallel in the first 3D data generation processing 101, the first 3D data of the parts where the first imaging was performed can be generated sequentially, as indicated by first 3D data 151-1, first 3D data 151-2, and first 3D data 151-3. Additionally, by executing the first 3D data generation processing (the first 3D modeling processing) and the scoring processing 102 in parallel, the scoring results for the parts where the first 3D data was generated can be derived sequentially, as indicated by a scoring result 152-1, a scoring result 152-2, and a scoring result 152-3. Furthermore, by executing the scoring processing 102 and the second 3D modeling imaging control processing 103 in parallel, the second imaging can be controlled at each timing on the basis of the scoring results obtained up to that point (the scoring result 152-1, the scoring result 152-2, and the scoring result 152-3).

In other words, executing the first 3D data generation processing 101, the scoring processing 102, and the second 3D modeling imaging control processing 103 in parallel with each other makes it possible to control the second imaging while performing the first imaging. In other words, the first imaging and the second imaging can be performed in parallel (instantaneously).

<Scoring>

A method for this scoring will be described here. Conditions for successful photogrammetry include, for example, the successful SfM, successful MVS, successful texturing (texture mapping), and the like. Conditions for successful SfM include, for example, successfully securing a baseline, successfully matching feature points, and the like. Additionally, conditions for successful MVS include being able to secure a baseline and the like. Conditions for successful texturing include, for example, obtaining a high-definition texture in the captured images, the surface to which the texture is to be applied being shot from as close to directly in front as possible, and the like. "Baseline" refers to the distance between the imaging viewpoint positions (the positions of the cameras at the time of imaging).

<Polygon Scoring>

Conditions for whether a polygon surface can be restored with SfM, MVS, or the like include, for example, minimum visibility conditions (whether the polygon is visible from the imaging position), favorable conditions for accuracy (conditions that improve accuracy), and favorable conditions for matching (detecting corresponding points) (conditions which make matching easier).

The minimum visibility conditions include, for example, the center of gravity of the target polygon being within the field of view (within the angle of view of the imaging) as seen from the viewpoint (imaging position), the inner product of the normal and the line of sight of the target polygon (the vector from the line of sight to the center of gravity of the target polygon) being at least positive and no other polygons blocking the line of sight being present, two or more lines of sight at which the target polygon can be seen (is visible) being present, and the like.

For example, in the case of Fig. 9, a line of sight 162 from a given viewpoint toward the center of gravity of the target polygon 160 is present, and thus the target polygon 160 is located in the field of view. Additionally, the inner product of the normal 161 and the line of sight 162 of the target polygon 160 is positive. Furthermore, the line of sight 162 reaches the target polygon 160 without being blocked by other polygons, and is therefore a "line of sight along which the target polygon 160 can be seen". The line of sight 162 therefore meets the minimum visibility conditions.

On the other hand, a line of sight 163 is blocked by a polygon 164 and is therefore not a "line of sight along which the target polygon 160 can be seen".

The favorable conditions for accuracy include, for example, a sufficiently long baseline, a sufficiently large ratio of the length of the baseline to the distance to the subject (baseline length/distance to subject), a sufficiently large number of visible viewpoints and a large distribution of angles formed thereby, and the like.

For example, in Fig. 10, a baseline 173 between a viewpoint 171 and a viewpoint 172 from which a target polygon 170 can be seen being sufficiently long (the viewpoint 171 and the viewpoint 172 being sufficiently distant from each other), the ratio of the length of the baseline 173 to a distance 174 to the subject being sufficiently high (the value of "baseline length/distance to subject" being sufficiently high), and the like are conditions that improve the accuracy.

In the example on the left side of Fig. 11, the viewpoints from which a target polygon 180 can be seen are two viewpoints, namely a viewpoint 181 and a viewpoint 182. However, in the example on the right side of Fig. 11, the viewpoints from which a target polygon 180 can be seen are six viewpoints, namely the viewpoint 181 to a viewpoint 186. In other words, the example on the right side has more visible viewpoints than the example on the left side, and a greater distribution of angles formed thereby. A higher number of visible viewpoints enables more robust triangulation from a plurality of other information items, which can be expected to improve the accuracy. The example on the right therefore satisfies the conditions for improving accuracy better than the example on the left.

The favorable conditions for matching include, for example, the angle formed by the normal of the target polygon and the line of sight from the viewpoint to the center of gravity of the target polygon being sufficiently small, the ratio of the other viewpoint in the pair to the distance to the subject being sufficiently low, the presence of a texture that can be used for matching, and the like.

In the example on the left side of Fig. 12, the angle formed by a normal 191 and a viewpoint 192 of a target polygon 190 is smaller than the angle formed by the normal 191 and a viewpoint 193. The feature points of the surface of the target polygon 190 are therefore easier to detect correctly from the viewpoint 192 than from the viewpoint 193. In the example on the right side of Fig. 12, the distance from a viewpoint 194 to the subject (the target polygon 190) is significantly long compared to the distance from a viewpoint 195 to the subject (the target polygon 190). In other words, the ratio of the distance to the subject between the viewpoint 194 and the viewpoint 195 is large. In such a case, even if the baseline is long, the appearance of the feature points of the surface of the target polygon 190 from the two viewpoints will differ greatly, which may make the matching more difficult. In other words, the viewpoints for which the ratio of the distance to the subject is smaller, such as the viewpoint 192 and the viewpoint 193 in the example on the left side of Fig. 12, make the matching easier.

<Texture Scoring>

Conditions for whether sufficient viewpoints for texturing are present for a polygon surface include, for example, minimum conditions (whether the surface is visible) and favorable conditions for texturing (conditions that enable the texturing to look better).

The minimum conditions include, for example, the presence of a viewpoint that satisfies the minimum visibility condition described above and the like.

The favorable conditions for texturing include, for example, the angle formed by the normal of the target polygon and the line of sight from the viewpoint to the center of gravity of the target polygon being small, a sufficient resolution being obtainable when the distance from the viewpoint to the subject is below a certain level, and the like.

Note that the conditions described above are merely examples. In the scoring, any conditions may be applied. Additionally, the content of the conditions may be any content. For example, conditions described above may be omitted, or conditions other than the conditions described above may be added.

<Scoring of Second Captured Images>

The second captured images obtained from the second imaging may be scored. For example, the second captured images may be scored on the basis of the camera information. For example, whether the second captured image is in focus at a desired position may be evaluated. Whether hand shake is present may also be evaluated. Whether the exposure is appropriate may also be evaluated. Whether the feature points are easy to obtain may also be evaluated.

<Scoring Calculation Example>

For example, as illustrated in Fig. 13, a distance between a target captured image 201 and a target polygon 202 is represented by d. An ideal distance to the subject is represented by $d_{opt}$. Additionally, $c_d$ represents a predetermined coefficient. In this case, a score $s_d$ may be derived as indicated by the following Formula (1).
[Math. 1]

$$s_d = \frac{1}{1 + c_d \left( d - d_{opt} \right)^2}$$

$$\dots (1)$$

The center of the target polygon 202 is represented by $c_p$. The line of sight from the target captured image 201 to the center $c_p$ is represented by $v_p$. The normal of the target polygon 202 is represented by $n_p$. The angle formed by the line of sight $v_p$ and the normal $n_p$ is represented by $\alpha$. In this case, the angle $\alpha$ can be derived as indicated by the following Formula (2). Then, a score $s_\alpha$ based on the angle $\alpha$ may be derived as indicated by the following Formula (3). Note that $c_\alpha$ represents a predetermined coefficient.
[Math. 2]

$$\alpha = \cos^{-1} \frac{v_p \cdot n_p}{\left| v_p \right| \cdot \left| n_p \right|}$$

$$\dots (2)$$

[Math. 3]

$$s_\alpha = \frac{2}{1 + \exp c_\alpha \alpha^2}$$

$$\dots (3)$$

The optical axis of the camera (the normal vector of the target captured image, starting at the center of the target captured image 201) is represented by $v_c$. The angle formed by the optical axis $v_c$ and the line of sight $v_p$ is represented by $\beta$. In this case, the angle $\beta$ can be derived as indicated by the following Formula (4). Then, a score $s_\beta$ based on the angle $\beta$ may be derived as indicated by the following Formula (5). Note that $c_\beta$ represents a predetermined coefficient.
[Math. 4]

$$\beta = \cos^{-1} \frac{v_c \cdot v_p}{|v_c| \cdot |v_p|}$$

$$\dots (4)$$

[Math. 5]

$$s_\beta = \frac{2}{1 + \exp c_\beta \beta^2}$$

$$\dots (5)$$

Using the scores $s_d$, $s_\alpha$, and $s_\beta$ derived as described above, a total score $s_{total}$ may be derived as indicated by the following Formula (6).
[Math. 6]

$$S_{total} = S_d \cdot S_\alpha \cdot S_\beta$$

$$\dots (6)$$

Then, among the total scores for the viewpoints derived as described above, a weighted sum of the total scores of the top two viewpoints may be used as the final score.

Note that this calculation method is merely an example. Any calculation method may be used in the scoring processing 102, and the method is not limited to this example.

<Example of Configuration for Executing Processing>

The processes described above in Fig. 4 may be executed by any device. For example, the above-described first 3D modeling processing of the first 3D data generation processing 101, the scoring processing 102, and the second 3D modeling imaging control processing 103 may be executed by an information processing device.

In other words, the information processing device may include: a first 3D modeling processing unit that, on the basis of a first captured image generated by first imaging of a 3D object, generates first three-dimensional shape information expressing a three-dimensional shape of the 3D object; a scoring processing unit that, using the first three-dimensional shape information, evaluates an accuracy of second three-dimensional shape information that can be generated using second captured images generated from second imaging performed thus far, and generates a scoring result; and an imaging control unit that, on the basis of the scoring result, controls the second imaging of the 3D object. In this section, this information processing device will also be referred to as a "first information processing device".

Additionally, an information processing method executed by the first information processing device may include: generating, on the basis of a first captured image generated by first imaging of a 3D object, first three-dimensional shape information expressing a three-dimensional shape of the 3D object; evaluating, using the first three-dimensional shape information, an accuracy of second three-dimensional shape information that can be generated using second captured images generated from second imaging performed thus far, and generating a scoring result; and controlling, on the basis of the scoring result, the second imaging of the 3D object.

Doing so makes it possible to image the 3D object (perform the second imaging) at a more appropriate position and attitude, and to execute the second 3D modeling processing using the second captured images obtained. Accordingly, more accurate 3D data can be generated while suppressing an increase in the load of the 3D modeling (the workload, processing amount, and the like). In other words, the 3D modeling can be performed more easily.

The first 3D modeling processing unit may include: an attitude information generating unit that, on the basis of the first captured image and an acceleration and an angular velocity of the first imaging unit, generates attitude information indicating a position and an attitude of the first imaging unit; and a three-dimensional shape generating unit that, on the basis of the attitude information and a depth of the 3D object, generates the first three-dimensional shape information of the 3D object.

Additionally, in the first information processing device, the first imaging of the first 3D data generation processing 101 described above may further be performed. For example, the first information processing device may further include a first imaging unit. Additionally, the first information processing device including the first imaging unit may include a depth detection unit that detects a depth, an inertia measurement unit that detects an acceleration and an angular velocity of the first imaging unit, or both.

Additionally, in the first information processing device, the second imaging of the second 3D data generation processing 104 described above may further be performed. For example, the first information processing device may further include a second imaging unit.

The second captured image generated from this second imaging may be encoded. For example, the first information processing device including the second imaging unit may include an encoding unit that encodes the second captured image generated by the second imaging unit. The encoded second captured image may be supplied to another information processing device through communication, or may be stored in a storage medium.

Additionally, in the first information processing device, the second 3D modeling processing of the second 3D data generation processing 104 described above may further be performed. For example, the first information processing device including the second imaging unit may further include a second 3D modeling processing unit that generates second three-dimensional shape information on the basis of the second captured image generated by the second imaging unit. For example, the second 3D modeling processing unit may include a corresponding point position deriving unit that derives three-dimensional positions of corresponding points among a plurality of the second captured images, and a three-dimensional point adding unit that adds a three-dimensional point on the basis of the three-dimensional positions of the corresponding points. In the second 3D modeling processing, meshing and texturing may further be performed as post-processing. For example, the second three-dimensional shape information may include a mesh indicating a three-dimensional shape of the 3D object by vertices and connections and a texture applied to a surface of the mesh.

The second 3D data generated through the second 3D modeling processing may be encoded. For example, the first information processing device including the second imaging unit and the second 3D modeling processing unit may further include an encoding unit that encodes the second three-dimensional shape information generated by the second 3D modeling processing unit. The encoded second three-dimensional shape information (second 3D data) may be supplied to another information processing device through communication, or may be stored in a storage medium.

The second imaging of the second 3D data generation processing 104 described above may be performed in a second information processing device different from the first information processing device. For example, the first information processing device may include a communication unit that communicates with a second information processing device (an imaging device) including the second imaging unit; the imaging control unit may generate imaging control information that controls the second imaging, and the communication unit may supply the imaging control information to the second information processing device.

In this case, the first information processing device may obtain a second captured image generated in the second information processing device. For example, the first information processing device including the communication unit may obtain the second captured image supplied from the second information processing device. The second captured image may be encoded. For example, the first information processing device including the communication unit may include an encoding unit that encodes the second captured image obtained by the communication unit. The encoded second captured image may be supplied to another information processing device through communication, or may be stored in a storage medium.

The second captured image supplied from the second information processing device may be encoded. In other words, the communication unit may obtain encoded data of the second captured image. The encoded data may be supplied to another information processing device through communication, or may be stored in a storage medium. The first information processing device may decode the encoded data obtained by the communication unit and generate (restore) the second captured image. For example, the first information processing device including the communication unit may include a decoding unit that decodes the encoded data of the second captured image obtained by the communication unit.

When the second imaging is performed in the second information processing device in this manner as well, the second 3D modeling processing of the second 3D data generation processing 104 described above may further be performed in the first information processing device. For example, the first information processing device including the communication unit may further include a second 3D modeling processing unit that generates second three-dimensional shape information on the basis of the second captured image obtained by the communication unit. For example, the second 3D modeling processing unit may include a corresponding point position deriving unit that derives three-dimensional positions of corresponding points among a plurality of the second captured images, and a three-dimensional point adding unit that adds a three-dimensional point on the basis of the three-dimensional positions of the corresponding points. In the second 3D modeling processing, meshing and texturing may further be performed as post-processing. For example, the second three-dimensional shape information may include a mesh indicating a three-dimensional shape of the 3D object by vertices and connections and a texture applied to a surface of the mesh.

The second 3D data generated through the second 3D modeling processing may be supplied to another information processing device through communication, or may be stored in a storage medium. This second 3D data may also be encoded. For example, the first information processing device including the communication unit and the second 3D modeling processing unit may further include an encoding unit that encodes the second three-dimensional shape information generated by the second 3D modeling processing unit. The generated encoded data of the second three-dimensional shape information (second 3D data) may be supplied to another information processing device through communication, or may be stored in a storage medium.

Incidentally, as described above, the second imaging can be performed through manual imaging. In this case, the second captured image obtained through the manual imaging may be usable in the second 3D modeling processing. In the scoring processing 102, the accuracy of the second three-dimensional shape information that can be generated using the second captured images obtained thus far is evaluated, as described above. At this time, the second captured image obtained through the manual imaging may be included in the second captured images. In other words, attitude information of the manual imaging may be applied in the scoring processing 102. For example, the scoring processing unit of the first information processing device may generate a scoring result on the basis of a position and an attitude of the second information processing device corresponding to a timing of the second imaging indicated by imaging timing information that indicates a timing of the second imaging not based on the imaging control information. For example, the imaging control unit may obtain the attitude information of the second imaging unit at that imaging timing on the basis of that imaging timing information, and the scoring processing unit may calculate the score on the basis of that attitude information. As a result, the attitude information of the manual imaging is reflected in the scoring result.

In this case, the second imaging (manual imaging) may be performed in the first information processing device, or may be performed in the second information processing device. When the first information processing device includes the second imaging unit, for example, the second imaging unit may generate imaging timing information indicating the timing when the manual imaging is performed, and supply the imaging timing information to the imaging control unit. When the first information processing device includes the communication unit, for example, the communication unit may obtain imaging timing information supplied from the second information processing device and supply the imaging timing information to the imaging control unit.

Doing so makes it possible to control the second imaging to be performed at a more appropriate position and attitude on the basis of the imaging timing information.

Incidentally, in the first information processing device, as described above, camera information pertaining to the second imaging unit may be applied in the scoring processing 102. For example, the scoring processing unit of the first information processing device may generate the scoring result on the basis of the camera information. In this case, the second imaging may be performed in the first information processing device, or in the second information processing device. When the first information processing device includes the second imaging unit, for example, the second imaging unit may generate the camera information and supply the camera information to the scoring processing unit. When the first information processing device includes the communication unit, for example, the communication unit may obtain camera information supplied from the second information processing device and supply the camera information to the scoring processing unit.

Doing so makes it possible to control the second imaging to be performed at a more appropriate position and attitude on the basis of the camera information.

Incidentally, the second information processing device may perform the second imaging of the second 3D data generation processing 104 described above. For example, the second information processing device may include a second imaging unit and a communication unit that communicates with the first information processing device; the communication unit may obtain imaging control information supplied from the first information processing device, and the second imaging unit may image the 3D object on the basis of the imaging control information and generate a second captured image. This imaging control information is information which is generated on the basis of the scoring result derived on the basis of the first 3D data and which controls the second imaging.

In an information processing method executed by the second information processing device, imaging control information supplied from a first information processing device may be obtained, second imaging may be performed on the basis of the imaging control information, and a second captured image for generating second 3D data may be generated.

Doing so makes it possible to image the 3D object (perform the second imaging) at a more appropriate position and attitude, and to execute the second 3D modeling processing using the second captured images obtained. Accordingly, more accurate 3D data can be generated while suppressing an increase in the load of the 3D modeling (the workload, processing amount, and the like). In other words, the 3D modeling can be performed more easily.

The generated second captured image may be supplied to the first information processing device. For example, the communication unit may supply the second captured image generated by the second imaging unit to the first information processing device. This second captured image is a captured image for generating three-dimensional shape information expressing a three-dimensional shape of the 3D object. The second captured image may also be encoded. For example, the second information processing device may include an encoding unit that encodes the second captured image generated by the second imaging unit. The communication unit may then supply the encoded data of the second captured image generated by the encoding unit to the first information processing device. The second captured image (or the encoded data of the second captured image) may be supplied to an information processing device other than the first information processing device. For example, the communication unit may supply the second captured image (or the encoded data of the second captured image) to the other information processing device. The second captured image (or the encoded data of the second captured image) may also be stored in a storage medium. For example, the second information processing device may include a storage unit that stores the encoded data of the second captured image generated by the encoding unit.

Additionally, the second information processing device may perform the second 3D modeling processing described above. In other words, in the second information processing device, second 3D modeling processing may be performed using the second captured image generated by the second imaging, and second 3D data may be generated. For example, the second information processing device may further include a second 3D modeling processing unit that generates second three-dimensional shape information (second 3D data) expressing the three-dimensional shape of the 3D object on the basis of the second captured image generated by the second imaging unit. For example, the second 3D modeling processing unit may include a corresponding point position deriving unit that derives three-dimensional positions of corresponding points among a plurality of the second captured images, and a three-dimensional point adding unit that adds a three-dimensional point on the basis of the three-dimensional positions of the corresponding points. In the second 3D modeling processing, meshing and texturing may further be performed as post-processing. For example, the second three-dimensional shape information may include a mesh indicating a three-dimensional shape of the 3D object by vertices and connections and a texture applied to a surface of the mesh.

The second 3D data generated through the second 3D modeling processing may be supplied to another information processing device through communication, or may be stored in a storage medium. This second 3D data may also be encoded. For example, the second information processing device including the second 3D modeling processing unit may further include an encoding unit that encodes the second three-dimensional shape information generated by the second 3D modeling processing unit. The generated encoded data of the second three-dimensional shape information (second 3D data) may be supplied to another information processing device through communication, or may be stored in a storage medium.

Incidentally, as described above, the second imaging can be performed through manual imaging. In this case, the second captured image obtained through the manual imaging may be usable in the second 3D modeling processing. In the scoring processing 102, the accuracy of the second three-dimensional shape information that can be generated using the second captured images obtained thus far is evaluated, as described above. At this time, the second captured image obtained through the manual imaging may be included in the second captured images. In other words, attitude information of the manual imaging may be applied in the scoring processing 102.

In this case, imaging timing information indicating the timing of the manual imaging may be generated in the second information processing device and supplied to the first information processing device. For example, the second imaging unit of the second information processing device may generate the imaging timing information indicating the timing when the manual imaging is performed, and the communication unit may supply the imaging timing information to the first information processing device.

Doing so makes it possible to image the 3D object (perform the second imaging) at a more appropriate position and attitude on the basis of the imaging timing information.

Incidentally, as described above, camera information pertaining to the second imaging unit may be applied in the scoring processing 102. For example, the second imaging unit of the second information processing device may generate the camera information, and the communication unit may supply the camera information to the first information processing device. In this case, the communication unit may obtain imaging control information generated on the basis of the camera information, and the second imaging unit may perform the second imaging on the basis of the imaging control information. In an information processing method executed by the second information processing device, camera information pertaining to the second imaging unit may be generated, and the camera information may be supplied to the first information processing device. The imaging control information generated on the basis of the camera information may be obtained, and the second imaging may be performed on the basis of the imaging control information.

Doing so makes it possible to image the 3D object (perform the second imaging) at a more appropriate position and attitude on the basis of the camera information.

<3. Imaging Guidance Output>

<Imaging Guidance Output Processing for Second 3D Modeling>

Guidance information for assisting the imaging for the second instance of 3D modeling may be output instead of controlling the imaging for the second instance of 3D modeling. For example, in Fig. 4, the first 3D data generation processing 101 and the scoring processing 102 may be executed, and second 3D modeling imaging guidance output processing 105 may further be executed. In this case, the first 3D data generation processing 101 and the scoring processing 102 are executed in the same manner as described above in <2. Imaging Control>. However, the scoring processing 102 supplies the scoring result to the second 3D modeling imaging guidance output processing 105.

In the second 3D modeling imaging guidance output processing 105, guidance information for the second imaging is generated on the basis of the scoring result obtained from the scoring processing 102, and the output of the guidance information is controlled and output from an output device.

A user or the like performs the second imaging manually with reference to such guidance information. In other words, in this case, the second imaging is manual imaging (imaging not based on imaging control information). By performing the second imaging in this manner, a second captured image captured at a more appropriate position and attitude can be generated. The second 3D data generation processing 104 (second imaging and second 3D modeling processing) is then executed using the second captured image, and the intended second 3D data is generated. In other words, the second 3D modeling processing can be caused to be executed using second captured images captured at a more appropriate position and attitude. Accordingly, more accurate 3D data can be generated while suppressing an increase in the load of the 3D modeling (the workload, processing amount, and the like). In other words, the 3D modeling can be performed more easily.

<Generation of Guidance Information>

To generate this guidance information, in the second 3D modeling imaging guidance output processing 105, the position and attitude at which the second imaging should be performed (a more appropriate position and attitude as the position and attitude at which the second imaging is performed) are obtained on the basis of the scoring result. Any method may be used to determine the position and attitude at which the second imaging should be performed. For example, the same method may be used as in the second 3D modeling imaging control processing 103 described above. For example, (a range of) the position and attitude that can improve the score of the insufficient part of the second imaging (the gray part) may be specified on the basis of the scoring result.

Additionally, in the second 3D modeling imaging guidance output processing 105, whether a current position and attitude are the position and attitude at which the second imaging should be performed may be determined on the basis of variation in the scoring result due to the current attitude information (position and attitude) of the second imaging unit. For example, if, as a result of applying (the attitude information of) the second captured image obtained when the second imaging unit performs the second imaging at the current position and attitude to the scoring, that score is higher than the score from before adding that second captured image by a predetermined threshold, the current position and attitude may be determined to be the position and attitude at which the second imaging should be performed. In other words, in this case, in the scoring processing 102, a scoring result is derived for both a case where the second imaging performed by the second imaging unit at the current position and attitude is included in the "second imaging performed thus far" and a case where the second imaging is not included, and the scoring results are compared. Accordingly, in this case, in the scoring processing 102, the scoring is performed on the basis of the current attitude information (imaging viewpoint information) of the second imaging unit.

This imaging viewpoint information may be supplied by the second 3D modeling imaging guidance output processing 105. As described above, in this case, the second 3D modeling imaging guidance output processing 105 is executed, and the second imaging is performed manually. Accordingly, as in the case described above in <2. Imaging Control>, imaging timing information indicating the timing of that imaging is generated in (the second imaging performed in) the second 3D data generation processing 104, and is supplied to the second 3D modeling imaging guidance output processing 105. In the second 3D modeling imaging guidance output processing 105, on the basis of that imaging timing information, the attitude information of the second imaging unit at that imaging timing may be obtained, and the attitude information of the second imaging unit at that imaging timing may be supplied to the scoring processing 102 as the imaging viewpoint information.

Additionally, if the relationship between the positions and attitudes of the first imaging unit and the second imaging unit is known, the attitude information of the first imaging unit may be supplied to the scoring processing 102 as the imaging viewpoint information instead of the attitude information of the second imaging unit.

Additionally, in the second 3D modeling imaging guidance output processing 105, whether the position and attitude are the position and attitude at which the second imaging should be performed may be determined on the basis of a rate of overlap with the imaging ranges of the second imaging performed thus far.

Note that as described above with reference to Fig. 6, the value of the rate of overlap at which the second 3D modeling processing can be performed more easily (at which more precise 3D modeling processing can be performed) also depends on the three-dimensional shape of the 3D object. Accordingly, when determining the position and attitude at which the second imaging should be performed, if the rate of overlap with the second captured images obtained thus far is taken into account, it is desirable to also take into account the three-dimensional shape (the first 3D data) and the like of the 3D object (the position and attitude at which the second imaging should be performed can be determined more precisely).

Additionally, as described above with reference to Fig. 7, when determining the position and attitude at which the second imaging should be performed, the distance from the subject (3D object) at that imaging position may also be controlled. At this time, the distance may be controlled in accordance with (the complexity of) the three-dimensional shape of the 3D object. Doing so makes it possible to suppress an unnecessary increase in the number of instances of the second imaging while also suppressing a drop in the precision of the second 3D modeling processing (the accuracy of the second 3D data). In other words, the second imaging can be controlled to be performed at a more appropriate position and attitude.

In the second 3D modeling imaging guidance output processing 105, guidance information is generated on the basis of the position and attitude at which the second imaging should be performed, obtained as described above. This guidance information may be any type of information, and for example, image information may be included, and audio information may be included.

Additionally, the guidance information is output such that the content of the guidance information is presented to the user or the like who performs the second imaging, for example. The output device may be any kind of device, and for example, a monitor for displaying image information may be included, and a speaker for outputting audio information may be included.

<Guidance Information>

The content of the guidance information will be described next. The content of the guidance information may be any content. For example, information indicating a more appropriate position and attitude to the user for the second imaging may be included in the guidance information.

Assume that, for example, the first 3D data generation processing 101 in Fig. 4 generates first 3D data 120 illustrated in Fig. 5. Assume also that second imaging has been performed at the positions and attitudes of cameras 121-1 to 121-3 for the 3D object corresponding to the first 3D data 120. In this case, the scoring processing 102 evaluates the upper side of the first 3D data 120 in the figure as having a relatively high score, and the lower side of the first 3D data 120 in the figure (the gray part) as having a relatively low score. From this scoring result, it is clear that the imaging of the lower side of the 3D object corresponding to the first 3D data 120 in the figure (e.g., the gray part) is insufficient.

Accordingly, in the second 3D modeling imaging guidance output processing 105, guidance information is generated and output that guides the second imaging such that a captured image of the gray part that is insufficient for that imaging is obtained. In other words, this guidance information guides the second imaging such that the 3D object is imaged from the lower side in the figure. For example, the position and attitude of the camera 121-4 are determined to be more appropriate as the position and attitude at which to perform the second imaging, and the user or the like is notified to that effect.

Doing so makes it possible for the user to image the 3D object at a more appropriate position and attitude by performing the second imaging according to the guidance information. In other words, 3D modeling (the second 3D data generation processing 104) can be executed using that captured image. Accordingly, more accurate 3D data can be generated while suppressing an increase in the load of the 3D modeling. In other words, the 3D modeling can be performed more easily.

<Display of Scoring Result>

Note that the guidance information may include information indicating the scoring result. In other words, in the second 3D modeling imaging guidance output processing 105, guidance information including information indicating the scoring result may be generated, and an image indicating the scoring result may be displayed on a monitor as the guidance information. Information indicating a scoring result from within the current angle of view of the second imaging unit may also be included in the guidance information. In other words, in the second 3D modeling imaging guidance output processing 105, guidance information including information indicating the scoring result from within the angle of view of the second imaging unit may be generated on the basis of the current position and attitude of the second imaging unit, and an image indicating the scoring result may be displayed on a monitor as the guidance information.

For example, assume that the second imaging unit is at the position of a camera 211, and is in an attitude for imaging within a dotted line frame 212 with respect to first 3D data 210 that has been scored, as illustrated in Fig. 14. In this case, in the second 3D modeling imaging guidance output processing 105, an image indicating the scoring result from within the current angle of view (imaging range) of the second imaging unit, i.e., an image indicating a part of the first 3D data 210 within the dotted line frame 212, may be displayed on the monitor as the guidance information, as indicated by an image 213. Doing so makes it possible to display the scoring result in a state corresponding to the current position and attitude of the second imaging unit. The user can therefore more easily ascertain the appropriate position and attitude for the second imaging.

The guidance information (the image indicating the scoring result from within the current angle of view of the second imaging unit) may also be displayed superimposed on a captured image generated by the second imaging unit. For example, the image 213 illustrated in Fig. 14 (the image indicating the scoring result from within the current angle of view of the second imaging unit) may be displayed superimposed on the captured image generated by the second imaging unit at the current angle of view. Doing so makes it possible to display captured images having the same angle of view superimposed with the guidance information (the image indicating the scoring result) on the monitor. On the basis of such a display, the user can more easily associate the 3D object in real space with the scoring result. The user can therefore more easily ascertain the appropriate position and attitude for the second imaging. Furthermore, an overhead image indicating the scoring result of the entire 3D object may be displayed. Displaying such an overhead image makes it easier for the user to ascertain which part of the entire 3D object is the part included in the captured image of the 3D object currently displayed.

<Display of Overlapping Region>

Information indicating an overlapping region in which imaging ranges of a plurality of second captured images overlap may also be included in the guidance information. For example, in the second 3D modeling imaging guidance output processing 105, guidance information including information indicating an overlapping region in which the imaging ranges overlap among a plurality of instances of the second imaging may be generated, and an image indicating the overlapping region may be displayed as the guidance information. For example, on the left side of Fig. 15, assume that when the second imaging unit is at the position and attitude of a camera 221-1, the imaging range thereof is an imaging range 222-1. Furthermore, assume that when the second imaging unit is at the position and attitude of a camera 221-2, the imaging range thereof is an imaging range 222-2. In this case, the imaging range 222-1 and the imaging range 222-2 partially overlap with each other. In this manner, the presence of a region in which the imaging ranges overlap among a plurality of the second captured images makes it possible to detect corresponding points among the images. In other words, the presence of an appropriate overlapping region among the plurality of the second captured images makes it possible to generate the second 3D data with high accuracy (suppress a drop in the accuracy of the second 3D data) in the second 3D modeling processing.

Accordingly, it is desirable to generate the second captured images (perform the second imaging) such that an appropriate overlapping region is present among the plurality of second captured images. As described above, displaying an image indicating such an overlapping region on the monitor as the guidance information makes it possible for a user or the like operating the second imaging unit to determine the position and attitude of the second imaging while taking the overlapping region into account on the basis of the guidance information. In other words, the user or the like can more easily perform the second imaging at a position and attitude where an appropriate overlapping region is present among the plurality of the second captured images. In other words, the user or the like can more easily perform the second imaging at an appropriate position and attitude.

Note that the image indicating the overlapping region may indicate the overlapping region in any manner. For example, the overlapping region may be indicated by color, density, a pattern, a graphic, characters, symbols, shapes, or the like. For example, the overlapping region may be displayed with emphasis relative to other regions (expressed in a more subjectively prominent manner than the other regions).

The overlapping region may also be an overlapping region between the current angle of view of the second imaging unit and the imaging ranges of the second captured images obtained thus far. In other words, an image indicating an overlapping region between the second captured images obtained thus far and the second captured image to be generated thereafter may be displayed as the guidance information. For example, in the second 3D modeling imaging guidance output processing 105, on the basis of the current position and attitude of the second imaging unit, guidance information including information indicating an overlapping region between the angle of view of the second imaging unit and the imaging ranges of the second captured images obtained thus far may be generated, and an image indicating that overlapping region may be displayed on a monitor as the guidance information. For example, in Fig. 15, assume that the second imaging unit is at the position of the camera 221-2, and is in an attitude for imaging the imaging range 222-2. In this case, an image 223 indicating an overlapping region 224 within the imaging range 222-2 may be generated and displayed as the guidance information.

Doing so makes it possible to display the overlapping region in a state corresponding to the current position and attitude of the second imaging unit. Accordingly, on the basis of this guidance information, the user or the like operating the second imaging unit can more easily grasp how the imaging ranges of the second captured images obtained thus far will overlap with the imaging range of a second captured image obtained by performing the second imaging at the current position and attitude. In other words, the user or the like can more easily perform the second imaging to appropriately overlap with the imaging ranges of the second captured images obtained thus far. In other words, the user or the like can more easily perform the second imaging at an appropriate position and attitude.

The guidance information (the overlapping region where the imaging ranges overlap among the second captured images, or an image indicating the overlapping region between the current angle of view of the second imaging unit and the imaging ranges of the second captured images obtained thus far) may also be displayed superimposed on a captured image generated by the second imaging unit. For example, the image 223 illustrated in Fig. 15 (the image indicating the overlapping region between the current angle of view of the second imaging unit and the imaging ranges of the second captured images obtained thus far) may be displayed superimposed on a captured image generated by the second imaging unit at the current angle of view.

Doing so makes it possible to display captured images having the same angle of view and the guidance information (the image indicating the overlapping region between the current angle of view of the second imaging unit and the imaging ranges of the second captured images obtained thus far) superimposed on the monitor. On the basis of such a display, the user can more easily associate the 3D object in real space with the overlapping region. The user can therefore more easily ascertain the appropriate position and attitude for the second imaging.

Furthermore, an image indicating a rate of overlap, which indicates the percentage of the angle of view occupied by the overlapping region, may be displayed. The rate of overlap may be expressed as a numerical value, for example, or may be expressed by color, density, a pattern, or the like, for example. Such a display makes it possible for the user to more intuitively ascertain the extent of the overlap.

<Display of Imaging Assistance Image>

An imaging assistance image for assisting the second imaging may also be included in the guidance information. For example, in the second 3D modeling imaging guidance output processing 105, guidance information including an imaging assistance image for assisting the second imaging may be generated, and the imaging assistance image may be displayed as the guidance information. The content of the imaging assistance image may be any content.

For example, recommended imaging position and attitude guidance indicating a recommended imaging position and attitude, which are a recommended position and attitude for the second imaging, may be included in the imaging assistance image. For example, in the second 3D modeling imaging guidance output processing 105, a recommended imaging position and attitude, which are a recommended position and attitude for the second imaging, may be derived on the basis of the scoring result, and recommended imaging position and attitude guidance indicating the recommended imaging position and attitude may be displayed as the guidance information (the imaging assistance image).

For example, if the current position and attitude of the second imaging unit are the same as the recommended imaging position and attitude, an image to that effect may be displayed as the recommended imaging position and attitude guidance. In other words, if, for example, the current position and attitude match the recommended imaging position and attitude due to the user or the like moving the second imaging unit, the user or the like may be notified to that effect. Any method may be used for the notification. For example, when the current position and attitude of the second imaging unit match the recommended imaging position and attitude, an image completely different from the image displayed up to that point, such as a white image or the like, may be displayed. Alternatively, instead of such an image, the current position and attitude of the second imaging unit being the recommended imaging position and attitude may be indicated using characters, a pattern, symbols, or the like. On the basis of such a display (the recommended imaging position and attitude guidance), the user or the like operating the second imaging unit can easily ascertain that the current position and attitude of the second imaging unit are the recommended imaging position and attitude. The user or the like can therefore more easily perform the second imaging at an appropriate position and attitude.

An image indicating a relative position and a relative attitude of the recommended imaging position and attitude based on the second imaging unit may also be displayed as the recommended imaging position and attitude guidance. In other words, which direction the recommended imaging position and attitude are in, how far the recommended imaging position and attitude are, and the like relative to the current position and attitude of the second imaging unit may be indicated by characters, a pattern, symbols, or the like, for example. On the basis of such a display, even if the current position and attitude of the second imaging unit are not the recommended imaging position and attitude, the user or the like operating the second imaging unit can more easily move the second imaging unit to approach the recommended imaging position and attitude. The user or the like can therefore more easily perform the second imaging at an appropriate position and attitude.

The recommended imaging position and attitude guidance may be displayed superimposed on a captured image generated by the second imaging unit. Such a display makes it possible for the user to more easily associate the 3D object in real space with the recommended imaging position and attitude guidance. The user can therefore more easily ascertain the appropriate position and attitude for the second imaging.

<Imaging Guidance Based on Complexity of Subject>

As described above with reference to Fig. 7, as the position of the second imaging, the appropriate distance from the 3D object depends on the three-dimensional shape of the 3D object. Accordingly, the recommended imaging position and attitude of the second imaging derived in the second 3D modeling imaging guidance output processing 105 may include a distance from the 3D object (the subject). When deriving the recommended imaging position and attitude of the second imaging in the second 3D modeling imaging guidance output processing 105, the distance from the 3D object may be derived in accordance with the complexity of the three-dimensional shape of the 3D object.

Any method may be used to derive the complexity of the three-dimensional shape of the 3D object, and for example, the method described above in <2. Imaging Control> may be used. Additionally, any method may be used to derive the distance from the 3D object based on the complexity of the three-dimensional shape of the 3D object (the recommended imaging position and attitude). For example, as the complexity of the three-dimensional shape of the 3D object increases, a position closer to the 3D object may be set as the recommended imaging position and attitude. Likewise, as the complexity of the three-dimensional shape of the 3D object decreases, a position further from the 3D object may be set as the recommended imaging position and attitude.

A detection frame may also be displayed in the guidance information displayed on the monitor, as illustrated in Fig. 16. In Fig. 16, a display image 230 is guidance information displayed on the monitor by the second 3D modeling imaging guidance output processing 105. First 3D data 231 that has been scored and a detection frame 232 are displayed in the display image 230. Displaying the detection frame 232 in this manner makes it easier for the user to perform operations for bringing the second imaging unit closer to the 3D object (the subject) or away from the 3D object, for a part of interest of the subject, according to the complexity of the three-dimensional shape of the 3D object. Of course, the detection frame need not be displayed.

For example, a captured image generated by the second imaging unit may be displayed on the monitor, the detection frame and the first 3D data corresponding to the 3D object (the subject) may further be displayed as the guidance information superimposed on the captured image, and the part of the first 3D data (the 3D object) to be imaged may be indicated. The user may then move the second imaging unit to align the part of the first 3D data to be imaged with the detection frame in that display, such that the second imaging unit is at an appropriate position and attitude for performing the second imaging.

For example, as illustrated in Figs. 17 to 19, a display image 240 may be displayed on the monitor, and a detection frame 241, as well as a part 242 of the 3D object to be imaged, derived on the basis of the first 3D data, may be displayed in the display image 240. The user may then move the second imaging unit such that a part 242 to be imaged approaches (and ideally, matches) the detection frame 241 in the display image 240, such that the second imaging unit is at an appropriate position and attitude for performing the second imaging.

For example, on the left side of Fig. 17, the part 242 to be imaged is displayed smaller than the detection frame 241. In this case, the user brings the second imaging unit closer to the 3D object such that the part 242 to be imaged is displayed larger, and causes the display of the part 242 to be imaged to match (or approximately match) the detection frame 241, as illustrated on the right side of Fig. 17. Moving the second imaging unit in this manner brings the second imaging unit to an appropriate position and attitude for performing the second imaging.

Additionally, in the example on the left side of Fig. 18, the imaging direction is shifted from the normal direction of the part 242 to be imaged (the part 242 to be imaged and the detection frame 241 (the imaging plane) are not directly facing each other). In this case, the user changes the orientation of the second imaging unit (i.e., the imaging direction) or the like, and causes the part 242 to be imaged to face (more directly face) the detection frame 241, as illustrated on the right side of Fig. 18. Moving the second imaging unit in this manner brings the second imaging unit to an appropriate position and attitude for performing the second imaging.

Additionally, in the example on the left side of Fig. 19, the height of the part 242 to be imaged is different from the detection frame 241. In this case, the user changes the distance between the second imaging unit and the 3D object or the like, and causes the height of the part 242 to be imaged to match (or approximately match) the height of the detection frame 241, as illustrated on the right side of Fig. 19. Moving the second imaging unit in this manner brings the second imaging unit to an appropriate position and attitude for performing the second imaging.

An arrow indicating a recommended movement direction for the second imaging unit (a direction of movement toward the recommended imaging position and attitude) may also be displayed as a guidance display, as in the example in Fig. 20. For example, on the left side of Fig. 20, a display image 250 that displays a guidance display is displayed on the monitor, and an arrow 251 is displayed as the guidance display in the display image 250. The arrow 251 is an arrow facing the far side in the figure (forward), and guides the second imaging unit to be moved forward (toward the 3D object (the subject)). In the example on the right side of Fig. 20, an arrow 252 is displayed as the guidance display in the display image 250 displayed on the monitor. The arrow 252 is an arrow facing the near side in the figure (rearward), and guides the second imaging unit to be moved rearward (away from the 3D object (the subject)). By moving the second imaging unit according to these arrows, the user can bring the second imaging unit closer to the recommended imaging position and attitude.

An indicator indicating a positional relationship, in the depth direction, between the current position of the second imaging unit and the recommended imaging position and attitude may also be displayed, as in the example in Fig. 21. For example, on the left side of Fig. 21, a display image 260 that displays a guidance display is displayed on the monitor, and an indicator 261 is displayed as the guidance display in the display image 260. The indicator 261 indicates the positional relationship, in the depth direction, between the current position of the second imaging unit and the recommended imaging position and attitude. In the example on the left in Fig. 21, the indicator 261 indicates that the position corresponding to the recommended imaging position and attitude is offset (forward) from the current position of the second imaging unit, and guides the second imaging unit to be moved forward (toward the 3D object (the subject)). In the example on the right in Fig. 21, the indicator 261 indicates that the current position of the second imaging unit and the position corresponding to the recommended imaging position and attitude are substantially (or approximately) the same. In other words, in this case, the indicator 261 indicates that the second imaging unit need not be moved substantially. By moving the second imaging unit according to the indicator 261, the user can bring the second imaging unit closer to the recommended imaging position and attitude.

Note that the indicator 261 may have any design, and is not limited to the example in Fig. 21. For example, the design may be as illustrated in Fig. 22. In this example, the display changes as illustrated on the upper side of the figure according to the positional relationship, in the depth direction, between the current position of the second imaging unit and the recommended imaging position and attitude.

Additionally, as in the example in Fig. 23, the distance between the part of the first 3D data (the 3D object) to be imaged and the second imaging unit, and the degree to which the two face each other (the orientation relationship), may be displayed as the guidance information. For example, in Fig. 23, a display image 270 that displays a guidance display is displayed on the monitor, and first 3D data 271 that has been scored is displayed in the display image 270. A line (or a line based thereon) 272 connecting the optical axis of the second imaging unit (the center of a pixel region of the second imaging unit) and the center of the part of the first 3D data (the 3D object) 271 to be imaged is displayed in the display image 270 as the guidance display. Furthermore, an arrow 273 indicating the orientation of the subject surface at a central region of the part of the first 3D data (the 3D object) 271 to be imaged is displayed in the display image 270 as the guidance display.

In the display image 270, the line 272 and the arrow 273 indicate the positional relationship between the current position of the second imaging unit and the recommended imaging position and attitude, the distance between the part of the first 3D data (the 3D object) to be imaged and the second imaging unit, and the degree to which the two face each other (the orientation relationship).

For example, as illustrated on the left side of the upper part of Fig. 24, the orientations of the line 272 and the arrow 273 being different from each other indicates that the plane of the part of the first 3D data (the 3D object) to be imaged (the normal direction thereof) is shifted from the imaging plane (the orientation of the second imaging unit) (i.e., the two are not facing each other) by the amount of that difference (the angle).

As opposed to this, as illustrated in the center of the upper part of Fig. 24, the orientations of the line 272 and the arrow 273 matching indicates that the plane of the part of the first 3D data (the 3D object) to be imaged (the normal direction thereof) directly faces the imaging plane (the orientation of the second imaging unit).

Additionally, as illustrated on the right side of the upper part of Fig. 24, the line 272 and the arrow 273 being distanced from each other indicates that the distance between the part of the first 3D data (the 3D object) to be imaged and the second imaging unit is greater than a distance appropriate for the second imaging. In other words, in this case, guidance is provided to move the second imaging unit closer to the first 3D data (the 3D object).

Meanwhile, as illustrated on the left side of the lower part of Fig. 24, the line 272 and the arrow 273 being close to each other indicates that the distance between the part of the first 3D data (the 3D object) to be imaged and the second imaging unit is smaller than a distance appropriate for the second imaging. In other words, in this case, guidance is provided to move the second imaging unit away from the first 3D data (the 3D object).

Additionally, as illustrated in the center of the lower part of Fig. 24, a circle 274 being displayed at the part where the line 272 and the arrow 273 are connected indicates that the distance between the part of the first 3D data (the 3D object) to be imaged and the second imaging unit is approximately a distance appropriate for the second imaging. In other words, in this case, guidance for not moving the second imaging unit in the depth direction is provided.

Additionally, as illustrated on the right side of the lower part of Fig. 24, the circle 274 being displayed at the part where the line 272 and the arrow 273 are connected, and the orientations of the line 272 and the arrow 273 matching, indicates that the distance between the part of the first 3D data (the 3D object) to be imaged and the second imaging unit is approximately an appropriate distance for the second imaging, and that the plane of the part of the first 3D data (the 3D object) to be imaged (the normal direction thereof) and the imaging plane (the orientation of the second imaging unit) directly face each other. In other words, in this case, guidance is provided indicating that the current position and attitude of the second imaging unit match or approximately match the recommended imaging position and attitude.

By moving the second imaging unit according to such guidance information, the user can more easily bring the second imaging unit closer to the recommended imaging position and attitude.

Note that because the attitude information of the second imaging unit (the first imaging unit) is derived through SLAM or the like, the distance between the second imaging unit and the subject can be derived with ease. Accordingly, the examples of the display described above can be updated in real time (instantaneously).

<Real-Time Processing>

The first 3D data generation processing 101 (the first imaging and the first 3D modeling processing), the scoring processing 102, and the second 3D modeling imaging guidance output processing 105 in Fig. 4 may be executed in parallel with each other. As described above in <2. Imaging Control>, the 3D data of the part of the 3D object on which the first imaging has been performed can be sequentially generated through the first 3D modeling processing. Additionally, the first 3D data generation processing 101 and the scoring processing 102 can be executed in parallel.

Additionally, in the second 3D modeling imaging guidance output processing 105, each time a scoring result is obtained from the scoring processing 102 (before a scoring result for the entire 3D object is obtained), guidance information for the second imaging may be generated and output on the basis of the obtained scoring result (the scoring result for the first 3D data corresponding to the part of the 3D object). Doing so makes it possible to start the second 3D modeling imaging guidance output processing 105 before the scoring processing 102 ends (before the scoring result of the entire 3D object is obtained). In other words, the scoring processing 102 and the second 3D modeling imaging guidance output processing 105 can be executed in parallel.

By combining the methods as described above, the first 3D data generation processing 101, the scoring processing 102, and the second 3D modeling imaging guidance output processing 105 can be executed in parallel with each other.

For example, as illustrated in Fig. 25, a display image 280 is displayed on the monitor, and a captured image from the second imaging unit is displayed in the display image 280. A 3D object 281 appears in the captured image as the subject. As described above, executing the first 3D data generation processing 101, the scoring processing 102, and the second 3D modeling imaging guidance output processing 105 in parallel with each other makes it possible to display the guidance information in the display image 280 before the first 3D data and the scoring thereof ends for the entire 3D object 281. In the display image 280 in Fig. 25, the hatching pattern display 282 indicates the part where the first 3D data of the 3D object 281 has already been generated. The gray display 283 indicates the part where, as a result of the scoring, the second captured images are insufficient. Executing the first 3D data generation processing 101, the scoring processing 102, and the second 3D modeling imaging guidance output processing 105 in parallel with each other makes it possible to display the imaging guidance while performing the first imaging. The user can therefore perform the second imaging in parallel with the first imaging (instantaneously).

<Camera Information>

Note that even when this second 3D modeling imaging guidance output processing 105 is executed, in (the second imaging of) the second 3D data generation processing 104, camera information pertaining to the second imaging unit may be generated and supplied to the scoring processing 102, as described above in <2. Imaging Control>. Then, in the scoring processing 102, the scoring may be performed on the basis of the camera information, and the scoring result may be generated. As described above in <2. Imaging Control>, the camera information may include any information.

<Example of Configuration for Executing Processing>

The processes described above in Fig. 4 may be executed by any device. For example, the above-described first 3D modeling processing of the first 3D data generation processing 101, the scoring processing 102, and the second 3D modeling imaging guidance output processing 105 may be executed by an information processing device.

In other words, the information processing device may include: a first 3D modeling processing unit that, on the basis of a first captured image generated by first imaging of a 3D object, generates first three-dimensional shape information expressing a three-dimensional shape of the 3D object; a scoring processing unit that, using the first three-dimensional shape information, evaluates an accuracy of second three-dimensional shape information that can be generated using second captured images generated from second imaging performed thus far, and generates a scoring result; and a guidance information output control unit that, on the basis of the scoring result, generates guidance information for the second imaging of the 3D object, and controls output of the guidance information. In this section, this information processing device will also be referred to as a "first information processing device".

Additionally, an information processing method executed by the first information processing device may include: generating, on the basis of a first captured image generated by first imaging of a 3D object, first three-dimensional shape information expressing a three-dimensional shape of the 3D object; evaluating, using the first three-dimensional shape information, an accuracy of second three-dimensional shape information that can be generated using second captured images generated from second imaging performed thus far, and generating a scoring result; and generating, on the basis of the scoring result, guidance information for the second imaging of the 3D object, and controlling output of the guidance information.

Doing so makes it possible for the user to image the 3D object at a more appropriate position and attitude by performing the second imaging according to the guidance information. In other words, 3D modeling (the second 3D modeling processing) can be executed using that captured image. Accordingly, more accurate 3D data can be generated while suppressing an increase in the load of the 3D modeling. In other words, the 3D modeling can be performed more easily.

Note that the guidance information output control unit may generate an image indicating the scoring result as the guidance information, and cause the image to be displayed. Additionally, on the basis of a position and an attitude of the second imaging unit, the guidance information output control unit may generate the image indicating the scoring result within an angle of view of the second imaging unit, and cause the image to be displayed. Additionally, the guidance information output control unit may display a captured image generated by the second imaging unit superimposed on the image indicating the scoring result within the angle of view of the second imaging unit. Additionally, the guidance information output control unit may further cause an overhead image indicating the scoring result of an entirety of the 3D object to be displayed.

Additionally, the guidance information output control unit may generate, as the guidance information, an image indicating an overlapping region where an imaging range overlaps among a plurality of the second captured images, and cause the image to be displayed. Additionally, on the basis of a position and an attitude of the second imaging unit, the guidance information output control unit may generate the image indicating the overlapping region between a current angle of view of the second imaging unit and an imaging range of the second captured images obtained thus far, and cause the image to be displayed. Additionally, the guidance information output control unit may cause a captured image generated by the second imaging unit to be displayed superimposed on the image. Additionally, the guidance information output control unit may further cause an image indicating a rate of overlap, which indicates a percentage of the current angle of view of the second imaging unit occupied by the overlapping region, to be displayed.

Additionally, the guidance information output control unit may generate, as the guidance information, an imaging assistance image for assisting the second imaging, and cause the imaging assistance image to be displayed. Additionally, on the basis of the scoring result, the guidance information output control unit may derive a recommended imaging position and attitude that are a recommended position and attitude for the second imaging, and cause recommended imaging position and attitude guidance indicating the recommended imaging position and attitude to be displayed as the guidance information. Additionally, when a position and an attitude of the second imaging unit are the same as the recommended imaging position and attitude, the guidance information output control unit may cause an image indicating that a current position and attitude of the second imaging unit are the recommended imaging position and attitude to be displayed as the recommended imaging position and attitude guidance. Additionally, the guidance information output control unit may cause an image indicating a relative position and a relative attitude of the recommended imaging position and attitude, based on the second imaging unit, to be displayed as the recommended imaging position and attitude guidance. Additionally, the guidance information output control unit may cause a captured image generated by the imaging unit that performs the second imaging to be displayed superimposed on the recommended imaging position and attitude guidance.

Incidentally, in the first information processing device described above, the first three-dimensional shape information may have a lower information amount and a lower resolution than the second three-dimensional shape information. The first 3D modeling processing unit of the first information processing device may include: an attitude information generating unit that, on the basis of the first captured image and an acceleration and an angular velocity of the first imaging unit, generates attitude information indicating a position and an attitude of the first imaging unit; and a three-dimensional shape generating unit that, on the basis of the attitude information and a depth of the 3D object, generates the first three-dimensional shape information. Note that in this case, the first three-dimensional shape information may include a mesh indicating a three-dimensional shape of the 3D object by vertices and connections and a texture applied to a surface of the mesh.

Additionally, in the first information processing device described above, the scoring processing unit may generate the scoring result for each of local areas of the first three-dimensional shape information on the basis of the first three-dimensional shape information and a position and an attitude of the second imaging performed thus far. Additionally, the first three-dimensional shape information may include a mesh indicating a three-dimensional shape of the 3D object by vertices and connections and a texture applied to a surface of the mesh, and the scoring processing unit may generate the scoring result for each of polygons of the mesh.

Additionally, in the first information processing device, the second imaging of the second 3D data generation processing 104 described above may further be performed. In this case, the configuration of the first information processing device is the same as that described above in <2. Imaging Control>. Additionally, in the first information processing device, the second 3D modeling processing of the second 3D data generation processing 104 described above may further be performed. In this case too, the configuration of the first information processing device is the same as that described above in <2. Imaging Control>.

Incidentally, as described above, the second imaging is performed through manual imaging. Accordingly, the scoring processing unit of the first information processing device may generate the scoring result on the basis of a position and an attitude of the second information processing device corresponding to the timing of the second imaging indicated by imaging timing information, which indicates the timing of the second imaging. For example, the guidance information output control unit may obtain the attitude information of the second imaging unit at that imaging timing on the basis of that imaging timing information, and the scoring processing unit may calculate the score on the basis of that attitude information. As a result, the attitude information of the manual imaging is reflected in the scoring result. In this case too, the configuration of the first information processing device is the same as that described above in <2. Imaging Control>. However, the imaging timing information generated by the second imaging unit or the imaging timing information obtained by the communication unit is supplied to the guidance information output control unit. Doing so makes it possible to control the second imaging to be performed at a more appropriate position and attitude on the basis of the imaging timing information.

Additionally, in the first information processing device, as described above, camera information pertaining to the second imaging unit may be applied in the scoring processing 102. For example, the scoring processing unit of the first information processing device may generate the scoring result on the basis of the camera information. In this case too, the configuration of the first information processing device is the same as that described above in <2. Imaging Control>. Doing so makes it possible to control the second imaging to be performed at a more appropriate position and attitude on the basis of the camera information.

Incidentally, even when the first information processing device executes the second 3D modeling imaging guidance output processing 105, the second information processing device may perform the second imaging of the second 3D data generation processing 104 described above. In this case too, the configuration of the second information processing device is the same as that described above in <2. Imaging Control>. The second information processing device may then further perform the second 3D modeling processing described above. In this case too, the configuration of the second information processing device is the same as that described above in <2. Imaging Control>.

Additionally, imaging timing information indicating the timing of the manual imaging may be generated in the second information processing device and supplied to the first information processing device. In this case too, the configuration of the second information processing device is the same as that described above in <2. Imaging Control>.

Additionally, camera information pertaining to the second imaging unit may be applied in the scoring processing 102. In this case too, the configuration of the second information processing device is the same as that described above in <2. Imaging Control>.

<4. Combinations>

<Combination of Imaging Control and Guidance Information Output>

In Fig. 4, both the second 3D modeling imaging control processing 103 and the second 3D modeling imaging guidance output processing 105 may be executed. Performing both imaging control and outputting guidance information makes it easier for the user to perform the second imaging at an appropriate position and attitude.

For example, the first information processing device described above in <2. Imaging Control> may further include a guidance information output control unit that, on the basis of the scoring result, generates guidance information for the second imaging of the 3D object. In this case, the guidance information output control unit performs the same processing as described above in <3. Imaging Guidance Output>.

Additionally, the first information processing device described above in <3. Imaging Guidance Output> may further include an imaging control unit that, on the basis of the scoring result, controls the second imaging of the 3D object. In this case, the imaging control unit performs the same processing as described above in <2. Imaging Control>.

<5. First Embodiment>

<Imaging Device>

Fig. 26 is a block diagram illustrating an example of the configuration of an imaging device serving as one aspect of an information processing device in which the present technique is applied. An imaging device 300 illustrated in Fig. 26 is a device that images a 3D object and performs 3D modeling using the captured image. Note that Fig. 26 illustrates the main processing units and data flows, and the present disclosure is not limited to the content illustrated in Fig. 26. In other words, the imaging device 300 may include devices, processing units, and the like not illustrated as blocks in Fig. 26. Additionally, the system may include data flows and processing not indicated as arrows or the like in Fig. 26.

As illustrated in Fig. 26, the imaging device 300 includes a first 3D data generation unit 301, a scoring processing unit 302, an imaging control unit 303, a second 3D data generation unit 304, an encoding unit 305, a storage unit 306, a communication unit 307, an imaging guidance output control unit 308, and an output unit 309. The first 3D data generation unit 301 includes a depth sensor 311, an imaging unit 312, an Inertial Measurement Unit (IMU) 313, and a real-time 3D modeling processing unit 314. The real-time 3D modeling processing unit 314 includes Simultaneous Localization and Mapping (SLAM) 321, a Truncated Signed Distance Function (TSDF) update unit 322, and a mesh generation unit 323. The second 3D data generation unit 304 includes an operation unit 331, an imaging unit 332, an image processing unit 333, and a photogrammetry processing unit 334. The photogrammetry processing unit 334 includes Structure From Motion (SfM) 341 and Multi View Stereo (MVS) 342.

The first 3D data generation unit 301 performs processing related to the generation of the first 3D data. For example, the first 3D data generation unit 301 executes the first 3D data generation processing 101 in Fig. 4. The depth sensor 311 includes a Lidar sensor (a dToF module) and the like, detects a depth to a subject, and supplies the depth to the TSDF update unit 322. The imaging unit 312 includes an image sensor, captures an image of a subject, and generates a captured image. The imaging unit 312 performs the first imaging of the first 3D data generation processing 101 in Fig. 4 (i.e., imaging for first 3D modeling (real-time 3D modeling). The imaging unit 312 supplies the generated captured image to the SLAM 321. The IMU 313 detects inertia information (acceleration and angular velocity) of the imaging device and supplies the inertia information to the SLAM 321.

The real-time 3D modeling processing unit 314 performs processing pertaining to real-time 3D modeling. For example, the real-time 3D modeling processing unit 314 executes the first 3D modeling processing of the first 3D data generation processing 101 in Fig. 4 (the real-time 3D modeling). In other words, on the basis of the first captured image generated by the first imaging of the 3D object, the real-time 3D modeling processing unit 314 generates the first three-dimensional shape information expressing the three-dimensional shape of the 3D object.

The SLAM 321 performs self-position estimation on the basis of the supplied first captured image and inertia information, and generates attitude information indicating the position and attitude of the imaging device 300. The SLAM 321 supplies the generated attitude information to the TSDF update unit 322, the imaging control unit 303, and the imaging guidance output control unit 308. The TSDF update unit 322 updates the TSDF on the basis of the attitude information and the depth, and supplies the updated TSDF to the mesh generation unit 323. The mesh generation unit 323 generates a mesh (and textures) using the updated TSDF. The mesh generation unit 323 supplies the mesh and the textures to the scoring processing unit 302 as the first 3D data (the first three-dimensional shape information).

The scoring processing unit 302 performs processing pertaining to scoring. For example, the scoring processing unit 302 performs the scoring processing 102 in Fig. 4 on the basis of the supplied first 3D data and the imaging viewpoint information (information indicating the position and attitude at which the second imaging was performed) supplied from the imaging control unit 303. In other words, using the first three-dimensional shape information, the scoring processing unit 302 evaluates the accuracy of second three-dimensional shape information that can be generated using the second captured images generated from the second imaging performed thus far, and generates a scoring result. For example, the scoring processing unit 302 may generate the scoring result for each of local areas of the first three-dimensional shape information on the basis of the first three-dimensional shape information and the position and the attitude of the second imaging performed thus far. For example, the scoring processing unit 302 may generate the scoring result for each of polygons of the mesh. The scoring processing unit 302 supplies the scoring result to the imaging control unit 303 and the imaging guidance output control unit 308.

Note that the scoring processing unit 302 may obtain camera information regarding the imaging unit 332 and generate the scoring result on the basis of the camera information. The scoring processing unit 302 may also generate the scoring result on the basis of a position and an attitude of the imaging device 300 corresponding to a timing of the second imaging by the imaging unit 332 that is not based on the imaging control information.

The imaging control unit 303 performs processing pertaining to the control of the second imaging. For example, the imaging control unit 303 executes the second 3D modeling imaging control processing 103 in Fig. 4. In other words, on the basis of the supplied scoring result and the attitude information, the imaging control unit 303 generates imaging control information that controls the second imaging, and supplies the imaging control information to the imaging unit 332. The imaging control information is control information that causes the imaging unit 332 to execute the second imaging (generate the second captured images), for example. In other words, the imaging control unit 303 obtains an appropriate position and attitude for the second imaging on the basis of the scoring result, and causes the imaging unit 332 to execute the second imaging at that position and attitude. The imaging control unit 303 also supplies imaging viewpoint information indicating the position and attitude of the executed second imaging to the scoring processing unit 302.

The imaging control unit 303 may also obtain imaging timing information indicating a timing of the second imaging by the imaging unit 332 that is not based on imaging control information, and supply the attitude information of the imaging device 300 corresponding to that imaging timing to the scoring processing unit 302 as imaging viewpoint information.

The second 3D data generation unit 304 performs processing related to the generation of the second 3D data. For example, the second 3D data generation unit 304 executes the second 3D data generation processing 104 in Fig. 4. The operation unit 331 accepts instructions from a user or the like for the imaging unit 332, and supplies the instructions to the imaging unit 332.

The imaging unit 332 includes an image sensor, captures an image of a subject, and generates a captured image. The imaging unit 332 performs the second imaging of the second 3D data generation processing 104 in Fig. 4 (i.e., imaging for the second 3D modeling (photogrammetry)). The imaging unit 332 supplies the generated captured image to the image processing unit 333.

The imaging unit 332 may perform the second imaging, for example, in accordance with the control of the imaging control unit 303 (on the basis of imaging control information supplied from the imaging control unit 303), and generate the second captured image. The imaging unit 332 may perform the second imaging in accordance with instructions supplied from the operation unit 331, and generate the second captured image. The imaging unit 332 may also supply camera information (internal parameters, external parameters, angle of view information, and the like of the imaging unit 332) to the scoring processing unit 302. The imaging unit 332 may also supply imaging timing information indicating a timing of the second imaging not based on imaging control information to the imaging control unit 303 and the imaging guidance output control unit 308.

The image processing unit 333 performs predetermined image processing on the captured image generated by the imaging unit 332 (the second captured image). The image processing may be any type of image processing. The image processing unit 333 supplies the captured image to the SfM 341. The image processing unit 333 may also supply the captured image to the encoding unit 305 and the imaging guidance output control unit 308.

The photogrammetry processing unit 334 performs processing pertaining to photogrammetry on the second captured image. For example, the photogrammetry processing unit 334 executes the second 3D modeling processing of the second 3D data generation processing 104 in Fig. 4. In other words, the photogrammetry processing unit 334 generates the second three-dimensional shape information on the basis of the second captured image generated by the imaging unit 332.

For example, the SfM 341 searches out corresponding points between second captured images, derives the position and attitude of the camera through epipolar restriction, specifies the position, in a three-dimensional space, of each corresponding point through triangulation based on the position and attitude of the camera, optimizes the entire specified three-dimensional point cloud through bundle adjustment, and supplies the result to the MVS 342. For example, using the three-dimensional point cloud, the MVS 342 further performs a dense corresponding point search, adds three-dimensional points, and further performs meshing and texturing as post-processing to generate the second 3D data. The MVS 342 supplies the generated second 3D data to the encoding unit 305.

The encoding unit 305 encodes the supplied second 3D data and supplies the resulting encoded data to the storage unit 306 and the communication unit 307. The encoding unit 305 may also encode the supplied second captured image and supply the resulting encoded data to the storage unit 306 and the communication unit 307.

The storage unit 306 stores the supplied encoded data. The communication unit 307 sends the supplied encoded data to another information processing device (e.g., a server or the like).

The imaging guidance output control unit 308 performs processing pertaining to guidance for the second imaging. For example, the imaging guidance output control unit 308 executes the second 3D modeling imaging guidance output processing 105 in Fig. 4. In other words, the imaging guidance output control unit 308 generates guidance information for the second imaging, and controls the output of that guidance information. For example, the imaging guidance output control unit 308 generates the above-described guidance information on the basis of the supplied scoring result and the attitude information of the imaging device 300. The imaging guidance output control unit 308 may also generate the guidance information on the basis of the supplied imaging timing information. The imaging guidance output control unit 308 supplies the generated guidance information to the output unit 309, and causes the guidance information to be output as an image, audio, or the like, for example. The imaging guidance output control unit 308 may cause the supplied captured image to be displayed superimposed on the guidance information (image).

The output unit 309 outputs the guidance information as an image, audio, or the like in accordance with the control of the imaging guidance output control unit 308.

Providing such a configuration enables the imaging device 300 to image the 3D object at a more appropriate position and attitude, and to execute the 3D modeling (the second 3D modeling processing) using that captured image. The imaging device 300 can therefore generate more accurate 3D data while suppressing an increase in the load of the 3D modeling. The imaging device 300 can also output the guidance information to enable the user to perform the second imaging at a more appropriate position and attitude. In other words, the imaging device 300 can execute the 3D modeling (the second 3D modeling processing) using that captured image. The imaging device 300 can therefore generate more accurate 3D data while suppressing an increase in the load of the 3D modeling. In other words, the user can perform the 3D modeling more easily.

<Flow of 3D Modeling Processing>

An example of a flow of the 3D modeling processing executed by the imaging device 300 will be described with reference to the flowchart in Fig. 27.

When the 3D modeling processing starts, in step S301, the depth sensor 311, the imaging unit 312, and the IMU 313 obtain the depth, the captured image, and the inertia information.

In step S302, the real-time 3D modeling processing unit 314 executes the real-time 3D modeling processing and generates the first 3D data.

In step S303, the scoring processing unit 302 scores the first 3D data on the basis of the second imaging performed thus far.

In step S304, the imaging guidance output control unit 308 generates imaging guidance (guidance information) for the second imaging on the basis of the scoring result, the attitude information, and the like. The output unit 309 outputs the imaging guidance (guidance information).

In step S305, the imaging control unit 303 controls imaging for photogrammetry (the second imaging) on the basis of the scoring result, the attitude information, and the like.

In step S306, the imaging unit 332 captures an image (performs the second imaging) in accordance with that control.

In step S307, the imaging control unit 303 and the imaging guidance output control unit 308 obtain the camera information from the imaging unit 332. The scoring processing unit 302 also obtains the imaging timing information from the imaging unit 332.

In step S308, the imaging control unit 303 determines whether to end the imaging for photogrammetry (the second imaging). If it is determined that the imaging for the photogrammetry is not to be ended, the sequence returns to step S303. However, if it is determined in step S308 that the imaging for the photogrammetry is to be ended, the sequence moves to step S309.

In step S309, the photogrammetry processing unit 334 executes the photogrammetry processing and generates the second 3D data.

In step S310, the encoding unit 305 encodes the second 3D data.

In step S311, the storage unit 306 stores the encoded data. The communication unit 307 also sends the encoded data to another device (e.g., a server or the like).

When the processing of step S311 ends, the 3D modeling processing ends.

<Flow of Real-Time 3D Modeling Processing>

An example of the flow of the real-time 3D modeling processing executed in step S302 of Fig. 27 will be described with reference to the flowchart in Fig. 28.

When the real-time 3D modeling processing starts, in step S331, the SLAM 321 derives the attitude information indicating the three-dimensional attitude of the imaging device 300 on the basis of the captured image and the inertia information.

In step S332, the TSDF update unit 322 updates the TSDF on the basis of the captured image, the attitude information, and the depth.

In step S333, the mesh generation unit 323 generates the first 3D data on the basis of the updated TSDF.

Once the processing of step S333 ends, the real-time 3D modeling processing ends, and the sequence returns to Fig. 27.

<Flow of Photogrammetry Processing>

An example of the flow of the photogrammetry processing executed in step S309 of Fig. 27 will be described with reference to the flowchart in Fig. 29.

When the photogrammetry processing starts, in step S351, the SfM 341 detects corresponding points among the captured images.

In step S352, the SfM 341 derives the three-dimensional attitude of the camera through epipolar restriction.

In step S353, the SfM 341 derives a three-dimensional point using triangulation.

In step S354, the SfM 341 optimizes the entirety through bundle adjustment.

In step S355, the MVS 342 derives a three-dimensional point through a dense corresponding point search, and generates the second 3D data.

When the processing of step S355 ends, the photogrammetry processing ends, and the sequence returns to Fig. 27.

Executing each instance of processing as described above enables the imaging device 300 to image the 3D object at a more appropriate position and attitude, and to execute the 3D modeling (the second 3D modeling processing) using that captured image. The imaging device 300 can therefore generate more accurate 3D data while suppressing an increase in the load of the 3D modeling. The imaging device 300 can also output the guidance information to enable the user to perform the second imaging at a more appropriate position and attitude. In other words, the imaging device 300 can execute the 3D modeling (the second 3D modeling processing) using that captured image. The imaging device 300 can therefore generate more accurate 3D data while suppressing an increase in the load of the 3D modeling. In other words, the user can perform the 3D modeling more easily.

<6. Second Embodiment>

<Information Processing System 1>

The present technique is not limited to the example described above, and can be applied in any desired configuration. For example, the present technique may be applied in an information processing system that performs 3D modeling.

For example, in an information processing system including an information processing device and an imaging device, the information processing device may include: a first 3D modeling processing unit that, on the basis of a first captured image generated by first imaging of a 3D object, generates first three-dimensional shape information expressing a three-dimensional shape of the 3D object; a scoring processing unit that, using the first three-dimensional shape information, evaluates an accuracy of second three-dimensional shape information that can be generated using second captured images generated from second imaging performed thus far, and generates a scoring result; an imaging control unit that, on the basis of a position and an attitude of the imaging device and the scoring result, generates imaging control information that controls the second imaging of the 3D object; and a first communication unit that supplies the imaging control information to the imaging device. Meanwhile, the imaging device may include: a second communication unit that obtains the imaging control information supplied from the information processing device; and an imaging unit that images the 3D object on the basis of the imaging control information and generates the second captured image.

Fig. 30 is a diagram illustrating an example of the configuration of one aspect of an information processing system to which the present technique is applied. An information processing system 400 illustrated in Fig. 30 is a system that images a 3D object and performs 3D modeling using the captured image. As illustrated in Fig. 30, the information processing system 400 includes an imaging communication device 401, an imaging device 402, and a server 403. The imaging communication device 401 and the server 403 are communicably connected over a network 404. The network 404 is a communication channel constituted by any desired communication medium, such as the Internet, a Local Area Network (LAN), a wireless LAN, or the like, for example.

The imaging communication device 401 is an information processing device having an imaging function along with a communication function enabling communication with any device over the network 404, such as a smartphone or the like. The imaging device 402 is an information processing device having an imaging function, such as a digital camera. The imaging device 402 can only communicate with the imaging communication device 401. The imaging communication device 401 and the imaging device 402 are fixedly connected to each other, and are used by a user as a terminal device 410. The server 403 obtains a second captured image generated in the terminal device 410 (the imaging device 402), performs second 3D modeling (photogrammetry processing) using the second captured image, and generates and stores (manages) the second 3D data.

Fig. 31 is a block diagram illustrating an example of the main configuration of the imaging communication device 401. Note that Fig. 31 illustrates main components such as processing units and data flows, but Fig. 31 does not necessarily illustrate all components. In other words, the imaging communication device 401 may include devices, processing units, and the like not illustrated as blocks in Fig. 31. Additionally, the system may include data flows and processing not indicated as arrows or the like in Fig. 31.

As illustrated in Fig. 31, the imaging communication device 401 includes a communication unit 421 in place of the second 3D data generation unit 304 in the configuration of the imaging device 300 (Fig. 26). In other words, the other configurations are the same as those of the imaging device 300.

The communication unit 421 is communicably connected to the imaging device 402, communicates with the imaging device 402, and exchanges information therewith. For example, the communication unit 421 may supply the imaging control information, supplied from the imaging control unit 303, to the imaging device 402. The communication unit 421 may also obtain the second captured image generated by the imaging device 402 and supply that second captured image to the encoding unit 305 and the imaging guidance output control unit 308. The communication unit 421 may also obtain the camera information supplied from the imaging device 402 and supply that camera information to the scoring processing unit 302. The camera information may include internal parameters, external parameters, angle of view information, and the like of (the imaging unit 332 of) the imaging device 402. The communication unit 421 may also obtain the imaging timing information supplied from the imaging device 402 and supply that imaging timing information to the imaging control unit 303 and the imaging guidance output control unit 308. The imaging timing information indicates the timing of the imaging performed by (the imaging unit 332 of) the imaging device 402 not based on the imaging control information.

Note that the communication unit 307 is communicably connected to the server 403 over the network 404, communicates with the server 403, and exchanges information therewith. The encoding unit 305 may also encode the second captured image supplied from the communication unit 421 and supply the resulting encoded data to the storage unit 306 and the communication unit 307. The storage unit 306 stores the encoded data of the second captured image. The communication unit 307 supplies the encoded data of the second captured image to the server 403 over the network 404.

Fig. 32 is a block diagram illustrating an example of the main configuration of the imaging device 402. Note that Fig. 32 illustrates the main processing units, data flows, and the like, and the items illustrated in Fig. 32 are not necessarily all the items. In other words, the imaging device 402 may include devices, processing units, and the like not illustrated as blocks in Fig. 32. Additionally, the system may include data flows and processing not indicated as arrows or the like in Fig. 32.

As illustrated in Fig. 32, the imaging device 402 includes the operation unit 331, the imaging unit 332, the image processing unit 333, a communication unit 431, an encoding unit 432, and a storage unit 433. The operation unit 331, the imaging unit 332, and the image processing unit 333 perform the same processing as in the imaging device 300 in Fig. 26.

The communication unit 431 is communicably connected to the imaging communication device 401, communicates with the imaging communication device 401, and exchanges information therewith. For example, the communication unit 431 may obtain the imaging control information, supplied from the imaging communication device 401, and supply that imaging control information to the imaging unit 332. Additionally, the communication unit 431 may obtain the camera information, supplied from the imaging unit 332, and supply that camera information to the imaging communication device 401. The camera information may include internal parameters, external parameters, angle of view information, and the like of the imaging unit 332. Additionally, the communication unit 431 may obtain the imaging timing information, supplied from the imaging unit 332, and supply that imaging timing information to the imaging communication device 401. The imaging timing information indicates the timing of the imaging performed by the imaging unit 332 not based on the imaging control information. Additionally, the communication unit 431 may obtain the second captured image, supplied from the image processing unit 333, and supply that second captured image to the imaging communication device 401.

The encoding unit 432 may encode the second captured image supplied from the image processing unit 333 and supply the resulting encoded data to the storage unit 433. The storage unit 433 stores that encoded data.

Fig. 33 is a block diagram illustrating an example of the main configuration of the server 403. Note that Fig. 33 illustrates main components such as processing units and data flows, and Fig. 33 does not necessarily illustrate all components. In other words, the server 403 may include devices, processing units, and the like not illustrated as blocks in Fig. 33. Additionally, the system may include data flows and processing not indicated as arrows or the like in Fig. 33.

As illustrated in Fig. 33, the server 403 includes a communication unit 441, a decoding unit 442, the photogrammetry processing unit 334, an encoding unit 444, and a storage unit 445. The photogrammetry processing unit 334 has the same configuration as that in the imaging device 300 in Fig. 26, and performs the same processing.

The communication unit 441 is communicably connected to the imaging communication device 401 over the network 404, communicates with other devices such as the imaging communication device 401, and exchanges information therewith. For example, the communication unit 441 obtains the encoded data of the second captured image, supplied from the imaging communication device 401, and supplies that encoded data to the decoding unit 442. The communication unit 441 may also supply the encoded data of the second 3D data, supplied from the encoding unit 444, to other devices (e.g., the imaging communication device 401) over the network 404.

The decoding unit 442 decodes the encoded data of the second captured image supplied from the communication unit 441, and generates (restores) the second captured image. The decoding unit 442 supplies the second captured image to the photogrammetry processing unit 334 (the SfM 341). The photogrammetry processing unit 334 executes the second 3D modeling (photogrammetry processing) using the second captured image, and generates the second 3D data. The photogrammetry processing unit 334 (the MVS 342) supplies the generated second 3D data to the encoding unit 444.

The encoding unit 444 encodes the supplied second 3D data and supplies the resulting encoded data to the storage unit 445. The encoding unit 444 may also supply the encoded data of the second 3D data to the communication unit 441. The storage unit 445 stores the encoded data of the second 3D data that has been supplied.

Providing the devices with such configurations enables the information processing system 400 to image the 3D object at a more appropriate position and attitude, and to execute the 3D modeling (the second 3D modeling processing) using that captured image. The information processing system 400 can therefore generate more accurate 3D data while suppressing an increase in the load of the 3D modeling. The information processing system 400 can also output the guidance information to enable the user to perform the second imaging at a more appropriate position and attitude. In other words, the information processing system 400 can execute 3D modeling (the second 3D modeling processing) using that captured image. The information processing system 400 can therefore generate more accurate 3D data while suppressing an increase in the load of the 3D modeling. In other words, the user can perform the 3D modeling more easily.

<Flow of 3D Modeling Processing>

An example of a flow of the 3D modeling processing executed by the information processing system 400 will be described with reference to the flowcharts in Figs. 34 and 35.

When the 3D modeling processing starts, in step S401 of Fig. 34, the depth sensor 311, the imaging unit 312, and the IMU 313 of the imaging communication device 401 obtain the depth, the captured image, and the inertia information.

In step S402, the real-time 3D modeling processing unit 314 of the imaging communication device 401 executes the real-time 3D modeling processing and generates the first 3D data. The real-time 3D modeling processing is executed in the same manner as in the example in Fig. 28.

In step S403, the scoring processing unit 302 of the imaging communication device 401 scores the first 3D data on the basis of the second imaging performed thus far.

In step S404, the imaging guidance output control unit 308 of the imaging communication device 401 generates imaging guidance (guidance information) for the second imaging on the basis of the scoring result, the attitude information, and the like. The output unit 309 outputs the imaging guidance (guidance information).

In step S405, the imaging control unit 303 of the imaging communication device 401 generates the imaging control information that controls imaging for photogrammetry (the second imaging) on the basis of the scoring result, the attitude information, and the like. The communication unit 421 supplies that imaging control information to the imaging device 402. In step S411, the communication unit 431 of the imaging device 402 obtains the imaging control information.

In step S412, the imaging unit 332 of the imaging device 402 performs imaging (performs the second imaging) in accordance with that control, and generates the second captured image. The image processing unit 333 performs predetermined image processing on the second captured image.

In step S413, the communication unit 431 of the imaging device 402 supplies the second captured image to the imaging communication device 401. In step S406, the communication unit 421 of the imaging communication device 401 obtains the second captured image.

Additionally, in step S414, the communication unit 431 of the imaging device 402 supplies the camera information, the imaging timing information, and the like of the imaging unit 332 to the imaging communication device 401. In step S407, the communication unit 421 of the imaging communication device 401 obtains that camera information, imaging timing information, and the like.

In step S441 of Fig. 35, the encoding unit 432 of the imaging device 402 encodes the second captured image. The storage unit 433 stores the encoded data of the second captured image.

In step S431, the encoding unit 305 of the imaging communication device 401 encodes the second captured image. The communication unit 307 supplies encoded data of the second captured image to the server 403. In step S451, the communication unit 441 of the server 403 obtains the encoded data of the second captured image. The decoding unit 442 decodes the encoded data and generates (restores) the second captured image.

In step S452, the photogrammetry processing unit 334 of the server 403 executes the photogrammetry processing and generates the second 3D data. This photogrammetry processing is executed in the same manner as in the example in Fig. 29.

In step S453, the encoding unit 444 of the server 403 encodes the second 3D data.

In step S454, the storage unit 445 of the server 403 stores the encoded data.

The communication unit 441 also sends the encoded data to another device (e.g., the imaging communication device 401 or the like).

In step S432, the imaging control unit 303 of the imaging communication device 401 determines whether to end the imaging for photogrammetry (the second imaging). If it is determined that the imaging for the photogrammetry is not to be ended, the sequence returns to step S403 of Fig. 34. If it is determined in step S432 of Fig. 35 that the imaging for the photogrammetry is to be ended, the 3D modeling processing ends.

Executing such processing enables the information processing system 400 to image the 3D object at a more appropriate position and attitude, and to execute the 3D modeling (the second 3D modeling processing) using that captured image. The information processing system 400 can therefore generate more accurate 3D data while suppressing an increase in the load of the 3D modeling. The information processing system 400 can also output the guidance information to enable the user to perform the second imaging at a more appropriate position and attitude. In other words, the information processing system 400 can execute 3D modeling (the second 3D modeling processing) using that captured image. The information processing system 400 can therefore generate more accurate 3D data while suppressing an increase in the load of the 3D modeling. In other words, the user can perform the 3D modeling more easily.

<Information Processing System 2>

Note that in the information processing system 400, the scoring processing may be performed by the server 403.

Fig. 36 illustrates an example of the main configuration of the imaging communication device 401 in this case. Note that Fig. 36 illustrates the main processing units, data flows, and the like, and the items illustrated in Fig. 36 are not necessarily all the items. In other words, the imaging communication device 401 may include devices, processing units, and the like not illustrated as blocks in Fig. 36. Additionally, the system may include data flows and processing not indicated as arrows or the like in Fig. 36.

As illustrated in Fig. 36, the imaging communication device 401 in this case omits the scoring processing unit 302 from the configuration illustrated in Fig. 31. In this case, the communication unit 307 supplies the imaging viewpoint information, supplied from the imaging control unit 303, to the server 403.

In this case, the real-time 3D modeling processing unit 314 (the mesh generation unit 323) supplies the generated first 3D data to the encoding unit 305. The encoding unit 305 encodes the first 3D data and supplies the resulting encoded data to the communication unit 307. The communication unit 307 supplies the encoded data of the first 3D data, supplied from the encoding unit 305, to the server 403.

Additionally, the communication unit 307 obtains the scoring result derived by (the scoring processing unit 302 of) the server 403, and supplies that scoring result to the imaging control unit 303 and the imaging guidance output control unit 308.

The communication unit 307 also supplies the encoded data of the second captured image, supplied from the encoding unit 305, to the server 403, as in Fig. 32.

In this case, the communication unit 421 obtains the camera information (of the imaging unit 332), supplied from the imaging device 402, and supplies that camera information to the encoding unit 305. The encoding unit 305 encodes the camera information and supplies the resulting encoded data to the communication unit 307. The communication unit 307 supplies the encoded data of the camera information to the server 403.

Fig. 37 is a block diagram illustrating an example of the main configuration of the server 403 in this case. Note that Fig. 37 illustrates the main processing units, data flows, and the like, and the items illustrated in Fig. 37 are not necessarily all the items. In other words, the server 403 may include devices, processing units, and the like not illustrated as blocks in Fig. 37. Additionally, the system may include data flows and processing not indicated as arrows or the like in Fig. 37.

As illustrated in Fig. 37, in this case, the server 403 includes the scoring processing unit 302 in addition to the configuration illustrated in Fig. 33. In this case, the communication unit 441 obtains the encoded data of the first 3D data, supplied from the imaging communication device 401, and supplies that encoded data to the decoding unit 442. The decoding unit 442 decodes the encoded data and generates (restores) the first 3D data. The decoding unit 442 supplies the first 3D data to the scoring processing unit 302.

The communication unit 441 also obtains the imaging viewpoint information, supplied from the imaging communication device 401, and supplies that information to the decoding unit 442. The decoding unit 442 supplies that imaging control information to the scoring processing unit 302.

Additionally, the communication unit 441 obtains the encoded data of the camera information, supplied from the imaging communication device 401, and supplies that encoded data to the decoding unit 442. The decoding unit 442 decodes the encoded data and generates (restores) the camera information. The decoding unit 442 supplies that camera information to the scoring processing unit 302.

Additionally, the communication unit 441 obtains the encoded data of the second captured image, supplied from the imaging communication device 401, and supplies that encoded data to the decoding unit 442, in the same manner as in Fig. 33. The decoding unit 442 decodes the encoded data and generates (restores) the second captured image. The decoding unit 442 supplies the second captured image to the photogrammetry processing unit 334.

In this case too, the scoring processing unit 302 performs the scoring processing 102 of Fig. 4 on the basis of the supplied first 3D data, imaging viewpoint information, and the like, and derives the scoring result. The scoring processing unit 302 may also perform the scoring processing 102 on the basis of the camera information. The scoring processing unit 302 supplies the scoring result to the encoding unit 444. The encoding unit 444 supplies the scoring result to the communication unit 441. The communication unit 441 supplies the scoring result to the imaging communication device 401.

The other processing is the same as in Fig. 33.

Providing the devices with such configurations enables the information processing system 400 to image the 3D object at a more appropriate position and attitude, and to execute the 3D modeling (the second 3D modeling processing) using that captured image, in this case as well. The information processing system 400 can therefore generate more accurate 3D data while suppressing an increase in the load of the 3D modeling. The information processing system 400 can also output the guidance information to enable the user to perform the second imaging at a more appropriate position and attitude. In other words, the information processing system 400 can execute 3D modeling (the second 3D modeling processing) using that captured image. The information processing system 400 can therefore generate more accurate 3D data while suppressing an increase in the load of the 3D modeling. In other words, the user can perform the 3D modeling more easily.

<Flow of 3D Modeling Processing>

An example of a flow of the 3D modeling processing executed by the information processing system 400 in this case will be described with reference to the flowcharts in Figs. 38 and 39.

When the 3D modeling processing starts, in step S501 of Fig. 38, the depth sensor 311, the imaging unit 312, and the IMU 313 of the imaging communication device 401 obtain the depth, the captured image, and the inertia information.

In step S502, the real-time 3D modeling processing unit 314 of the imaging communication device 401 executes the real-time 3D modeling processing and generates the first 3D data. The real-time 3D modeling processing is executed in the same manner as in the example in Fig. 28.

In step S503, the communication unit 307 of the imaging communication device 401 supplies the generated first 3D data to the server 403. In step S521, the communication unit 441 of the server 403 obtains that first 3D data.

In step S522, the scoring processing unit 302 of the server 403 scores the first 3D data on the basis of the second imaging performed thus far.

In step S523, the communication unit 441 of the server 403 supplies the scoring result to the imaging communication device 401. In step S504, the communication unit 307 of the imaging communication device 401 obtains the scoring result.

In step S505, the imaging guidance output control unit 308 of the imaging communication device 401 generates imaging guidance (guidance information) for the second imaging on the basis of the scoring result, the attitude information, and the like. The output unit 309 outputs the imaging guidance (guidance information).

In step S506, the imaging control unit 303 of the imaging communication device 401 generates the imaging control information that controls imaging for photogrammetry (the second imaging) on the basis of the scoring result, the attitude information, and the like. The communication unit 421 supplies that imaging control information to the imaging device 402. In step S511, the communication unit 431 of the imaging device 402 obtains the imaging control information.

Additionally, in step S507, the communication unit 307 of the imaging communication device 401 supplies the imaging viewpoint information to the server 403. In step S524, the communication unit 441 of the server 403 obtains that imaging viewpoint information.

In step S541 of Fig. 39, the imaging unit 332 of

the imaging device 402 performs imaging (performs the second imaging) in accordance with the imaging control information, and generates the second captured image. The image processing unit 333 performs predetermined image processing on the second captured image.

In step S542, the communication unit 431 of the imaging device 402 supplies the second captured image to the imaging communication device 401. In step S531, the communication unit 421 of the imaging communication device 401 obtains the second captured image.

Additionally, in step S543, the communication unit 431 of the imaging device 402 supplies the camera information, the imaging timing information, and the like of the imaging unit 332 to the imaging communication device 401. In step S532, the communication unit 421 of the imaging communication device 401 obtains that camera information, imaging timing information, and the like.

In step S544, the encoding unit 432 of the imaging device 402 encodes the second captured image. The storage unit 433 stores the encoded data of the second captured image.

In step S533, the encoding unit 305 of the imaging communication device 401 encodes the second captured image. The communication unit 307 supplies encoded data of the second captured image to the server 403. In step S551, the communication unit 441 of the server 403 obtains the encoded data of the second captured image. The decoding unit 442 decodes the encoded data and generates (restores) the second captured image.

In step S552, the photogrammetry processing unit 334 of the server 403 executes the photogrammetry processing and generates the second 3D data. This photogrammetry processing is executed in the same manner as in the example in Fig. 29.

In step S553, the encoding unit 444 of the server 403 encodes the second 3D data.

In step S554, the storage unit 445 of the server 403 stores the encoded data. The communication unit 441 also sends the encoded data to another device (e.g., the imaging communication device 401 or the like).

In step S534, the imaging control unit 303 of the imaging communication device 401 determines whether to end the imaging for photogrammetry (the second imaging). If it is determined that the imaging for the photogrammetry is not to be ended, the sequence returns to step S522 of Fig. 38. If it is determined in step S534 of Fig. 39 that the imaging for the photogrammetry is to be ended, the 3D modeling processing ends.

Executing such processing enables the information processing system 400 to image the 3D object at a more appropriate position and attitude, and to execute the 3D modeling (the second 3D modeling processing) using that captured image, in this case as well. The information processing system 400 can therefore generate more accurate 3D data while suppressing an increase in the load of the 3D modeling. The information processing system 400 can also output the guidance information to enable the user to perform the second imaging at a more appropriate position and attitude. In other words, the information processing system 400 can execute 3D modeling (the second 3D modeling processing) using that captured image. The information processing system 400 can therefore generate more accurate 3D data while suppressing an increase in the load of the 3D modeling. In other words, the user can perform the 3D modeling more easily.

<7. Supplementary Notes>

<Computer>

The series of processing described above can be executed by hardware, or can be executed by software. When the series of steps of processing is executed by software, a program of the software is installed in a computer. Here, the computer includes, for example, a computer built in dedicated hardware and a general-purpose personal computer in which various programs are installed to be able to execute various functions.

Fig. 40 is a block diagram illustrating an example of the hardware configuration of a computer that executes the series of processing described above according to a program.

In a computer 900 illustrated in Fig. 40, a Central Processing Unit (CPU) 901, Read Only Memory (ROM) 902, and Random Access Memory (RAM) 903 are connected to each other by a bus 904.

An input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, and a non-volatile memory. The communication unit 914 includes, for example, a network interface. The drive 915 drives a removable recording medium 921 such as a magnetic disk, an optical disk, a magneto-optical disk, or a semiconductor memory.

In the computer configured as described above, for example, the CPU 901 loads a program stored in the storage unit 913 to the RAM 903 via the input/output interface 910 and the bus 904 and executes the program. The above-described series of processing is performed as a result. Data and the like necessary for the CPU 901 to execute the various types of processing may be stored as appropriate in the RAM 903.

The program executed by the computer may be recorded on, for example, the removable recording medium 921, as a packaged medium, and applied in such a state. In this case, the program may be read out from the removable recording medium 921 mounted to the drive 915, and installed in the storage unit 913 via the input/output interface 910.

Additionally, for example, the program may also be provided via any desired wired or wireless transmission medium such as a local area network, the Internet, digital satellite broadcasting, or the like. In this case, the program may be received by the communication unit 914 and installed in the storage unit 913 via the input/output interface 910.

Additionally, this program may be installed in advance in the ROM 902, the storage unit 913, or both.

<Application of Present Technique>

The present technique can be applied in any desired configuration. For example, the present technique can be applied in a variety of electronic devices.

Additionally, for example, the present technique can be implemented as a configuration of a part of a device such as a processor (e.g., a video processor) of a system Large Scale Integration (LSI) circuit, a module (e.g., a video module) using a plurality of processors or the like, a unit (e.g., a video unit) using a plurality of modules or the like, or a set (e.g., a video set) with other functions added to the unit.

For example, the present technique can also be applied in a network system constituted by a plurality of devices. The present technique may be implemented as, for example, cloud computing for processing shared among a plurality of devices over a network. For example, the present technique may be implemented in a cloud service that provides services pertaining to images (moving images) to any terminals such as a computer, an Audio Visual (AV) device, a mobile information processing terminal, and an Internet-of-Things (IoT) device or the like.

Note that herein, "system" means a set of a plurality of constituent elements (devices, modules (components), or the like), and it does not matter whether all the constituent elements are provided in the same housing. Therefore, a plurality of devices contained in separate housings and connected over a network, and one device in which a plurality of modules are contained in one housing, are both "systems".

<Other>

Note that herein, the term "associate" means, for example, to make one piece of data usable (linkable) for another piece of data when processing the other piece of data. In other words, data associated with each other may be grouped together as a single piece of data, or may be separate pieces of data. For example, information associated with certain data may be transmitted over a different transmission path than that data. Additionally, for example, information associated with certain data may be recorded in a different recording medium (or in a different recording area of the same recording medium) than that data. Note that this "association" may be for part of the data instead of the entirety of the data. For example, dynamic 3D data and information corresponding to the dynamic 3D data may be associated with a plurality of frames, one frame, or any unit such as a part within the frame.

As used herein, a term such as "combining", "multiplexing", "adding", "integrating", "including", "storing", "pushing", "entering", or "inserting" means that a plurality of items are collected as one, for example, encoded data and metadata are collected as one piece of data, and means one method of the above-described "associating".

Additionally, the embodiments of the present technique are not limited to the above-described embodiments, and various modifications can be made without departing from the essential spirit of the present technique.

For example, configurations described as one device (or one processing unit) may be divided to be configured as a plurality of devices (or processing units). Conversely, configurations described as a plurality of devices (or processing units) in the foregoing may be collectively configured as one device (or one processing unit). Configurations other than those described above may of course be added to the configuration of each device (or each processing unit). Furthermore, part of the configuration of one device (or one processing unit) may be included in the configuration of another device (or another processing unit) as long as the configuration or operation of the entire system is substantially the same.

Additionally, for example, the program described above may be executed on any device. In this case, the device may have necessary functions (function blocks and the like) and may be capable of obtaining necessary information.

Additionally, for example, each step of a single flowchart may be executed by a single device, or may be executed cooperatively by a plurality of devices. Furthermore, if a single step includes a plurality of processes, the plurality of processes may be executed by a single device or shared by a plurality of devices. In other words, the plurality of kinds of processing included in the single step may be executed as processing for a plurality of steps. Conversely, processing described as a plurality of steps may be collectively executed as a single step.

Additionally, for example, the program executed by the computer may be such that the processing steps describing the program are executed in chronological order according to the order described herein or are executed in parallel or individually at a necessary timing such as in response to a call. That is, as long as no contradiction arises, the processing steps may be executed in an order different from the order described above. Furthermore, the processing steps describing the program may be executed in parallel with the processing of another program or may be executed in combination with the processing of the other program.

Additionally, for example, the multiple techniques related to the present technique can be implemented independently on their own, as long as no contradictions arise. Of course, any number of modes of the present technique may be used in combination. For example, part or all of the present technique described in any of the embodiments may be implemented in combination with part or all of the present technique described in the other embodiments. Furthermore, part or all of any of the above-described modes of the present technique may be implemented in combination with other techniques not described above.

The present technique can also be configured as follows.

(1) An information processing device including:

a first 3D modeling processing unit that, on the basis of a first captured image generated by first imaging of a 3D object, generates first three-dimensional shape information expressing a three-dimensional shape of the 3D object;
a scoring processing unit that, using the first three-dimensional shape information, evaluates an accuracy of second three-dimensional shape information that can be generated using second captured images generated from second imaging performed thus far, and generates a scoring result; and
an imaging control unit that, on the basis of the scoring result, controls the second imaging of the 3D object.

(2) The information processing device according to (1),
wherein the first three-dimensional shape information has a lower information amount and a lower accuracy than the second three-dimensional shape information.

(3) The information processing device according to (1) or (2),
wherein the first 3D modeling processing unit includes:

an attitude information generating unit that, on the basis of the first captured image and an acceleration and an angular velocity of an imaging unit that performs the first imaging, generates attitude information indicating a position and an attitude of the imaging unit; and
a three-dimensional shape generating unit that, on the basis of the attitude information and a depth of the 3D object, generates the first three-dimensional shape information.

(4) The information processing device according to (3),
wherein the first three-dimensional shape information includes a mesh indicating a three-dimensional shape of the 3D object by vertices and connections and a texture applied to a surface of the mesh.

(5) The information processing device according to (3) or (4), further including:

a depth detection unit that detects a depth;
the imaging unit; and
an inertia measurement unit that detects the acceleration and the angular velocity.

(6) The information processing device according to any one of (1) to (5),
wherein the scoring processing unit generates the scoring result for each of local areas of the first three-dimensional shape information on the basis of the first three-dimensional shape information and a position and an attitude of the second imaging performed thus far.

(7) The information processing device according to (6),

wherein the first three-dimensional shape information includes a mesh indicating a three-dimensional shape of the 3D object by vertices and connections and a texture applied to a surface of the mesh, and
the scoring processing unit generates the scoring result for each of polygons of the mesh.

(8) The information processing device according to any one of (1) to (7),
wherein the imaging control unit controls the second imaging on the basis of a position and an attitude of an imaging unit that performs the second imaging and the scoring result.

(9) The information processing device according to (8), further including:

a communication unit that communicates with an imaging device including the imaging unit,
wherein the imaging control unit generates imaging control information that controls the second imaging, and
the communication unit supplies the imaging control information to the imaging device.

(10) The information processing device according to (9),

wherein the communication unit obtains imaging timing information supplied from the imaging device and indicating a timing of the second imaging not based on the imaging control information, and
the scoring processing unit generates the scoring result on the basis of a position and an attitude of the imaging device corresponding to the timing of the second imaging indicated by the imaging timing information.

(11) The information processing device according to (9) or (10),

wherein the communication unit obtains camera information supplied from the imaging device and pertaining to the imaging unit, and
the scoring processing unit generates the scoring result on the basis of the camera information.

(12) The information processing device according to (11),
wherein the camera information includes an internal parameter and an external parameter of the imaging unit and angle of view information of the second captured image.

(13) The information processing device according to any one of (9) to (12), further including:

an encoding unit that encodes the second captured image and generates encoded data,
wherein the communication unit obtains the second captured image supplied from the imaging device, and supplies the encoded data of the second captured image generated by the encoding unit to another information processing device.

(14) The information processing device according to any one of (8) to (13), further including:
the imaging unit.

(15) The information processing device according to (14), further including:
a second 3D modeling processing unit that generates the second three-dimensional shape information on the basis of the second captured image generated by the imaging unit.

(16) The information processing device according to (15),
wherein the second 3D modeling processing unit includes:

a corresponding point position deriving unit that derives three-dimensional positions of corresponding points among a plurality of the second captured images; and
a three-dimensional point adding unit that adds a three-dimensional point on the basis of the three-dimensional positions of the corresponding points.

(17) The information processing device according to (15) or (16),
wherein the second three-dimensional shape information includes a mesh indicating a three-dimensional shape of the 3D object by vertices and connections and a texture applied to a surface of the mesh.

(18) The information processing device according to any one of (15) to (17), further including:
an encoding unit that encodes the second three-dimensional shape information.

(19) The information processing device according to any one of (1) to (18), further including:
a guidance information output control unit that, on the basis of the scoring result, generates guidance information for the second imaging of the 3D object.

(20) An information processing method including:

generating, on the basis of a first captured image generated by first imaging of a 3D object, first three-dimensional shape information expressing a three-dimensional shape of the 3D object;
evaluating, using the first three-dimensional shape information, an accuracy of second three-dimensional shape information that can be generated using second captured images generated from second imaging performed thus far, and generating a scoring result; and
controlling, on the basis of the scoring result, the second imaging of the 3D object.

(21) An information processing device including:

an imaging unit that images a 3D object; and
a communication unit that communicates with another information processing device,
wherein the communication unit supplies camera information pertaining to the imaging unit to the other information processing device, and obtains imaging control information generated by the other information processing device on the basis of the camera information, and
the imaging unit images the 3D object on the basis of the imaging control information, and generates a captured image for generating three-dimensional shape information expressing a three-dimensional shape of the 3D object.

(22) The information processing device according to (21),
wherein the camera information includes an internal parameter and an external parameter of the imaging unit and angle of view information of the captured image.

(23) The information processing device according to (21),

wherein the imaging unit images the 3D object not based on the imaging control information, and
the communication unit supplies, to the other information processing device, imaging timing information indicating a timing of the imaging performed not on the basis of the imaging control information.

(24) The information processing device according to (21) or (22),
wherein the communication unit supplies the captured image to the other information processing device.

(25) The information processing device according to any one of (21) to (24), further including:

an encoding unit that encodes the captured image and generates encoded data; and
a storage unit that stores the encoded data of the captured image.

(26) An information processing method including:

supplying camera information pertaining to an imaging unit that images a 3D object to another information processing device, and obtaining imaging control information generated by the other information processing device on the basis of the camera information; and
imaging the 3D object on the basis of the imaging control information, and generating a captured image for generating three-dimensional shape information expressing a three-dimensional shape of the 3D object.

(31) An information processing system including an information processing device and an imaging device,
wherein the information processing device includes:

a first 3D modeling processing unit that, on the basis of a first captured image generated by first imaging of a 3D object, generates first three-dimensional shape information expressing a three-dimensional shape of the 3D object;
a scoring processing unit that, using the first three-dimensional shape information, evaluates an accuracy of second three-dimensional shape information that can be generated using second captured images generated from second imaging performed thus far, and generates a scoring result;
an imaging control unit that, on the basis of a position and an attitude of the imaging device and the scoring result, generates imaging control information that controls the second imaging of the 3D object; and
a first communication unit that supplies the imaging control information to the imaging device, and
the imaging device includes:

a second communication unit that obtains the imaging control information supplied from the information processing device; and
an imaging unit that images the 3D object on the basis of the imaging control information and generates the second captured image.

(41) An information processing device including:

a first 3D modeling processing unit that, on the basis of a first captured image generated by first imaging of a 3D object, generates first three-dimensional shape information expressing a three-dimensional shape of the 3D object;
a scoring processing unit that, using the first three-dimensional shape information, evaluates an accuracy of second three-dimensional shape information that can be generated using second captured images generated from second imaging performed thus far, and generates a scoring result; and
a guidance information output control unit that, on the basis of the scoring result, generates guidance information for the second imaging of the 3D object, and controls output of the guidance information.

(42) The information processing device according to (41),
wherein the guidance information output control unit generates an image indicating the scoring result as the guidance information, and causes the image to be displayed.

(43) The information processing device according to (42),
wherein on the basis of a position and an attitude of an imaging unit that performs the second imaging, the guidance information output control unit generates the image indicating the scoring result within an angle of view of the imaging unit, and causes the image to be displayed.

(44) The information processing device according to (43),
wherein the guidance information output control unit causes a captured image generated by the imaging unit to be displayed superimposed on the image.

(45) The information processing device according to (44),
wherein the guidance information output control unit further causes an overhead image indicating the scoring result of an entirety of the 3D object to be displayed.

(46) The information processing device according to any one of (41) to (45),
wherein the guidance information output control unit generates, as the guidance information, an image indicating an overlapping region where an imaging range overlaps among a plurality of the second captured images, and causes the image to be displayed.

(47) The information processing device according to (46),

wherein on the basis of a position and an attitude of an imaging unit that performs the second imaging, the guidance information output control unit generates the image indicating the overlapping region between a current angle of view of the imaging unit and an imaging range of the second captured images obtained thus far, and causes the image to be displayed.

(48) The information processing device according to (47),

wherein the guidance information output control unit causes a captured image generated by the imaging unit to be displayed superimposed on the image.

(49) The information processing device according to (48),

wherein the guidance information output control unit further causes an image indicating a rate of overlap, which indicates a percentage of the angle of view occupied by the overlapping region, to be displayed.

(50) The information processing device according to any one of (41) to (49),

wherein the guidance information output control unit generates, as the guidance information, an imaging assistance image for assisting the second imaging, and causes the imaging assistance image to be displayed.

(51) The information processing device according to (50),

wherein on the basis of the scoring result, the guidance information output control unit derives a recommended imaging position and attitude that are a recommended position and attitude for the second imaging, and causes recommended imaging position and attitude guidance indicating the recommended imaging position and attitude to be displayed as the guidance information.

(52) The information processing device according to (51),

wherein when a position and an attitude of an imaging unit that performs the second imaging are the same as the recommended imaging position and attitude, the guidance information output control unit causes an image indicating that a current position and attitude of the imaging unit are the recommended imaging position and attitude to be displayed as the recommended imaging position and attitude guidance.

(53) The information processing device according to (51) or (52),

wherein the guidance information output control unit causes an image indicating a relative position and a relative attitude of the recommended imaging position and attitude, based on an imaging unit that performs the second imaging, to be displayed as the recommended imaging position and attitude guidance.

(54) The information processing device according to any one of (51) to (53),

wherein the guidance information output control unit causes a captured image generated by an imaging unit that performs the second imaging to be displayed superimposed on the recommended imaging position and attitude guidance.

(55) The information processing device according to any one of (41) to (54),

wherein the first three-dimensional shape information has a lower information amount and a lower accuracy than the second three-dimensional shape information.

(56) The information processing device according to any one of (41) to (55), wherein the first 3D modeling processing unit includes:

an attitude information generating unit that, on the basis of the first captured image and an acceleration and an angular velocity of an imaging unit that performs the first imaging, generates attitude information indicating a position and an attitude of the imaging unit; and

a three-dimensional shape generating unit that, on the basis of the attitude information and a depth of the 3D object, generates the first three-dimensional shape information.

(57) The information processing device according to (56),

wherein the first three-dimensional shape information includes a mesh indicating a three-dimensional shape of the 3D object by vertices and connections and a texture applied to a surface of the mesh.

(58) The information processing device according to any one of (41) to (57), wherein the scoring processing unit generates the scoring result for each of local areas of the first three-dimensional shape information on the basis of the first three-dimensional shape information and a position and an attitude of the second imaging performed thus far.

(59) The information processing device according to (58),

wherein the first three-dimensional shape information includes a mesh indicating a three-dimensional shape of the 3D object by vertices and connections and a texture applied to a surface of the mesh, and

the scoring processing unit generates the scoring result for each of polygons of the mesh.

(60) An information processing method including:

generating, on the basis of a first captured image generated by first imaging of a 3D object, first three-dimensional shape information expressing a three-dimensional shape of the 3D object;

evaluating, using the first three-dimensional shape information, an accuracy of second three-dimensional shape information that can be generated using second captured images generated from second imaging performed thus far, and generating a scoring result; and generating, on the basis of the scoring result, guidance information for the second imaging of the 3D object, and controlling output of the guidance information.

[Reference Signs List]

101 First 3D data generation processing
102 Scoring processing
103 Second 3D modeling imaging control processing
104 Second 3D data generation processing
105 Second 3D modeling imaging guidance output processing
300 Imaging device
301 First 3D data generation unit
302 Scoring processing unit
303 Imaging control unit
304 Second 3D data generation unit
305 Encoding unit
306 Storage unit
307 Communication unit
308 Imaging guidance output control unit
309 Output unit
311 Depth sensor
312 Imaging unit
313 IMU
314 Real-time 3D modeling processing unit
321 SLAM
322 TSDF update unit
323 Mesh generation unit
331 Operation unit
332 Imaging unit
333 Image processing unit
334 Photogrammetry processing unit
341 SfM
342 MVS
400 Information processing system
401 Imaging device
402 Imaging communication device
403 Server
404 Network
410 Terminal device
421 Communication unit
431 Communication unit
432 Encoding unit
433 Storage unit
441 Communication unit
442 Decoding unit
444 Encoding unit

445 Storage unit
900 Computer

**Claims**

1. An information processing device comprising:

   a first 3D modeling processing unit that, on the basis of a first captured image generated by first imaging of a 3D object, generates first three-dimensional shape information expressing a three-dimensional shape of the 3D object;
   a scoring processing unit that, using the first three-dimensional shape information, evaluates an accuracy of second three-dimensional shape information that can be generated using second captured images generated from second imaging performed thus far, and generates a scoring result; and
   a guidance information output control unit that, on the basis of the scoring result, generates guidance information for the second imaging of the 3D object, and controls output of the guidance information.

2. The information processing device according to claim 1,
   wherein the guidance information output control unit generates an image indicating the scoring result as the guidance information, and causes the image to be displayed.

3. The information processing device according to claim 2,
   wherein on the basis of a position and an attitude of an imaging unit that performs the second imaging, the guidance information output control unit generates the image indicating the scoring result within an angle of view of the imaging unit, and causes the image to be displayed.

4. The information processing device according to claim 3,
   wherein the guidance information output control unit causes a captured image generated by the imaging unit to be displayed superimposed on the image.

5. The information processing device according to claim 4,
   wherein the guidance information output control unit further causes an overhead image indicating the scoring result of an entirety of the 3D object to be displayed.

6. The information processing device according to claim 1,
   wherein the guidance information output control unit generates, as the guidance information, an image indicating an overlapping region where an imaging range overlaps among a plurality of the second captured images, and causes the image to be displayed.

7. The information processing device according to claim 6,
wherein on the basis of a position and an attitude of an imaging unit that performs the second imaging, the guidance information output control unit generates the image indicating the overlapping region between a current angle of view of the imaging unit and an imaging range of the second captured images obtained thus far, and causes the image to be displayed.

8. The information processing device according to claim 7,
wherein the guidance information output control unit causes a captured image generated by the imaging unit to be displayed superimposed on the image.

9. The information processing device according to claim 8,
wherein the guidance information output control unit further causes an image indicating a rate of overlap, which indicates a percentage of the angle of view occupied by the overlapping region, to be displayed.

10. The information processing device according to claim 1,
wherein the guidance information output control unit generates, as the guidance information, an imaging assistance image for assisting the second imaging, and causes the imaging assistance image to be displayed.

11. The information processing device according to claim 10,
wherein on the basis of the scoring result, the guidance information output control unit derives a recommended imaging position and attitude that are a recommended position and attitude for the second imaging, and causes recommended imaging position and attitude guidance indicating the recommended imaging position and attitude to be displayed as the guidance information.

12. The information processing device according to claim 11,
wherein when a position and an attitude of an imaging unit that performs the second imaging are the same as the recommended imaging position and attitude, the guidance information output control unit causes an image indicating that a current position and attitude of the imaging unit are the recommended imaging position and attitude to be displayed as the recommended imaging position and attitude guidance.

13. The information processing device according to claim 11,
wherein the guidance information output control unit causes an image indicating a relative position and a relative attitude of the recommended imaging position and attitude, based on an imaging unit that performs the second imaging, to be displayed as the recommended imaging position and attitude guidance.

14. The information processing device according to claim 11,
wherein the guidance information output control unit causes a captured image generated by an imaging unit that performs the second imaging to be displayed superimposed on the recommended imaging position and attitude guidance.

15. The information processing device according to claim 1,
wherein the first three-dimensional shape information has a lower information amount and a lower accuracy than the second three-dimensional shape information.

16. The information processing device according to claim 1,
wherein the first 3D modeling processing unit includes:

an attitude information generating unit that, on the basis of the first captured image and an acceleration and an angular velocity of an imaging unit that performs the first imaging, generates attitude information indicating a position and an attitude of the imaging unit; and
a three-dimensional shape generating unit that, on the basis of the attitude information and a depth of the 3D object, generates the first three-dimensional shape information.

17. The information processing device according to claim 16,
wherein the first three-dimensional shape information includes a mesh indicating a three-dimensional shape of the 3D object by vertices and connections and a texture applied to a surface of the mesh.

18. The information processing device according to claim 1,
wherein the scoring processing unit generates the scoring result for each of local areas of the first three-dimensional shape information on the basis of the first three-dimensional shape information and a position and an attitude of the second imaging performed thus far.

**19.** The information processing device according to claim 18,

wherein the first three-dimensional shape information includes a mesh indicating a three-dimensional shape of the 3D object by vertices and connections and a texture applied to a surface of the mesh, and
the scoring processing unit generates the scoring result for each of polygons of the mesh.

**20.** An information processing method comprising:

generating, on the basis of a first captured image generated by first imaging of a 3D object, first three-dimensional shape information expressing a three-dimensional shape of the 3D object;
evaluating, using the first three-dimensional shape information, an accuracy of second three-dimensional shape information that can be generated using second captured images generated from second imaging performed thus far, and generating a scoring result; and
generating, on the basis of the scoring result, guidance information for the second imaging of the 3D object, and controlling output of the guidance information.

Fig. 1

Fig. 2

Fig. 3

| | REAL-TIME 3D MODELING | PHOTOGRAMMETRY |
|---|---|---|
| METHOD | SELF-POSITION ESTIMATION + TSDF | SfM (INCLUDING SELF-POSITION ESTIMATION) + MVS |
| DATA | DEPTH + ATTITUDE DATA (+ IMAGE) | IMAGE DATA ONLY |
| PROCESSING TIME | REAL TIME (> 30 fps) | LONG (SEVERAL MINUTES TO SEVERAL TENS OF HOURS) |
| REQUIRED OPERATIONS | MOBILE AP LEVEL | HIGH-END CPU + GPU LEVEL |
| MODEL DETAIL | LOW (DEPENDING ON SENSOR/SELF-POSITION ESTIMATION ACCURACY) | HIGH TO ULTRA-HIGH (DEPENDING ON INPUT IMAGE SIZE/NUMBER/SHOOTING METHOD) |
| INTERNAL EXPRESSION OF THREE-DIMENSIONAL DATA | Voxel-BASED | POINT CLOUD-BASED |
| SUBJECT SIZE/RESOLUTION RESTRICTIONS | YES/SENSOR-DEPENDENT (PHYSICAL ABSOLUTE AMOUNT) | NO (RELATIVE DUE TO BEING IMAGE-BASED) |
| ABSOLUTE MODEL ACCURACY | LOW (DEPENDING ON SENSOR/SELF-POSITION ESTIMATION ACCURACY) | HIGH (OPTIMIZED THROUGH BUNDLE ADJUSTMENT) |
| SCALE | UNIQUE (ABSOLUTE SIZE IS KNOWN) | INDEFINITE (SIZE UNKNOWN) |

Fig. 4

EP 4 604 061 A1

SCORING RESULT OUTPUT
OVERLAP INFORMATION OUTPUT
IMAGING ASSISTANCE
INFORMATION OUTPUT
CAPTURED IMAGE DISPLAY

101 FIRST 3D DATA 102

FIRST 3D DATA GENERATION PROCESSING

SCORING PROCESSING

SCORING RESULT

SECOND 3D MODELING IMAGING GUIDANCE OUTPUT PROCESSING
105

CAPTURED IMAGE

103
SECOND 3D MODELING IMAGING CONTROL PROCESSING

IMAGING CONTROL INFORMATION

104
SECOND 3D DATA GENERATION PROCESSING

SECOND 3D DATA

IMAGING VIEWPOINT INFORMATION

POSITION AND ATTITUDE INFORMATION

IMAGING TIMING INFORMATION

MANUAL IMAGING

CAMERA INFORMATION

46

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

260

261

260

261

IDEAL POSITION

CURRENT POSITION

Fig. 22

EP 4 604 061 A1

FAR    JUST RIGHT    NEAR

CURRENT POSITION

IDEAL POSITION

260    261

Fig. 23

Fig. 24

Fig. 25

Fig. 26

Fig. 27

```
              ( 3D MODELING PROCESSING START )
                            │
                            ▼
   ┌─────────────────────────────────────────────┐ S301
   │  OBTAIN DEPTH, CAPTURED IMAGE, INERTIA       │
   │             INFORMATION                       │
   └─────────────────────────────────────────────┘
                            │
                            ▼
   ┌─────────────────────────────────────────────┐ S302
   │  │      PERFORM REAL-TIME 3D MODELING        │
   └─────────────────────────────────────────────┘
                            │
        ┌───────────────────┤
        │                   ▼
        │  ┌──────────────────────────────────────────┐ S303
        │  │  SCORE FIRST 3D DATA ON BASIS OF IMAGING  │
        │  │         PERFORMED THUS FAR                │
        │  └──────────────────────────────────────────┘
        │                   │
        │                   ▼
        │  ┌──────────────────────────────────────────┐ S304
        │  │  GENERATE AND OUTPUT IMAGING GUIDANCE ON  │
        │  │    BASIS OF SCORING RESULT, ATTITUDE      │
        │  │            INFORMATION, ETC.              │
        │  └──────────────────────────────────────────┘
        │                   │
        │                   ▼
        │  ┌──────────────────────────────────────────┐ S305
        │  │  CONTROL IMAGING FOR PHOTOGRAMMETRY ON    │
        │  │    BASIS OF SCORING RESULT, ATTITUDE      │
        │  │            INFORMATION, ETC.              │
        │  └──────────────────────────────────────────┘
        │                   │
        │                   ▼
        │  ┌──────────────────────────────────────────┐ S306
        │  │       IMAGING ACCORDING TO CONTROL        │
        │  └──────────────────────────────────────────┘
        │                   │
        │                   ▼
        │  ┌──────────────────────────────────────────┐ S307
        │  │ OBTAIN CAMERA INFORMATION, IMAGING TIMING │
        │  │            INFORMATION, ETC.              │
        │  └──────────────────────────────────────────┘
        │                   │
        │  NO               ▼                        S308
        └────< END IMAGING FOR PHOTOGRAMMETRY? >
                            │ YES
                            ▼
   ┌─────────────────────────────────────────────┐ S309
   │  │       PERFORM PHOTOGRAMMETRY              │
   └─────────────────────────────────────────────┘
                            │
                            ▼
   ┌─────────────────────────────────────────────┐ S310
   │                 ENCODE                        │
   └─────────────────────────────────────────────┘
                            │
                            ▼
   ┌─────────────────────────────────────────────┐ S311
   │             STORE AND SEND                    │
   └─────────────────────────────────────────────┘
                            │
                            ▼
                      (    END    )
```

Fig. 28

```
┌──────────────────────────────────────────────┐
(  REAL-TIME 3D MODELING PROCESSING START  )
└──────────────────────────────────────────────┘
                      │
                      ▼
┌────────────────────────────────────────┐ S331
│  DERIVE THREE-DIMENSIONAL ATTITUDE ON   │
│   BASIS OF CAPTURED IMAGE AND INERTIA   │
│              INFORMATION                │
└────────────────────────────────────────┘
                      │
                      ▼
┌────────────────────────────────────────┐ S332
│  UPDATE TSDF ON BASIS OF CAPTURED IMAGE,│
│    ATTITUDE INFORMATION, AND DEPTH      │
└────────────────────────────────────────┘
                      │
                      ▼
┌────────────────────────────────────────┐ S333
│    GENERATE FIRST 3D DATA ON BASIS OF   │
│              UPDATED TSDF               │
└────────────────────────────────────────┘
                      │
                      ▼
            (  RETURN  )
```

Fig. 29

```
        ┌─────────────────────────────────────┐
        │   PHOTOGRAMMETRY PROCESSING         │
        │            START                    │
        └─────────────────────────────────────┘
                         │
                         ▼
    ┌───────────────────────────────────────────┐
    │  DETECT CORRESPONDING POINTS AMONG         │ S351
    │         CAPTURED IMAGES                    │
    └───────────────────────────────────────────┘
                         │
                         ▼
    ┌───────────────────────────────────────────┐
    │  DERIVE THREE-DIMENSIONAL ATTITUDE OF      │ S352
    │  CAMERA THROUGH EPIPOLAR RESTRICTION       │
    └───────────────────────────────────────────┘
                         │
                         ▼
    ┌───────────────────────────────────────────┐
    │ DERIVE THREE-DIMENSIONAL POINT THROUGH     │ S353
    │            TRIANGULATION                   │
    └───────────────────────────────────────────┘
                         │
                         ▼
    ┌───────────────────────────────────────────┐
    │  OPTIMIZE ENTIRETY THROUGH BUNDLE          │ S354
    │            ADJUSTMENT                      │
    └───────────────────────────────────────────┘
                         │
                         ▼
    ┌───────────────────────────────────────────┐
    │   DERIVE THREE-DIMENSIONAL POINT           │ S355
    │ THROUGH DENSE CORRESPONDING POINT          │
    │ SEARCH, GENERATE SECOND 3D DATA            │
    └───────────────────────────────────────────┘
                         │
                         ▼
               ┌─────────────────┐
               │     RETURN       │
               └─────────────────┘
```

Fig. 30

EP 4 604 061 A1

Fig. 31

Fig. 32

Fig. 33

SECOND 3D DATA

COMMUNICATION UNIT
441

DECODING UNIT
442

SfM
341

MVS
342

334

ENCODING UNIT
444

STORAGE UNIT
445

403

Fig. 34

401 START

S401 OBTAIN DEPTH, CAPTURED IMAGE, SENSOR INFORMATION

S402 PERFORM REAL-TIME 3D MODELING

④

S403 SCORE FIRST 3D DATA ON BASIS OF IMAGING PERFORMED THUS FAR

S404 GENERATE AND OUTPUT IMAGING GUIDANCE ON BASIS OF SCORING RESULT, ATTITUDE INFORMATION, ETC.

S405 CONTROL IMAGING FOR PHOTOGRAMMETRY ON BASIS OF SCORING RESULT, ATTITUDE INFORMATION, ETC.

S406

S407

①

402 START

S411

S412 IMAGING ACCORDING TO CONTROL

S413 SUPPLY CAPTURED IMAGE

S414 SUPPLY CAMERA INFORMATION, IMAGING TIMING INFORMATION, ETC.

②

403 START

③

Fig. 35

S441

ENCODE AND STORE

S451

PERFORM
PHOTOGRAMMETRY S452

ENCODE S453

STORE AND SEND S454

END

END

S431

SUPPLY CAPTURED IMAGE

END IMAGING FOR
PHOTOGRAMMETRY? S432

END

Fig. 36

Fig. 37

Fig. 38

Fig. 39

Flow ①:
- S531 IMAGING ACCORDING TO CONTROL
- S532 SUPPLY CAPTURED IMAGE
- S533 SUPPLY CAPTURED IMAGE
- S534 END IMAGING FOR PHOTOGRAMMETRY?
- END
- ④

Flow ②:
- S541 IMAGING ACCORDING TO CONTROL
- S542 SUPPLY CAPTURED IMAGE
- S543 SUPPLY CAMERA INFORMATION, IMAGING TIMING INFORMATION, ETC.
- S544 ENCODE AND STORE
- END

Flow ③:
- S551
- S552 PERFORM PHOTOGRAMMETRY
- S553 ENCODE
- S554 STORE AND SEND
- END

Fig. 40

EP 4 604 061 A1

## INTERNATIONAL SEARCH REPORT

| International application No. |
|---|
| **PCT/JP2023/034723** |

| A. | CLASSIFICATION OF SUBJECT MATTER |
|---|---|

*G06T 7/55*(2017.01)i; *G06T 17/10*(2006.01)i
FI: G06T7/55; G06T17/10

According to International Patent Classification (IPC) or to both national classification and IPC

| B. | FIELDS SEARCHED |
|---|---|

Minimum documentation searched (classification system followed by classification symbols)

G06T7/55; G06T17/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2020-166498 A (TOPPAN PRINTING CO., LTD.) 08 October 2020 (2020-10-08) paragraphs [0070], [0071] | 1-20 |
| A | JP 2022-15115 A (CANON INC.) 21 January 2022 (2022-01-21) claims 1-11 | 1-20 |
| A | JP 2019-92007 A (CANON INC.) 13 June 2019 (2019-06-13) claims 1-17 | 1-20 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 November 2023** | **14 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/034723**

| Patent document cited in search report | | | Publication date (day/month/year) | Patent family member(s) | | | Publication date (day/month/year) |
|---|---|---|---|---|---|---|---|
| JP | 2020-166498 | A | 08 October 2020 | (Family: none) | | | |
| JP | 2022-15115 | A | 21 January 2022 | US | 2022/0012932 | A1 | |
| | | | | claims 1-11 | | | |
| JP | 2019-92007 | A | 13 June 2019 | US | 2020/0265634 | A1 | |
| | | | | claims 1-17 | | | |
| | | | | WO | 2019/093457 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018063693 A